(19) Europäisches Patentamt
European Patent Office
Office européen des brevets

(11) **EP 4 287 649 A1**

(12) **EUROPEAN PATENT APPLICATION**
published in accordance with Art. 153(4) EPC

(43) Date of publication:
**06.12.2023 Bulletin 2023/49**

(21) Application number: **23733196.2**

(22) Date of filing: **18.04.2023**

(51) International Patent Classification (IPC):
**H04R 3/04** (2006.01)  **H04R 5/04** (2006.01)
**H04R 1/10** (2006.01)  **H04W 4/80** (2018.01)

(86) International application number:
**PCT/KR2023/005246**

(87) International publication number:
**WO 2023/204578 (26.10.2023 Gazette 2023/43)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **18.04.2022  KR 20220047727
29.04.2022  KR 20220053796
14.02.2023  PCT/KR2023/002151
14.04.2023  KR 20230049677**

(71) Applicant: **Samsung Electronics Co., Ltd.
Suwon-si, Gyeonggi-do 16677 (KR)**

(72) Inventors:
• **CHEONG, Gupil
Suwon-si, Gyeonggi-do 16677 (KR)**

• **KANG, Doosuk
Suwon-si, Gyeonggi-do 16677 (KR)**
• **SEO, Hocheoi
Suwon-si, Gyeonggi-do 16677 (KR)**
• **YOO, Hyungseoung
Suwon-si, Gyeonggi-do 16677 (KR)**
• **CHO, Siejoon
Suwon-si, Gyeonggi-do 16677 (KR)**
• **JIN, Juyeon
Suwon-si, Gyeonggi-do 16677 (KR)**
• **HAN, Euibum
Suwon-si, Gyeonggi-do 16677 (KR)**

(74) Representative: **Gulde & Partner
Patent- und Rechtsanwaltskanzlei mbB
Wallstraße 58/59
10179 Berlin (DE)**

(54) **ELECTRONIC DEVICE FOR PROVIDING AUDIO SERVICE, AND OPERATION METHOD THEREFOR**

(57)    An electronic device providing an audio service comprises a communication circuit and at least one processor. The at least one processor is configured to determine a first resource available for an audio service in at least one audio communication link, determine a second resource of a first priority and a third resource of a second priority lower than the first priority in the determined first resource, and provide the audio service to at least one external electronic device through the audio communication link using at least one of the second resource or the third resource. If a first communication task having a third priority higher than the second priority and using a frequency band corresponding to a frequency band of the audio communication link occurs while providing the audio service, the at least one processor may perform the first communication task using the third resource.

```
                    Start

         Calculate first resource          1605
         available for CIS link

         Determine second resource of first
         priority and third resource of      1610
         second priority in first resource

         Allocate second resource to first CIS task
         having first priority and third resource to   1615
         second CIS task having second priority

         Provide audio service using second   1620
         resource and/or third resource

                     End
```

FIG. 16A

**Description**

**[Technical Field]**

Various embodiments relate to an electronic device for providing an audio service and a method for operating the same.

**[Background Art]**

Bluetooth communication technology may suggest a short-range wireless communication technology that enables electronic devices to be connected to each other for exchanging data or information. Bluetooth communication technology may have Bluetooth legacy (or classic) communication technology or Bluetooth low energy (BLE) communication technology and have various kinds of topology, such as piconet or scatternet.

Recently in wide use are electronic devices adopting Bluetooth communication technology. In particular, a pair of earbuds that may be respectively worn on both ears of the user are widely used as an ear-wearable device. An ear-wearable device may provide various functions. For example, an ear-wearable device may include a microphone to identify the user's voice, thereby transmitting data for the user's voice to an electronic device (e.g., a smartphone). Further, the ear-wearable device may include a speaker to output the audio data received from an electronic device (e.g., a smartphone) to through the speaker.

The ear-wearable device may include a primary earbud (e.g., the right earbud) and a secondary earbud (e.g., the left earbud) that may be connected to an electronic device (e.g., a smart phone). The primary earbud may transmit voice data to the electronic device through connection with the electronic device, and the electronic device may transmit audio data (or audio content) to the primary earbud. The primary earbud may transfer audio data (or audio content) received from the electronic device through wireless communication to the secondary earbud and may output the audio data through the speaker. The secondary earbud may be synchronized with the primary earbud, outputting the audio data transferred from the primary earbud or electronic device through the speaker.

The primary earbud and the secondary earbud (hereinafter referred to as 'earbuds') may be connected to the electronic device based on Bluetooth communication to perform the above operations. To that end, the earbuds may perform pairing including an inquiry and/or an inquiry scan, or a BLE advertising and/or BLE scan.

The inquiry may refer to an initial operation of a connection in which an inquiry packet is repeatedly transmitted until a response is received from a peer electronic device or a time-out occurs. The inquiry scan may refer to an operation for monitoring reception of an inquiry packet through a designated physical channel. Upon receiving the inquiry packet through the inquiry scan , the earbuds may transmit an inquiry response packet including its own information.

The BLE advertising may mean an operation for periodically broadcasting an advertising packet through an advertising physical channel, and the BLE scan may mean an operation for monitoring reception of the advertising packet.

**[Disclosure]**

**[Technical Problem]**

The present invention is defined by the appended claim set. The limitations described below apply to the following description. All disclosure departing from the scope of the claims are intended solely for description and comparison purposes.

Various embodiments provide an electronic device for providing an audio service and a method for operating the same.

Embodiments of the disclosure may provide an electronic device for efficiently allocating resources of a communication link for an audio service and resources for other operations and a method for operating the same.

Embodiments of the disclosure may provide a technique capable of flexibly using resources of a source electronic device considering the priorities of other operations that may be performed simultaneously with an audio service and maximally allocating resources of communication links for the audio service.

According to an embodiment, an electronic device comprises a communication circuit and at least one processor. The at least one processor may be configured to determine a first resource available for an audio service in at least one audio communication link. The at least one processor may be configured to determine a second resource of a first priority and a third resource of a second priority lower than the first priority in the first resource. The at least one processor may be configured to provide the audio service to at least one external electronic device through the at least one audio communication link using at least one of the second resource or the third resource. The at least one processor may be configured to detect that a first communication task using a frequency band corresponding to a frequency band of the at least one audio communication link is scheduled while providing the audio service, The at least one processor may be configured to perform the first communication task using the third resource, through the communication circuit, based on identifying that the third priority designated for the first communication task is higher than the second priority.

According to an embodiment, a method for operating an electronic device 101 may comprise s determining a first resource available for an audio service in an audio communication link. The method may comprise determining a second resource of a first priority and a third resource of a second priority lower than the first priority in the first resource. The method may comprise providing an audio service through the communication circuit to at least one external electronic device through the at least one audio communication link using at least one of the second resource or the third resource. The method may comprise detecting that a first communication task using the same frequency band as the at least one audio communication link is scheduled while providing the audio service. The method may comprise performing the first communication task using the third resource, based on identifying that the third priority designated for the first communication task is higher than the second priority.

A non-transitory computer readable storage medium storing one or more programs, the one or more programs comprising instructions configured to, when executed by at least one processor of an electronic device, cause the electronic device to: determine a first resource available for an audio service in at least one audio communication link, determine a second resource of a first priority and a third resource of a second priority lower than the first priority in the first resource, and provide the audio service to at least one external electronic device through the at least one audio communication link using at least one of the second resource or the third resource.

**[Description of the Drawings]**

FIG. 1 is a view illustrating an electronic device in a network environment according to various embodiments;
FIG. 2 is a view illustrating an example of connection between electronic devices based on a Bluetooth scheme according to an embodiment;
FIG. 3 is a view illustrating a configuration of an electronic device supporting Bluetooth communication according to an embodiment;
FIG. 4 is a view illustrating a Bluetooth LE (BLE) scan operation according to an embodiment;
FIG. 5 is a view illustrating an example of connection between Bluetooth devices according to an embodiment;
FIG. 6 is a view illustrating an example of BLE communication connection according to an embodiment;
FIG. 7 is a signal flowchart illustrating an example of an operation procedure for establishing a CIS link according to an embodiment;
FIG. 8 is a view illustrating an example of CIS parameters set for CIS communication according to an embodiment;
FIG. 9 is a timing diagram illustrating an example of CIS communication according to an embodiment;
FIG. 10 is a view illustrating an example of a CIS event according to an embodiment;
FIG. 11 is a view illustrating an example of CIS transmission according to an embodiment;
FIG. 12 is a view illustrating another example of CIS transmission according to an embodiment;
FIG. 13 is a view illustrating CISs in a sequential arrangement according to an embodiment;
FIG. 14 is a view illustrating CISs in an interleaved arrangement according to an embodiment;
FIG. 15 is a view illustrating a CIG event layout including three CISs according to an embodiment;
FIGS. 16A and 16B are flowcharts illustrating examples of a procedure for providing an audio service through an audio communication link according to an embodiment;
FIGS. 17 and 18 are timing views illustrating examples of allocating time periods by an electronic device according to an embodiment;
FIG. 19 is a flowchart illustrating a procedure for a 2-channel audio service according to an embodiment;
FIGS. 20A, 20B, and 20C illustrate various examples of a user interface displayed on an electronic device according to an embodiment;
FIG. 21 is a view illustrating a procedure for generating an LE communication link by an electronic device according to an embodiment;
FIG. 22 is a view illustrating a procedure for communicating through a plurality of LE communication links by an electronic device according to an embodiment;
FIG. 23 is a view illustrating an operation of determining a resource for a media service according to an embodiment;
FIG. 24 is a view illustrating an operation of determining a resource for an conversational service according to an embodiment;
FIG. 25 is a view illustrating an example of resource allocation according to an embodiment;
FIG. 26 is a view illustrating an example of resource division for CIS communication according to an embodiment;
FIG. 27 is a view illustrating another example of resource division for CIS communication according to an embodiment;
FIG. 28 is a view illustrating an example of resource division according to a time ratio according to an embodiment;

FIG. 29 is a view illustrating an example of resource division applied to a hybrid arrangement according to an embodiment;

FIG. 30 is a view illustrating another example of resource division applied to a hybrid arrangement according to an embodiment;

FIG. 31 is a view illustrating an operation of providing an audio service through CIS links according to an embodiment;

FIG. 32 is a view illustrating an operation of opening a CIS link according to an embodiment;

FIG. 33 is a view illustrating an operation of operating CIS communication considering a wireless environment or scheduling context according to an embodiment;

FIG. 34 is a view illustrating an operation of performing a CIS task with priority according to an embodiment;

FIG. 35 is a view illustrating an operation of performing a BLE task with priority according to an embodiment;

FIG. 36 is a view illustrating an operation of changing priority for CIS communication according to an embodiment;

FIG. 37 is a signal flowchart illustrating a procedure for synchronizing with a broadcast isochronous group (BIG) according to an embodiment;

FIG. 38 is a view illustrating a format of BIG information according to an embodiment;

FIG. 39 is a view illustrating a BIG event for a periodic advertising event according to an embodiment;

FIG. 40 is a view illustrating a BIG event and a BIS event according to an embodiment;

FIG. 41 is a view illustrating resource allocation for BIS communication according to an embodiment;

FIG. 42 is a view illustrating resource division for BIS communication according to an embodiment; and

FIG. 43 is a view illustrating an operation of performing a communication task with a higher priority according to an embodiment.

**[Mode for Invention]**

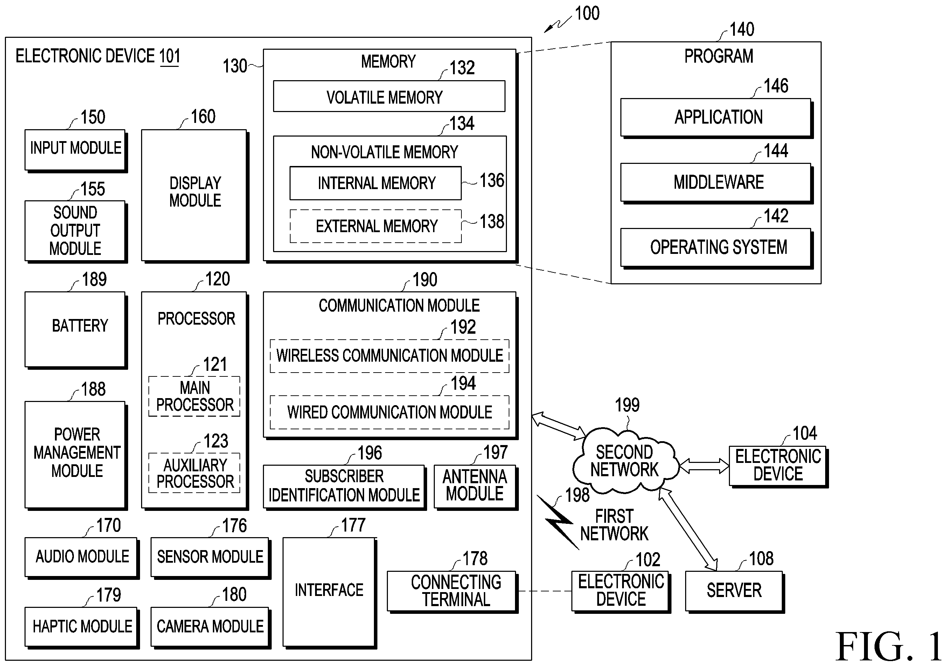

FIG. 1 is a block diagram illustrating an electronic device 101 in a network environment 100 according to various embodiments. Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as BluetoothTM, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (LTL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

Examples of electronic devices according to various embodiments are described below.

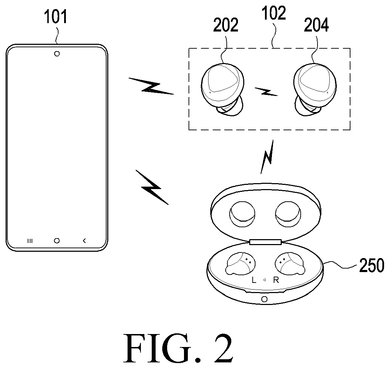

FIG. 2 is a view illustrating an example of connection between electronic devices based on a Bluetooth scheme according to an embodiment.

Referring to FIG. 2, an electronic device 101 may be wirelessly connected to an external electronic device 102 (e.g., an ear-wearable device (ear-wearable device)). In an embodiment, the electronic device 101 may be a smart phone. The external electronic device 102 is a binaural ear-wearable device and may include at least one of a first external electronic device 202 (e.g., a left earbud) and a second external electronic device 204 (e.g., a right earbud).

In an embodiment, the first external electronic device 202 and the second external electronic device 204 are shown as a pair of earbuds, but the first external electronic device 202 and the second external electronic device 204 may include not only earbuds but also devices capable of operating in pair. According to an embodiment, the first external electronic device 202 and the second external electronic device 204 may be implemented to include the same or similar components to each other.

According to an embodiment, the electronic device 101 may establish a connection (e.g., a communication link) with at least one of the first external electronic device 202 and the second external electronic device 204 and transmit and/or receive data to/from each other. For example, the electronic device 101 may establish a communication link with at least one of the first external electronic device 202 and the second external electronic device 204 based on a Wi-Fi scheme or a Bluetooth scheme. However, the scheme in which the electronic device 101 establishes a communication link with the first external electronic device 202 and the second external electronic device 204 is not limited to at least one of a Wi-Fi scheme and/or a Bluetooth scheme.

In an embodiment, the electronic device 101 may establish a communication link with only one of the first external electronic device 202 and the second external electronic device 204 or establish an individual communication link with each of the first external electronic device 202 and the second external electronic device 204.

In an embodiment, when the external electronic device 102 includes the first external electronic device 202 and the second external electronic device 204, the first external electronic device 202 and the second external electronic device 204) may establish a communication link with each other based on at least one of a Wi-Fi scheme and/or a Bluetooth scheme, but the scheme in which the first external electronic device 202 and the second external electronic device 204 establish a communication link is not limited to at least one of a Wi-Fi scheme and/or a Bluetooth scheme.

In an embodiment, any one of the first external electronic device 202 and the second external electronic device 204 may operate as a central (or master, primary, or main) device, and the other may operate as a peripheral (or slave or secondary) device. The electronic device operating as the central device may transmit data to the electronic device operating as the peripheral device. For example, when the first external electronic device 202 and the second external electronic device 204 establish a communication link with each other, any one of the first external electronic device 202 and the second external electronic device 204 may be randomly selected as the central device, and the other may be selected as the peripheral device. In the case of an audio service, the electronic device operating as the central device may be a source electronic device, and the electronic device operating as the peripheral device may be a sink electronic device. As used herein, the term "sink" refers to an electronic device operating as the peripheral device, and is interchangeable with the terms "destination", "receiver", "sub", and/or "slave".

The first external electronic device 202 and the second external electronic device 204 may directly or indirectly communicate with a third external electronic device 250. In an embodiment, the third external electronic device 250 may be an ear buds case device or cradle device for storing and charging the first external electronic device 202 and the second external electronic device 204.

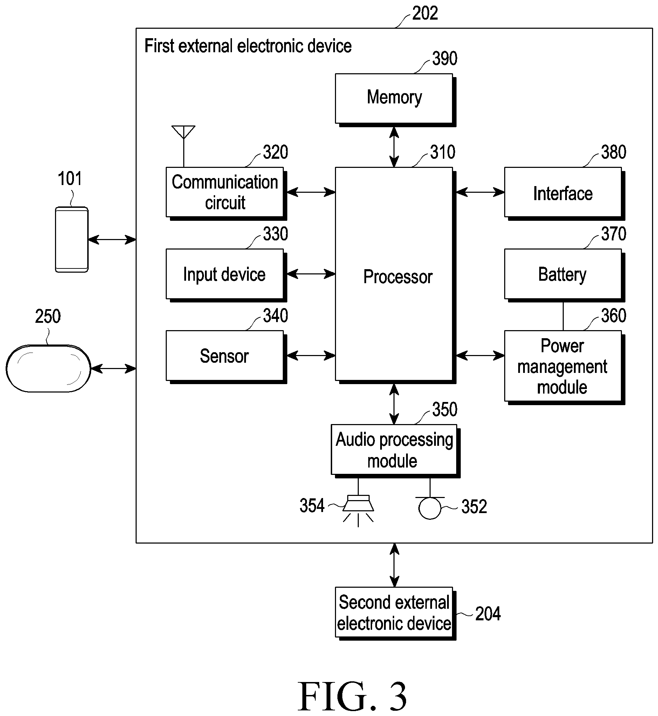

FIG. 3 is a view illustrating a configuration of an electronic device supporting Bluetooth communication according to an embodiment.

Referring to FIG. 3, the electronic device 101 may be wirelessly connected to the external electronic devices 202 and 204. The electronic device 101 may be implemented as, e.g., a smart phone but, without limited to those described and/or shown, may be implemented as various types of devices (e.g., notebook computers including standard laptop computers, ultrabooks, or tab books, laptop computers, tablet computers, or desktop computers). The electronic device 101 may be implemented as shown in FIG. 1 and may thus include at least some of the components (e.g., various modules) shown in FIG. 1, and no duplicate description thereof is thus given below.

The external electronic devices 202 and 204 may be implemented as wireless earbuds but, without limited to those described and/or shown, may be implemented as various types of devices (e.g., a smart watch, a head-mounted display device, or devices for measuring biometric signals (e.g., heartrate patch)) that supports an audio service as described below. According to an embodiment, when the external electronic devices 202 and 204 are wireless earbuds, the external electronic devices 202 and 204 may be a pair of devices (e.g., a left earbud and a right earbud). According to an embodiment, the first external electronic device 202 and the second external electronic device 204 may be implemented to include the same or similar components to each other.

According to an embodiment, the electronic device 101 may establish a communication connection with at least one of the external electronic devices 202 and 204 and transmit and/or receive data to/from each other. For example, the electronic device 101 and the external electronic devices 202 and 204 each may use device-to-device (D2D) communication, such as Wi-Fi direct or Bluetooth, (e.g., using a communication circuit supporting the corresponding communication scheme) to establish a communication connection therebetween but, without limited thereto, may communicate with each other using other various types of communication (e.g., a communication scheme, such as Wi-Fi, using access points (APs), a cellular communication scheme using base stations, or a wired communication scheme).

In an embodiment, the electronic device 101 may establish a communication link with only one (e.g., primary earbud) of the first external electronic device 202 and the second external electronic device 204 or establish a communication link with each of the first external electronic device 202 and the second external electronic device 204.

In an embodiment, the first external electronic device 202 and the second external electronic device 204 may establish a communication connection with each other and transmit and/or receive data (e.g., audio data and/or control data) to/from each other. The communication connection may be established using D2D communication (e.g., using a communication circuit supporting the corresponding communication), such as Wi-Fi direct or Bluetooth, as described above, but is not limited thereto.

In an embodiment, one of the first external electronic device 202 and the second external electronic device 204 may be a primary device (or a master device or a main device), and the other device may be a secondary device (or a slave device or a sub device). The primary device (or the main device) may transmit data to the secondary device. For example, when the first external electronic device 202 and the second external electronic device 204 establish a communication connection with each other, any one of the first external electronic device 202 and the second external electronic device 204 may be randomly selected as the primary device, and the other may be selected as the secondary device. In an embodiment, when the first external electronic device 202 and the second external electronic device 204 establish a communication connection therebetween, the device detected as first worn (e.g., when a value indicating wearing is detected by a wearing detection sensor (e.g., a proximity sensor, a touch sensor, a slope 6-axis sensor, or a 9-axis sensor)) may be selected as the primary device, and the other as the secondary device.

In an embodiment, the primary device may transmit data received from the electronic device 101 to the secondary device. For example, the first external electronic device 202, which is the primary device, may not only output audio to the speaker 354 based on audio data received from the electronic device 101, but also output the audio data to the second external electronic device which is the secondary device. In an embodiment, the secondary device may receive the audio data, transmitted from the electronic device 101 to the primary device (e.g., the first external electronic device 202), through sniffing based on the connection information provided from the primary device (e.g., the first external electronic device 202).

In an embodiment, the first external electronic device 202 which is the primary device may transmit the data (e.g., audio data or control data) received from the second external electronic device 204 which is the secondary device to the electronic device 101. For example, when a touch event occurs in the second external electronic device 204 which is the secondary device, control data including information about the event may be transmitted to the electronic device 101 by the first external electronic device 202 which is the primary device. However, without limited to those described, the secondary device and the electronic device 101 may establish a communication connection therebetween as described above, so that the secondary device and the electronic device 101 may directly perform transmission and/or reception of data therebetween.

In an embodiment, the first external electronic device 202 may include the same or similar components to at least one of the components (e.g., modules) of the electronic device 101 illustrated in FIG. 1. The first external electronic device 202 may include a processor 310 (e.g., the processor 120 of FIG. 1), a communication circuit 320 (e.g., the communication module 190 of FIG. 1), an input device 330 (e.g., the input module 150 of FIG. 1), a sensor 340 (e.g., the sensor module 176 of FIG. 1), an audio processing module 350 (e.g., the audio module 170 of FIG. 1), a power management module 360 (e.g., the power management module 188 of FIG. 1), a battery 370 (e.g., the battery 189 of FIG. 1), an interface 380 (e.g., the interface 177 of FIG. 1), and a memory 390 (e.g., the memory 130 of FIG. 1).

According to an embodiment, the communication circuit 320 may include at least one of a wireless communication module (e.g., a Bluetooth communication module, a cellular communication module, a wireless-fidelity (Wi-Fi) communication module, a near-field communication (NFC) communication module, or a global navigation satellite system (GNSS) communication module) or a wired communication module (e.g., a local area network (LAN) communication module or a power line communication (PLC) communication module). As an example, the Bluetooth communication module may support at least one communication connection (e.g., communication link) by Bluetooth legacy communication and/or Bluetooth low energy (BLE) communication.

The communication circuit 320 may directly or indirectly communicate with at least one of the electronic device 101 (e.g., a smartphone), the third external electronic device 250 (e.g., a charging device, such as a cradle), or the second external electronic device 204 (e.g., the secondary earbud) through a first network (e.g., the first network 198 of FIG. 1), using at least one communication module. The second external electronic device 204 may be configured in pair with the first electronic device 202. The communication module 320 may include one or more communication processors that are operable independently from the processor 310 and supports wired or wireless communication.

According to an embodiment, the communication circuit 320 may be connected with one or more antennas for transmitting signals or information to another electronic device (e.g., at least one of the electronic device 101, the second external electronic device 204, or a cradle device (e.g., the third external electronic device 250)) or receiving signals or information from the other electronic device. According to an embodiment, at least one antenna appropriate for a communication scheme used in a communication network, such as the first network (e.g., the first network 198 of FIG. 1) or the second network (e.g., the second network 199 of FIG. 2), may be selected from the plurality of antennas by, e.g., the communication circuit 320. The signal or information may then be transmitted or received between the communication circuit 320 and another electronic device via the selected at least one antenna.

According to an embodiment, the input device 330 may be configured to generate various input signals that may be used for operation of the first external electronic device 202. The input device 330 may include at least one of a touch pad, a touch panel, or a button.

According to an embodiment, the input device 330 may generate a user input regarding the turn-on/off of the first external electronic device 202. According to an embodiment, the input device 330 may receive a user input for a communication connection between the first external electronic device 202 and the second external electronic device 204. According to an embodiment, the input device 330 may receive a user input associated with audio data (or audio content). For example, the user input may be associated with functions of starting playback of audio data, pausing playback, stopping playback, adjusting playback speed, adjusting playback volume, or muting.

According to an embodiment, the sensor 340 may measure or identify the position or operational state of the first external electronic device 202. The sensor 340 may convert measured or identified information into an electric signal. The sensor 340 may include at least one of, e.g., a magnetic sensor, an acceleration sensor, a gyro sensor, a geomagnetic sensor, a proximity sensor, a gesture sensor, a grip sensor, a biometric sensor, or an optical sensor.

According to an embodiment, the processor 310 may detect data (e.g., audio data) from the data packet received from the electronic device 101 and may process the detected data through the audio processing module 350 and output it to the speaker 354. The audio processing module 350 may support an audio data gathering function and play the gathered audio data.

According to an embodiment, the audio processing module 350 may include an audio decoder (not shown) and a D/A converter (not shown). The audio decoder may convert audio data stored in the memory 390 or received from the electronic device 101 through the communication circuit 320 into a digital audio signal. The D/A converter may convert the digital audio signal converted by the audio decoder into an analog audio signal. According to an embodiment, the audio decoder may convert audio data received from the electronic device 101 through the communication circuit 320 and stored in the memory 390 into a digital audio signal. The speaker 354 may output the analog audio signal converted by the D/A converter.

According to an embodiment, the audio processing module 350 may include an A/D converter (not shown). The A/D converter may convert the analog audio signal transferred through the microphone 352 (hereinafter, referred to as a mic) into a digital voice signal. The mic 352 may include at least one air conduction microphone and/or at least one bone conduction microphone for detecting voice and/or sound.

According to an embodiment, the audio processing module 350 may play various audio data set in the operation of the first external electronic device 202. For example, the processor 310 may be designed to detect insertion or removal of the first external electronic device 202 into/from the user's ear through the sensor 340 and play audio data regarding an effect sound or guide sound through the audio processing module 350. The output of the sound effect or guide sound may be omitted according to the user setting or the designer's intention.

According to an embodiment, the memory 390 may store various data used by at least one component (e.g., the processor 310 or a sensor 340) of the first external electronic device 202. The various data may include, for example, software and input data or output data for a command related thereto. The memory 390 may include a volatile memory or a non-volatile memory.

According to an embodiment, the power management module 360 may manage power supplied to the first external electronic device 202. According to one embodiment, the power management module 360 may be implemented as at least part of, for example, a power management integrated circuit (PMIC). According to an embodiment, the power management module 360 may include a battery charging module. According to an embodiment, if another electronic device (e.g., one of the electronic device 101, the second external electronic device 204, or another electronic device) is electrically connected with the first external electronic device 202 (wirelessly or wiredly), the power management module 360 may receive power from the other electronic device to charge the battery 370.

According to an embodiment, the battery 370 may supply power to at least one component of the first external electronic device 202. The battery 370 may include, e.g., a rechargeable battery. According to an embodiment, if the first external electronic device 202 is mounted in the cradle device (e.g., the third external electronic device 250), the first external electronic device 202 may charge the battery 370 to a designated charging level and then power on the first external electronic device 202 or turn on at least a portion of the communication circuit 320.

According to an embodiment, the interface 380 may support one or more designated protocols that may be used for the first external electronic device 202 to directly (e.g., wiredly) connect to the electronic device 101, the second external electronic device 204, the cradle device (e.g., the third external electronic device 250) or another electronic device. The interface 380 may include at least one of, e.g., a high definition multimedia interface (HDMI), a USB interface, an SD card interface, a power line communication (PLC) interface, or an audio interface. According to an embodiment, the interface 380 may include at least one connection port for establishing a physical connection with the cradle device (e.g., the third external electronic device 250).

According to an embodiment, the processor 310 may execute software to control at least one other component (e.g., a hardware or software component) of the first external electronic device 202 connected with the processor 310 and may perform various data processing or computations. According to an embodiment, as at least part of the data processing or computation, the processor 310 may load a command or data received from another component (e.g., the sensor 340 or communication circuit 320) onto a volatile memory 390, process the command or the data stored in the volatile memory 390, and store resulting data in a non-volatile memory.

According to an embodiment, the processor 310 may establish a communication connection with the electronic device 101 through the communication circuit 320 and receive data (e.g., audio data) from the electronic device 101 through the established communication connection. According to an embodiment, the processor 310 may transmit the data, received from the electronic device 101 through the communication circuit 320, to the second external electronic device 204. According to an embodiment, the processor 310 may perform the operations of the first external electronic device 202 which are to be described below. According to an embodiment, the processor 310 may include a physical layer, a link layer, a host, and an application layer for performing Bluetooth communication.

According to various embodiments, the first external electronic device 202 may further include various modules depending on the form in which it is provided. There are many variations according to the convergence trend of digital devices, so it is not possible to list them all, but components equivalent to the above-mentioned components may be further included in the first external electronic device 202. Further, it is apparent that in the first external electronic device 202 according to various embodiments, specific components may be excluded from the above components or replaced with other components according to the form in which it is provided. This will be easily understood by those of ordinary skill in the art.

According to various embodiments, the second external electronic device 204 configured in pair with the first external electronic device 202 may include the same components as those included in the first external electronic device 202 and may perform all or some of the operations of the first external electronic device 202 described below in connection with the drawings.

In an embodiment, the electronic device 101 may discover at least one of the external electronic devices 202 and 204 through a BLE scan and establish a BLE connection with the discovered external electronic device. At least one of the external electronic devices 202 and 204 may perform BLE advertising to be discovered by the electronic device 101.

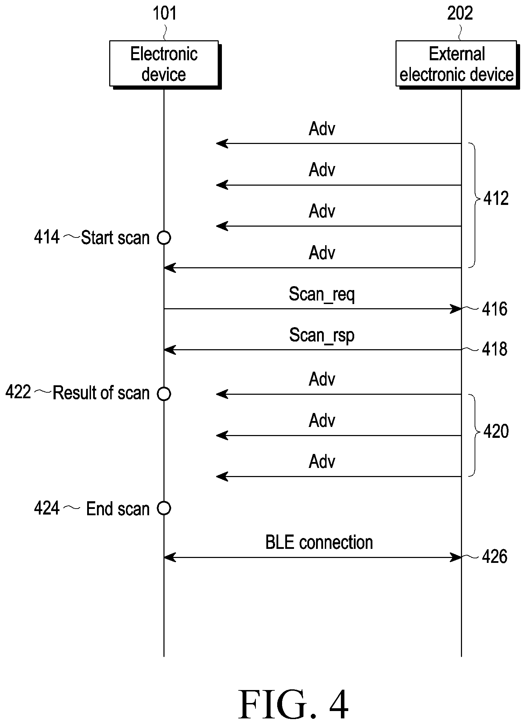

FIG. 4 is a view illustrating a Bluetooth LE (BLE) scan operation according to an embodiment.

Referring to FIG. 4, in operation 414, the electronic device 101 may start to perform a scan operation for search for a nearby Bluetooth device based on BLE. In operation 412, the external electronic device (e.g., a second external electronic device 202) may periodically transmit (e.g., multicast or broadcast) an advertising packet ("Adv") to be discovered by a nearby Bluetooth device based on BLE. In an embodiment, the advertising packet may include advertising data. The advertising data may provide information related to a connection or account (e.g., pairing) with the external electronic device 202 to an unspecified nearby electronic device (e.g., the electronic device 101). In an embodiment, the advertising packet may include at least one of identification information about the external electronic device 202, the user's account information, information about whether the external electronic device 202 is paired with another electronic device, a list of devices previously paired with the external electronic device 202, information about devices simultaneously pairable, transmission power, detection area, or remaining battery information.

In an embodiment, the external electronic device 202 may start the operation of transmitting an advertising packet in response to a user input for, e.g., a pairing request. In an embodiment, the external electronic device 202 may be stored in the cradle device (e.g., the third external electronic device 250) and, if the cradle device is opened with it stored in the cradle device or it is removed from the cradle device, transmission of the advertising packet may be started. In an embodiment, the external electronic device 202 may transmit the advertising packet according to a designated condition. In an embodiment, the second electronic device 202 may start the transmission of the advertising packet based on at least one of when power is supplied or a designated time period.

In an embodiment, the electronic device 101 may receive at least one of the advertising packets broadcast from the external electronic device 202 and output a user interface for connection with the external electronic device 202 on the display. The electronic device 101 may provide a user interface according to various conditions based on the information included in the received advertising packet. As an example, the user interface may include at least one of the image, user account, transmission power, or remaining battery corresponding to the first external electronic device 202.

In operation 416, the electronic device 101 may transmit a scan request packet (e.g., Scan_req) corresponding to the advertising packet received from the external electronic device 202 to the external electronic device 202. In operation 418, the external electronic device 202 may transmit a scan response packet (e.g., Scan_rsp) corresponding to the scan request packet to the electronic device 101. In an embodiment, even while or after the scan request packet of operation 416 and the scan response packet of operation 418 are exchanged, the external electronic device 202 may continuously and periodically transmit the advertising packet in operation 420.

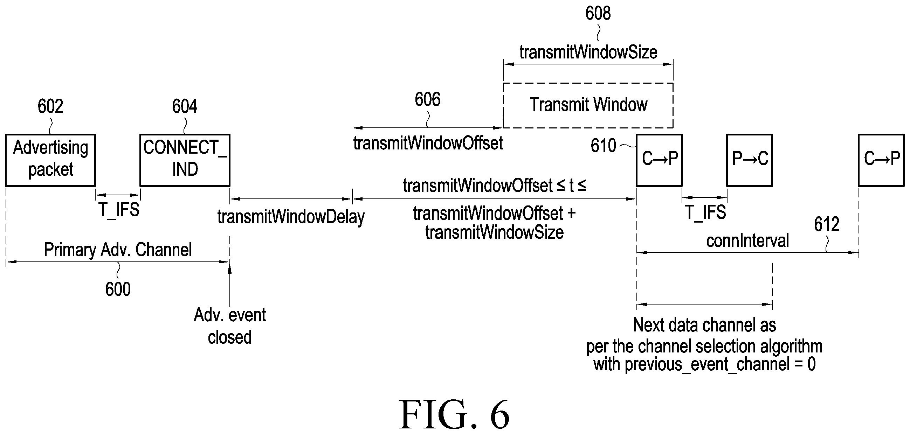

In operation 422, the electronic device 101 may generate a scan result (including, e.g., a received signal strength indicator (RSSI)) according to reception of the scan response packet. In an embodiment, the electronic device 101 may terminate the scan operation according to reception of the scan response packet in operation 424. Or, the electronic device 101 may continue the scan operation. In operation 426, the electronic device 101 may establish a BLE communication link (e.g., asynchronous connection-less (ACL) link) with the external electronic device 202. In an embodiment, operation 426 may include transmission of a CONNECT_IND 604 and first packet 610 of FIG. 6.

The BLE communication link may include a plurality of physical channels, e.g., an LE piconet physical channel, an LE advertising physical channel, an advertising periodic physical channel, and an LE isochronous physical channel, which may be optimized and used for their different purposes. The LE piconet physical channel may be used for communication between the connected devices and be connected with a specific piconet. The LE advertising physical channel may be used to broadcast advertising (advertisements) to the Bluetooth device. The advertising may be used to discover user data, connect, or send user data to the counterpart electronic device. The advertising periodical physical channel may be used to transmit user data to the counterpart electronic device 101 at specific intervals through periodic advertising. The LE isochronous physical channel may be used to transfer isochronous data between Bluetooth devices in an LE piconet, or to transfer isochronous data between unconnected Bluetooth devices.

According to various embodiments, electronic devices (e.g., the electronic device 101, the first external electronic device 202, and the second external electronic device 204) may support audio services through BLE, and the audio provided by an audio service through BLE may be referred to as a BLE audio. Methods for supporting an audio service through the BLE audio may be divided into, e.g., broadcast isochronous stream (BIS) and connected isochronous stream (CIS).

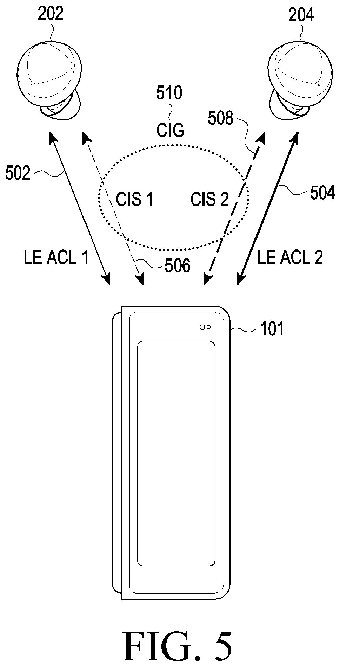

FIG. 5 is a view illustrating an example of connection between Bluetooth devices according to an embodiment.

Referring to FIG. 5, the electronic device 101 may detect the presence of the first external electronic device 202 and establish a first asynchronous connection-less (ACL) link 502 (hereinafter, referred to as ACL1 or LE ACL1) therebetween based on BLE. Further, the electronic device 101 may detect the presence of the second external electronic device 204 and establish a second ACL link 504 (hereinafter, referred to as ACL2 or LE ACL2) therebetween based on BLE. In an embodiment, the electronic device 101 may establish the second ACL link 504 with the aid of the first external electronic device 202.

In an embodiment, the electronic device 101 may establish an audio communication link for audio communication (e.g., a first connected isochronous stream (CIS) link 506) (hereinafter, referred to as CIS1) that uses an isochronous physical channel, using the first ACL link 502 and exchange isochronous data (e.g., audio data) with the first external electronic device 202 through the first CIS link 506. Similarly, the electronic device 101 may establish an audio communication link for audio communication (e.g., a second CIS link 508) (hereinafter, referred to as CIS2) using the second ACL link 504 and exchange isochronous data (e.g., audio data) with the second external electronic device 204 through the second CIS link 508. The first CIS link 506 and the second CIS link 508 may be included in a CIS group (CIG) 510.

In an embodiment, the first ACL link 502 may be a logical transmission used to exchange information necessary to establish or control the first CIS link 506 between the electronic device 101 and the first external electronic device 202. The first CIS link 506 may be used to communicate audio data between the electronic device 101 and the first external electronic device 202. In an embodiment, the electronic device 101 and the first external electronic device 202 may establish the first CIS link 506 based on information (e.g., communication parameters) obtained through the first ACL link 502. In an embodiment, the electronic device 101 and the first external electronic device 202 may exchange information (e.g., supported feature information and/or PHY change policy) to be applied to the control of the first CIS link 506, through the first ACL link 502.

In an embodiment, the second external electronic device 204 may establish a second ACL link 504 and a second CIS link 508 with the electronic device 101 and may perform the same or similar operation as that of the first external electronic device 202. In an embodiment, the second external electronic device 204 may communicate with the electronic device 101 through the control of the first external electronic device 202.

FIG. 6 is a view illustrating an example of BLE communication connection according to an embodiment.

Referring to FIG. 6, the primary advertising channel 600 may be used to transmit an advertising packet 602 and a connection indication (CONNECT_IND) message 604. A time for inter frame space (T_IFS) may exist between the advertising packet 602 and the connection indication message 604. The advertising event may be terminated by the connection indication (CONNECT_IND) message 604. After the connection indication (CONNECT_IND) message 604, the connection of the link layer (LL) may be set up.

When generating a communication link with the counterpart electronic device 101, a Bluetooth device (e.g., the electronic device 101, the first external electronic device 202, or the second external electronic device 204) may set a connection interval (connInterval) 612 that means a communication period and perform communication at each connection interval 612. In an embodiment, upon receiving the advertising packet 602 broadcast from the first external electronic device 202 on the primary advertising channel 600, the electronic device 101 may transfer a CONNECT_IND message 604 to the first external electronic device 202 to request a BLE connection.

The first external electronic device 202 receiving the CONNECT_IND message 604 may operate as a peripheral device (e.g., a slave role), calculate the start point of the connection interval 612 based on the parameters, e.g., transmitWindowOffset 606 and transmitWindowSize 608, transferred through the CONNECT_IND message 604 by the electronic device 101 operating as the central device (e.g., a master role), and prepare to receive the first packet 610 to be transferred from the first electronic device 302 in the central-to-peripheral (C-P) (or master-to-slave (M-S)) time period (including, e.g., at least one slot) in the connection interval 612. If the first packet 610 is received, an anchor point (AP) indicating the start point of the next connection interval from the time of reception of the first packet 610 may be calculated.

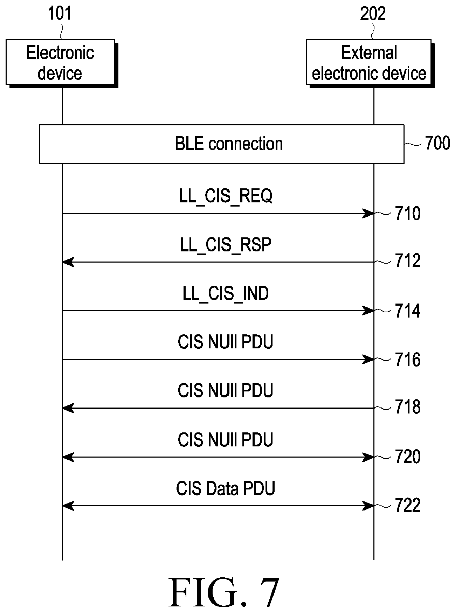

FIG. 7 is a signal flowchart illustrating an example of an operation procedure for establishing a CIS link according to an embodiment.

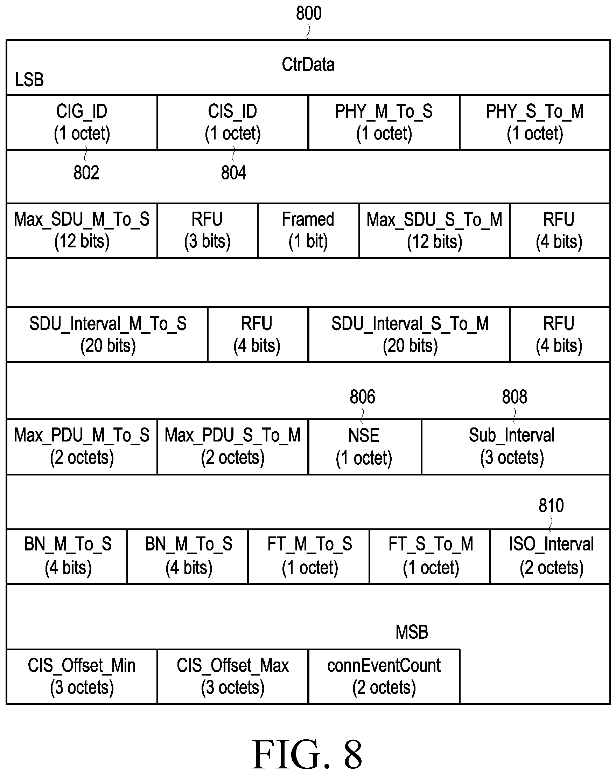

Referring to FIG. 7, in operation 700, an electronic device (e.g., a CIS source electronic device or the electronic device 101) may have a BLE connection (e.g., the first ACL link 502) with the counterpart electronic device (e.g., the CIS sink electronic device or the first external electronic device 202). In operation 710, the electronic device 101 may transmit, to the first external electronic device 202, a link layer CIS request message (e.g., LL_CIS_REQ packet) including CIS parameters (e.g., the control data 800 of FIG. 8) for defining a CIS link (e.g., the first CIS link 506). In operation 712, upon receiving a link layer CIS response message (e.g., LL_CIS_RSP packet) from the first external electronic device 202, the electronic device 101 may transmit a link layer CIS indication message (e.g., LL_CIS_IND packet) to the first external electronic device 202 in operation 714.

In operations 716, 718, and 720, the electronic device 101 and the first external electronic device 202 may establish a CIS link by exchanging one or more CIS null packets (e.g., protocol data unit (PDU)). In operation 722, the electronic device 101 and the first external electronic device 202 may communicate CIS data PDUs through the CIS link.

In BLE, CIS may mean logical transmission capable of transmitting isochronous data in any direction between the electronic devices that have created a communication link. The CIS is capable of transmitting data in a variable size as well as a fixed data size, and may be used for both framed data and unframed data. For each CIS, a schedule of time slots known as events and subevents may be set. The CIS may be capable of adjusting a data rate by transmitting a variable size packet and one or more packets in each isochronous event. Data traffic on the CIS link may be transmitted unidirectionally or bidirectionally between devices and may include an acknowledgment (ACK) protocol for enhancing reliability of packet transmission.

FIG. 8 is a view illustrating an example of CIS parameters set for CIS communication according to an embodiment.

Referring to FIG. 8, the parameters (referred to as, e.g., CIS parameters) used for CIS communication may be provided to the counterpart electronic device (e.g., the first external electronic device 202) through the control data 800 included in the LL_CIS_REQ of operation 710. In an embodiment, the electronic device 101 playing a master role (or as a central device) may allocate a CIS_ID for CIS communication, and the CIS_ID may be shared with the first external electronic device 202 playing a slave role (or as a peripheral device) through the link layer message (e.g., LL_CIS_REQ).

In an embodiment, the control data 800 may include at least one parameter among a CIG_ID 802 for identifying the CIS group (CIG) (e.g., CIG(510)), a CIS_ID 804 for identifying the CIS link (e.g., the first CIS link 506), a parameter (including PHY_M_To_S and PHY_S_To_M) indicating the master-slave physical layer transmission scheme (hereinafter, referred to as PHY), a Max_SDU parameter (including Max_SDU_M_To_S and Max_SDU_S_To_M) indicating the maximum size of the service data unit (SDU), at least one reserved for future use (RFU) field, a Framed field, an SDU_Interval parameter (SDU_Interval_M_to_S and SDU_Interval_S_to_M), a Max_PDU parameter (including Max_PDU_M_To_S and Max_PDU_S_To_M) indicating the maximum PDU size, a number of subevent (NSE) 806, a Sub_Interval parameter 808 (including Sub_Interval_M_To_S and Sub_Interval_S_To_M), a burst number (BN) parameter (including BN_M_To_S and BN_S_To_M), a flushing time (FT) parameter (including FT_M_To_S and FT_S_To_M), an ISO_Interval 810, a CIS offset parameter (CIS_Offset_Min and CIS_Offset_Max), or a connEventCount.

The parameters set by the control data 800 may be applied to audio data transmission on the CIS link (e.g., the first CIS link 506) and may not be changed after the CIS link is generated and until the CIS link is terminated. The CIS_ID 804 may be shared with the host of the first external electronic device 202 via the link layers of the electronic device 101 and the first external electronic device 202 and may not be used in the link layer.

PHY_M_To_S and PHY_S_To_M may indicate a PHY used for data transmission in a master-slave direction and a PHY used for data transmission in a slave-master direction, respectively. On the CIS link, the PHYs (e.g., at least one of LE 1M (1 mega-symbol per second), LE 2M (2 mega-symbol per second), Coded PHY with S=2, or Coded PHY with S=8) indicated by PHY_M_To_S and PHY_S_To_M may be used.

ISO_Interval 810 may indicate a regular time interval between two contiguous CIS anchor points. One CIS event may occur starting at each anchor point within one isochronous (ISO) interval. One CIS event may include one or more subevents indicating a master-slave-to-slave transmission occasion. The Sub_Interval 808 may indicate a time interval between two contiguous subevents within one CIS event. The maximum length of each subevent may be designated by SE_Length. Max_PDU may indicate the maximum size of the CIS data PDU. Max_SDU may indicate the maximum size of the SDU on the CIS. The NSE may indicate the maximum number of subevents in each CIS event. The BN designated by the BN parameter may indicate the number of packets that may be transmitted without ACK/NACK. The NSE parameter may be the larger value of BN_M_To_S and BN_S_To_M and may be set up to 31. The FT parameter may indicate the maximum number of CIS events in which the CIS data PDU may be transmitted (or retransmitted) and may have a value from 1 to 255.

For encryption of the CIS link (e.g., the first CIS link 506), encryption of the ACL link (e.g., the first ACL link 502) may be applied as it is. Both the central device (e.g., the electronic device 101) and the peripheral device (e.g., the first external electronic device 202) may have a 39-bit CIS event counter (cisEventCounter). After setting the CIS event counter to 0 for the first CIS event of the CIS link (e.g., the first CIS link 506), the CIS event counter may be incremented by 1 each time an isochronous PDU is transmitted in each CIS event. The CIS link (e.g., the first CIS link 506) may have a CIS payload number (cisPayloadNumber) of 39 bits. When the CIS payload number is $2^{39}$-1, the CIS link (e.g., the first CIS link 506) may be terminated. The CIS null PDU may not have cisPayloadNumber.

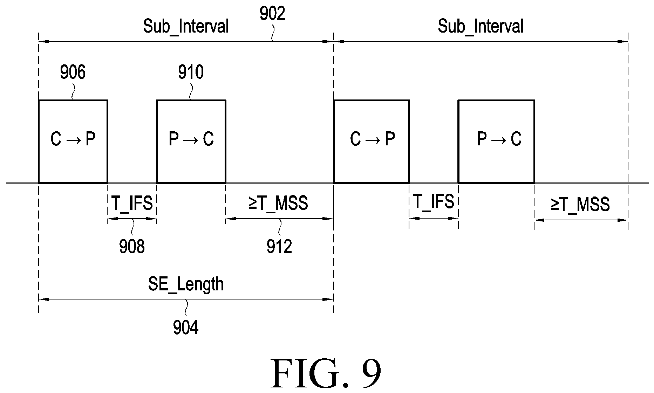

FIG. 9 is a timing diagram illustrating an example of CIS communication according to an embodiment.

Referring to FIG. 9, CIS communication may include CIS events that occur at a set interval (e.g., the ISO interval indicatable by the ISO_Interval 810), and each CIS event may include one or more subevents (e.g., the first subevent 902 corresponding to the Sub_Interval). SE_Length 904 indicating the length of each subevent may be designated by, e.g., the Sub_Interval parameter 808 in the CIS parameters (e.g., control data 800).

In an embodiment, during one subevent (e.g., the first subevent 902), the electronic device 101 may perform one transmission (e.g., C->P packet 906 transmitted from the electronic device 101 (central device) to the first external electronic device 202 (peripheral device)) and one reception (e.g., P->C packet 910 transmitted from the first external electronic device 202 (peripheral device) to the electronic device 101 (central device)). The first external electronic device 202 may receive the C->P packet 906 and, after the interval 908 of T_IFS, transmit a response (e.g., P->C packet 910) corresponding thereto. In an embodiment, upon failing to receive the packet 906 from the electronic device 101, the first external electronic device 202 may perform no transmission during the first subevent 902. The electronic device 101 and the first external electronic device 202 may use the next subevent for retransmission (RT) of the packet 906 or transmission of the next packet.

There may be an interval of, at least, time for minimum subevent space (T_MSS) 912 after the transmission (e.g., P->C packet 910) of the first external electronic device 202 and until the first subevent 902 is terminated. T_MSS 912 means the minimum time interval between the last bit of the last packet (e.g., P->C packet 910) in one subevent (e.g., the first subevent 902) and the first bit of the first packet of the next subevent and be designated as, e.g., -150$\mu$s(micro second) by the standard.

When the electronic device 101 and the first external electronic device 202 complete transfer of the isochronous data scheduled in the CIS event, all the remaining subevents of the CIS event may have no more transmissions, and the CIS event may be terminated.

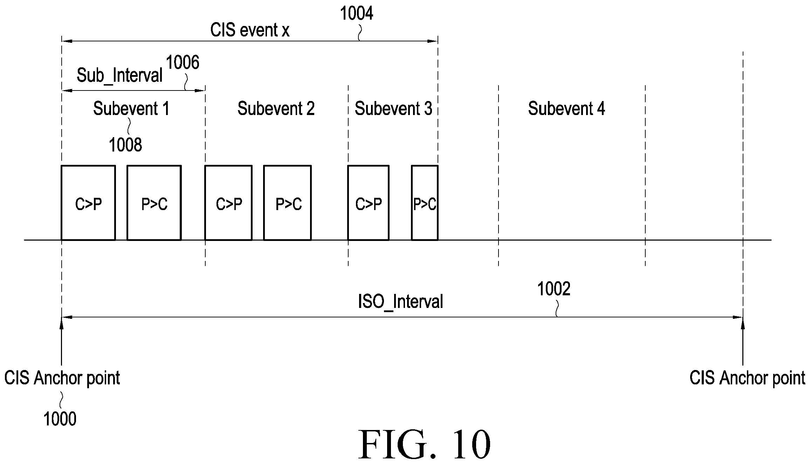

FIG. 10 is a view illustrating an example of a CIS event according to an embodiment.

Referring to FIG. 10, at least one CIS event (e.g., CIS event ✕ 1004) may be included in the ISO_interval 1002 for CIS link. The CIS event ✕ 1004 means an occasion where the central device (e.g., the electronic device 101) and the peripheral device (e.g., the first external electronic device 202) may exchange CIS packets (e.g., CIS PDUs) and may occur at predetermined intervals and include as many subevents (including subevent 1 1008) as the NSE, at most. For example, if NSE=4, up to 4 subevents may be present in CIS event ✕ 1004, where a case where 3 subevents (e.g., subevent 1 (1008), subevent 2, and subevent 3) occur is shown. Each CIS event (e.g., CIS event ✕ 1004) may start at each CIS anchor point 1000 until CIS communication is terminated, and a uniform spacing of the ISO_Interval 1002 may be present between two contiguous CIS anchor points.

Each CIS event (e.g., CIS event ✕ 1004) may be divided into one or more subevents (including, e.g., subevent 1 1008). In one subevent 1 1008, there may be data transmission ("C->P") from the central device (e.g., the electronic device 101) to the peripheral device (e.g., the first external electronic device 202) and data transmission ("P->C") from the peripheral device to the central device. The spacing of the Sub_Interval 1006 may be present between the start points of two contiguous subevents in CIS event × 1004.

The CIG is a bundle of CISs providing the same service. The CIG may include one or more CISs. Several CISs in the CIG may have a common timing reference with respect to the timing of the central device (e.g., the electronic device 101) and be synchronized in time units. The CIG may have a temporal relation at the application level. In one CIG, CISs may have the same ISO_Interval (e.g., ISO_Interval 1002), and up to 31 CISs may be included in one CIG. The central device may allocate the CIG_ID and share the CIG_ID with the peripheral device (e.g., the first external electronic device 202) through the LL message.

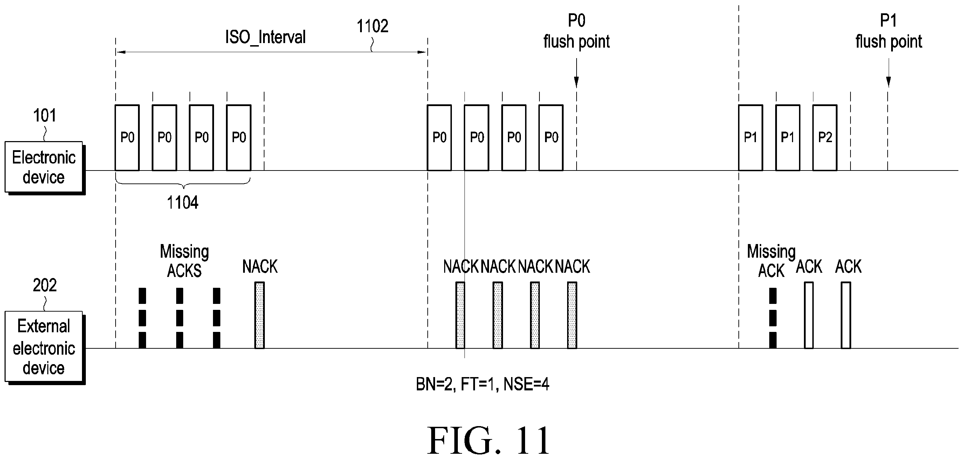

FIG. 11 is a view illustrating an example of CIS transmission according to an embodiment.

Referring to FIG. 11, BN=2, FT=1, and NSE=4 are set for CIS transmission. During the first CIS event 1102 in the ISO interval, the electronic device 101 may repeatedly transmit packet P0 using up to four subevents 1104 according to NSE=4. For example, the external electronic device 202 may fail to normally receive packet P0 in four subevents 1104 and may send a NACK, using the last fourth subevent.

Upon failing to successfully transmit packet P0 until reaching the flush point of packet P0 in the second CIS event, in other words, upon failing to receive an ACK for packet P0, the electronic device 101 may transmit the next packet P1 in the third CIS event. Upon receiving an ACK from the external electronic device 202 using the second subevent of the third CIS event, the electronic device 101 may transmit the next packet P2 using the third subevent of the third CIS event.

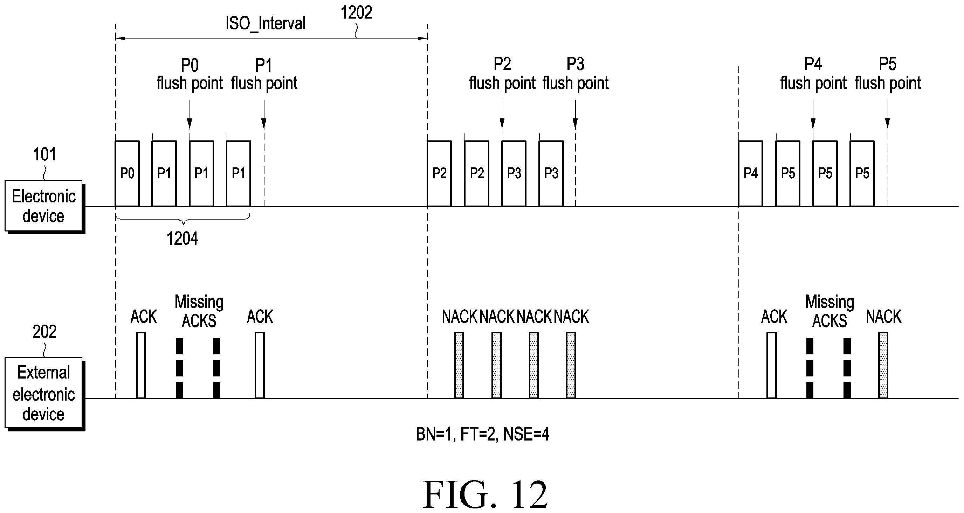

FIG. 12 is a view illustrating another example of CIS transmission according to an embodiment.

Referring to FIG. 12, BN=1, FT=2, and NSE=4 are set for CIS transmission. During the first CIS event 1202 having the ISO interval, the electronic device 101 may use up to four subevents 1204 according to NSE=4. For example, in the first subevent, the electronic device 101 may transmit packet P0 and receive an ACK from the external electronic device 202. In the second, third, and fourth subevents, the electronic device 101 may repeatedly transmit packet P1. In the fourth subevent, the external electronic device 202 may transmit an ACK for packet P1 to the electronic device 101.

For the second CIS event, the electronic device 101 may repeatedly transmit packet P2 using the first and second subevents and repeatedly transmit packet P3 using the third and fourth subevents. For the third CIS event, the electronic device 101 may transmit packet P4 using the first subevent and repeatedly transmit packet P5 using the second, third, and fourth subevents.

In various embodiments, the electronic device 101 may transmit CIS parameters (e.g., the control data 800) to the first external electronic device 202 and the second external electronic device 204 to transmit audio data using CIS communication, thereby setting the CIS parameters in the first external electronic device 202 and the second external electronic device 204. For example, for the media type, two CISs (e.g., the first CIS link 506 and the second CIS link 508) having the CIS parameters of ISO interval=20ms, BN=2, FT=5, NSE=6, and SE length=884$\mu$s may be opened between the electronic device 101 and the first external electronic device 202 and the second external electronic device 204, and the audio service may be performed through the CISs.

In an embodiment, the resources for each CIS, available for one CIS to the electronic device 101, may be calculated as "SE length × NSE / ISO interval" so that the resources for a plurality of CISs may be "per-CIS available resources × CIS count." Here, the CIS count may mean the number (e.g., two) of CISs included in one CIG. In an embodiment, the electronic device 101 may determine the resources using the designated SE length, and the ISO interval 810 and NSE 806 among the CIS parameters (e.g., the control data 800) transmitted to the first external electronic device 202 and the second external electronic device 204.

The CIG may be expected to have a temporal relation at the application layer and may include Num_CIS CISs having the same ISO interval, where Num_CIS may be equal to or smaller than 31. The host of the central device (e.g., the electronic device 101) may allocate a CIG_ID to the CIG. The CISs in each CIG may be arranged in a sequential or interleaved manner depending on the interval between CIS anchor points and the Sub _Interval.

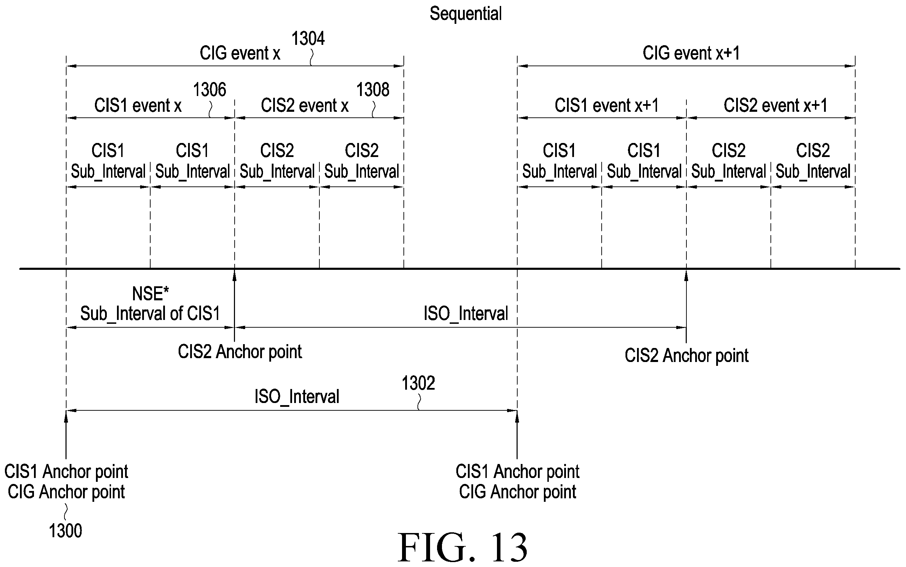

FIG. 13 is a view illustrating CISs in a sequential arrangement according to an embodiment.

Referring to FIG. 13, the ISO_Interval 1302 may start at the CIS1 anchor point 1300 overlapping the CIG anchor point and may include CIG events (e.g., CIG event × 1304). CIS2 event × 1308 in CIG event × 1304 may occur immediately after CIS1 event × 1306.

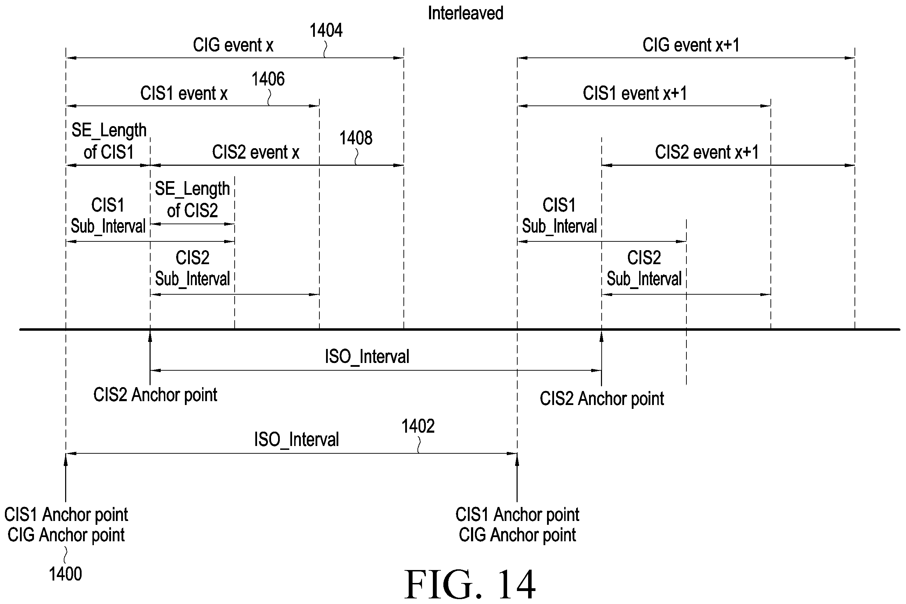

FIG. 14 is a view illustrating CISs in an interleaved arrangement according to an embodiment.

Referring to FIG. 14, the ISO_Interval 1402 may start at the CIS1 anchor point 1400 overlapping the CIG anchor point and may include CIG events (e.g., CIG event × 1404). CIS2 event × 1408 in CIG event × 1404 may occur overlapping CIS1 event × 1406.

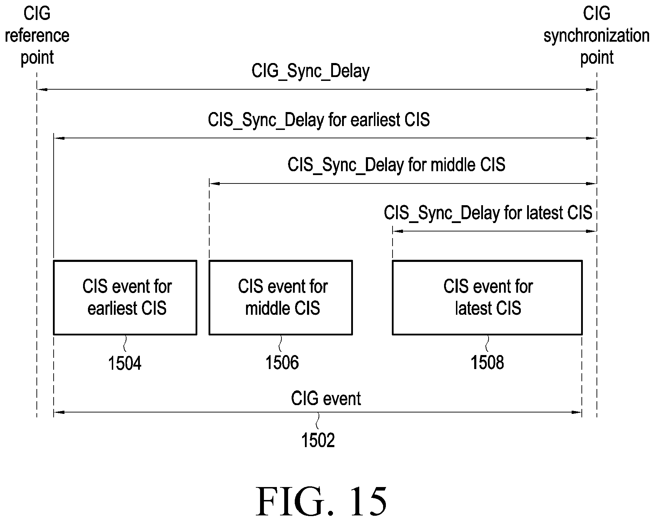

FIG. 15 is a view illustrating a CIG event layout including three CISs according to an embodiment.

Referring to FIG. 15, the CIG event 1502 (e.g., CIG event × 1304 or CIG event × 1404) may include a plurality of CIS events (e.g., the CIS event 1504, CIS event 1506, and CIS event 1508) corresponding to the plurality of CISs. The CIG event 1502 may be started at the anchor point (e.g., CIS 1 anchor point 1300 or CIS 1 anchor point 1400) of the CIS event 1504 of the earliest CIS and be terminated at the end point of the CIS event 1508 of the last CIS. The CIG event 1502 may include a CIG reference point and a CIG synchronization point, and the two points may have a spacing of CIG_Sync_Delay. The respective start points of the CIS events 1504, 1506, and 1508 may have a spacing of CIS_Sync_Delay from the CIG synchronization point.

The link layer of the central device (e.g., the electronic device 101) may provide the timing parameters (e.g., CIG_Sync_Delay and CIS_Sync_Delay) for enabling synchronization of isochronous data at the application layer to the link layer of the peripheral device (e.g., the first external electronic device 202).

One CIS event may include as many sub events as, at most, the NSE, and the central device (e.g., the electronic device 101) may transmit audio data to the peripheral device (e.g., the first external electronic device 202) using the plurality of subevents in the CIS event. In an embodiment, in the audio service, the central device may be the source electronic device, and the peripheral device may be the sink electronic device.

The audio service (e.g., BLE audio) using BLE communication may be used for, e.g., binaural ear-wearable devices (e.g., the first external electronic device 202 and the second external electronic device 204). Binaural ear-wearable devices (e.g., the first external electronic device 202 and the second external electronic device 204) may be used in scenarios in which multiple sink electronic devices (e.g., the first external electronic device 202 and the second external electronic device 204) are connected to one source electronic device (e.g., the electronic device 101) to output audio with concurrency, such as a scenario in which music needs to simultaneously be output through two or more speakers or a scenario in which music is output via multiple speakers constituting a 5.1 channel.

When one sink electronic device (e.g., either the first external electronic device 202 or the second external electronic device 204) is connected to one source electronic device (e.g., the electronic device 101), the source electronic device may use the maximum radio frequency (RF) resources and the maximum internal processing resources for the sink electronic device and may thus be less affected by communication deterioration due to a change in the ambient wireless environment or a change in physical distance.

The source electronic device (e.g., the electronic device 101) may maintain the communication link for transfer of audio data with the sink electronic device (e.g., either the first external electronic device 202 or the second external electronic device 204) and, as necessary, may maintain the resources of the source electronic device considering the Bluetooth concurrency operation and Wi-Fi coexistence (COEX) operation. For example, the Bluetooth concurrency operation may include at least one of BLE connection maintaining, BLE scan, BLE advertising, Bluetooth inquiry, Bluetooth inquiry scan, Bluetooth paging, Bluetooth page scan, Bluetooth connection maintaining, or channel scan with other electronic devices (e.g., other Bluetooth devices than the first external electronic device 202 and the second external electronic device 204). The Wi-Fi coexistence operation may include data transmission through Wi-Fi. The source electronic device may fixedly allocate resources of about 50% to 60% to communication links for sink electronic devices considering different operations using the same frequency band, such as the Bluetooth coexistence operation and/or the Wi-Fi coexistence operation.

When the source electronic device (e.g., the electronic device 101) allocates fixed resources to a plurality of communication links and provides an audio service through the allocated fixed resources, the source electronic device may have difficulty in restoring the communication deterioration of a specific communication link that occurs due to various factors, such as a change in ambient environment or a physical obstacle. Failure in real-time restoration of the communication link that experiences communication deterioration may worsen quality of audio service, such as call or music playback, causing user inconvenience.

Embodiments of the disclosure may provide resource allocation for simultaneously performing another task as efficient as possible while operating audio communication links (e.g., CIS link and/or BIS link), while performing the audio service between the electronic devices. In an embodiment, the other task may be a communication operation performed in the frequency band (e.g., the same frequency band) corresponding to the frequency band (e.g., 2.4GHz) of the audio service through audio communication links (e.g., CIS link and/or BIS link). In an embodiment, the other task may include at least one of non-audio communication (e.g., non-CIS communication and/or non-BIS communication) Bluetooth concurrency operation (e.g., at least one of maintaining BLE connection, BLE scan, BLE advertising, Bluetooth inquiry, Bluetooth inquiry scan, Bluetooth paging, Bluetooth page scan, or channel scan) or Wi-Fi coexistence operation. In an embodiment, the electronic device (e.g., the electronic device 101) may determine resources (e.g., the number of subevents available in one CIS event or the number of BIS subevent groups) available for audio communication when generating an audio communication link (e.g., CIS link and/or BIS link) and allow at least one other task to be performed together with audio CIS communication (e.g., at least one CIS task or at least one BIS task) through the audio communication link, considering the per-task priorities in the determined resources. As an embodiment, the per-task priorities may include at least one of the priorities of the communication tasks through the audio communication link or the priorities of other tasks (e.g., Bluetooth concurrency operation or Wi-Fi coexistence operation) that may occur in the same frequency band as that of the audio communication.

In an embodiment, in allocating resources to the audio communication links, the electronic device 101 may determine and allocate the resource available to each audio communication link (e.g., the maximum length of the time period available for audio communication or the maximum number of subevents) to be close to the maximum value (e.g., 100%). The electronic device 101 may vary the per-task priorities depending on the internal scheduling context of the electronic device 101 or vary the priority of the audio communication task over time. The electronic device 101 may perform the audio communication task and other tasks considering the per-task priorities, enhancing the execution of other tasks, such as Bluetooth concurrency operation or Wi-Fi coexistence while stably providing the audio service through the audio communication links.

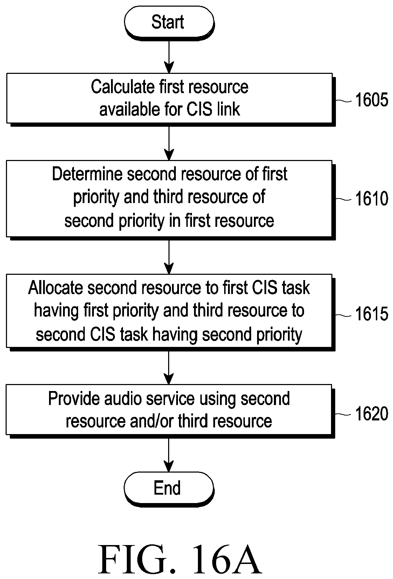

FIG. 16A is a flowchart illustrating a procedure for allocating a resource for audio communication according to an embodiment. At least one of the shown operations may be performed by the processor (e.g., the processor 120) of the source electronic device (e.g., the electronic device 101). At least one of the operations described below may be omitted, modified, or reordered according to various embodiments.

Referring to FIG. 16A, in operation 1605, the electronic device 101 (e.g., the processor 120) may determine a first resource (e.g., the length of the time period or the number of subevents included in one CIS event) available for audio communication in one time interval (e.g., ISO_Interval) set for the audio communication link (e.g., the first CIS link 506 or the second CIS link 508). In an embodiment, the first resource may include the maximum resource (e.g., 60-100% of the ISO interval) determined to be used for audio communication by the electronic device 101 among all the resources (e.g., ISO interval) available for audio communication. In an embodiment, the first resource may be determined to be the remaining time period except for a designated time interval (e.g., 20-40%) for another non-audio communication task e.g., Bluetooth concurrency operation or Wi-Fi coexistence operation) of the ISO interval. In an embodiment, the first resource may be calculated based on the NSE and SE length set for the CIS link. In an embodiment, the first resource may be determined to be close to 100% of the ISO interval considering the NSE and SE length set for the CIS link. In an embodiment, the first resource may be calculated based on the number of subevent groups set for the BIS link.

In operation 1610, the electronic device 101 (e.g., the processor 120) may divide the determined first resource into at least two resources corresponding to different priorities. In an embodiment, the at least two resources may include, at least, a second resource and a third resource, and the electronic device 101 (e.g., the processor 120) may determine the second resource of a first priority and the third resource of a second priority in the first resource.

In an embodiment, the first priority may mean a high priority set for a first communication task (e.g., CIS task) that may be performed in at least one first subevent of the audio communication link (e.g., CIS link). The second priority may mean a low priority set for a second communication task (e.g., CIS task) that may be performed in at least one second subevent of the audio communication link (e.g., CIS link).

In an embodiment, at least one first subevent may include at least one subevent (e.g., at least one front subevent in one CIS event). In an embodiment, at least one second subevent may include at least one remaining subevent (e.g., at least one rear subevent) except for the first subevent in one CIS event. In an embodiment, at least one first subevent and at least one second subevent may be determined according to a designated ratio among all the subevents. In an embodiment, one CIS event may be divided into first subevents corresponding to the first priority and second subevents corresponding to the second priority according to a predetermined ratio. In an embodiment, one CIS event may be divided into the first subevents corresponding to the first priority and the remaining second subevents corresponding to the second priority according to a predetermined minimum subevent number.

In an embodiment, the first priority may mean a high priority set for a first communication task (e.g., BIS task) that may be performed in at least one first subevent group (e.g., at least one front subevent group) among subevent groups included in one BIS event of the BIS link. In an embodiment, the second priority may mean a low priority set for a second communication task (e.g., BIS task) that may be performed in at least one remaining second subevent group (e.g., at least one rear subevent group) except for the first subevent group among the subevent groups included in one BIS event. In an embodiment, the first priority may be higher than the priority assigned to the Bluetooth concurrency operation or the priority assigned to the Wi-Fi coexistence operation.

In an embodiment, the first priority may be determined to be higher than the priority (e.g., third priority) of at least one other task (hereinafter referred to as a third task) (e.g., Bluetooth concurrency operation or Wi-Fi coexistence operation) that may be performed on the same frequency channel as that of audio communication.

In an embodiment, the electronic device 101 (e.g., the processor 120) may allocate the second resource (e.g., at least one first subevent) to the first communication task (e.g., transmission of the audio data packet scheduled for the second resource) having the first priority and allocate the third resource (e.g., at least one second subevent) to the second communication task (e.g., transmission of the audio data packet scheduled for the third resource) having the second priority. In an embodiment, the first communication task may include transmission of the CIS data packet (e.g., the CIS data PDU 722) that uses at least one first subevent. In an embodiment, the second communication task may include transmission of the CIS data packet (e.g., the CIS data PDU 722) that uses at least one second subevent.

In an embodiment, the first communication task may include transmission of the BIS data packet using at least one first subevent group. In an embodiment, the second communication task may include transmission of the BIS data packet using at least one second subevent group.

In operation 1615, the electronic device 101 (e.g., the processor 120) may establish the audio communication link including the second resource and the third resource and provide audio service (e.g., transmission of audio data packets) using the second resource and/or third resource of the audio communication link. In an embodiment, the electronic device 101 (e.g., the processor 120) may transmit audio data packets (e.g., CIS data packets) using the second resource and, if possible, the third resource. In an embodiment, the audio communication link has already been established and, in operation 1615, the electronic device 101 (e.g., the processor 120) may set the second resource and/or third resource or change the resource allocation of the audio communication link to include the second resource and/or third resource. Information about the changed resource allocation may be provided to the sink electronic devices (e.g., the first external electronic device 202 and/or the second external electronic device 204) through parameters (e.g., control data 800 or BIG information 3800) related to the audio communication link.

In an embodiment, while providing the audio service, when identifying that the priority of the third task (e.g., a communication task other than audio communication through the audio communication link) stored in the task queue is not higher than the second priority, the electronic device 101 (e.g., the processor 120) may transmit audio data packets using the third resource.

In an embodiment, when identifying that the priority of the third task (e.g., a communication task other than audio communication through the audio communication link) stored in the task queue is higher than the second priority while providing the audio service, the electronic device 101 (e.g., the processor 120) may omit or delay the second communication task and perform the third task using the third resource.

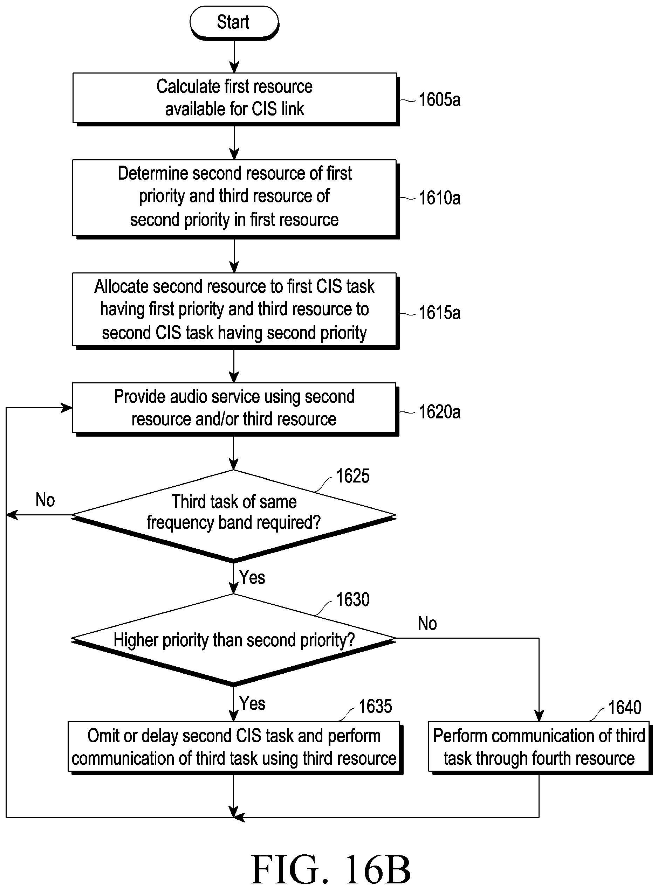

FIG. 16B is a flowchart illustrating a procedure for providing an audio service through short-range wireless communication according to an embodiment. At least one of the shown operations may be performed by the processor (e.g., the processor 120) of the source electronic device (e.g., the electronic device 101). At least one of the operations described below may be omitted, modified, or reordered according to various embodiments. In an embodiment, operations 1620, 1625, and 1630 may be the same as or similar to operations 1605, 1610, and 1615.

Referring to FIG. 16B, in operation 1620, the electronic device 101 (e.g., the processor 120) may determine a first resource (e.g., the length of the time period or the number of subevents included in one CIS event) available for audio communication in one time interval (e.g., ISO_Interval) set for the audio communication link (e.g., the first CIS link 506 or the second CIS link 508).

In operation 1625, the electronic device 101 (e.g., the processor 120) may divide the first resource into at least two resources corresponding to different priorities. In an embodiment, the at least two resources may include, at least, a second resource and a third resource, and the electronic device 101 (e.g., the processor 120) may determine the second resource of a first priority and the third resource of a second priority in the first resource. In an embodiment, the first priority may mean a high priority set for the first communication task performable in at least one first subevent of the CIS link, and the second priority may mean a low priority set for the second communication task performable in at least one second subevent of the CIS link. In an embodiment, the first priority may mean a high priority set for the first communication task that may be performed in at least one first subevent group of the BIS link, and the second priority may mean a low priority set for the second communication task that may be performed in at least one second subevent group of the BIS link.

In an embodiment, the electronic device 101 (e.g., the processor 120) may allocate the second resource (e.g., at least one first subevent) to the first communication task (e.g., transmission of the audio data packet scheduled for the second resource) having the first priority and allocate the third resource (e.g., at least one second subevent) to the second communication task (e.g., transmission of the audio data packet scheduled for the third resource) having the second priority.

In operation 1630, the electronic device 101 (e.g., the processor 120) may establish the audio communication link including the second resource and/or the third resource and provide audio service (e.g., transmission of audio data packets) using the second resource and/or third resource of the audio communication link. In an embodiment, the electronic device 101 (e.g., the processor 120) may transmit audio data packets using the second resource and, if possible, the third resource. In an embodiment, the audio communication link has already been established and, in operation 1630, the electronic device 101 (e.g., the processor 120) may set the second resource and/or third resource for the audio communication link or change the resource allocation of the audio communication link to include the second resource and/or third resource. Information about the changed resource allocation may be provided to the sink electronic devices (e.g., the first external electronic device 202 and/or the second external electronic device 204) through parameters (e.g., control data 800 or BIG information 3800) related to the audio communication link.

In operation 1635, the electronic device 101 (e.g., the processor 120) may determine whether a communication task (e.g., the third task) other than audio communication through the audio communication link needs to be performed in the same frequency band as the audio communication through the audio communication link. In an embodiment, the electronic device 101 (e.g., the processor 120) may store data to be transmitted through the third task in the task queue if the third task is scheduled. The electronic device 101 (e.g., the processor 120) may determine whether the third task is stored in the task queue at each transmission occasion (e.g., each subevent in the third time period) using the third resource and, if the third task is stored, determine that the third task needs to be performed.

In an embodiment, the third task is a Bluetooth concurrency operation, and the electronic device 101 (e.g., the processor 120) may determine whether the third task is scheduled. In an embodiment, the third task is a Wi-Fi coexistence operation, and the electronic device 101 (e.g., the processor 120) may determine whether the third task is scheduled. When the third task is scheduled, operation 1640 may be performed. If the third task is not scheduled, the electronic device 101 (e.g., the processor 120) may return to operation 1630, continuously providing the audio service through the audio communication link until no more audio data to be transmitted exists or termination of the audio service is requested.

In operation 1640, the electronic device 101 (e.g., the processor 120) may identify the priority of the third task and determine whether the priority (e.g., the third priority) of the third task is higher than the second priority. For example, the third priority may be lower than the first priority. If the third priority is higher than the second priority, the electronic device 101 (e.g., the processor 120) may proceed to operation 1645, otherwise operation 1650.

In operation 1645, the electronic device 101 (e.g., the processor 120) may omit or delay the second communication task and perform the third task using the third resource. In an embodiment, the electronic device 101 (e.g., the processor 120) may not transmit an audio data packet(s) in at least one second subevent but may perform a Bluetooth concurrency operation or Wi-Fi coexistence operation according to the third task during the time period corresponding to at least one second subevent. In an embodiment, transmission of the CIS data packet(s) corresponding to at least one second subevent may be omitted or be performed in the next CIS event.

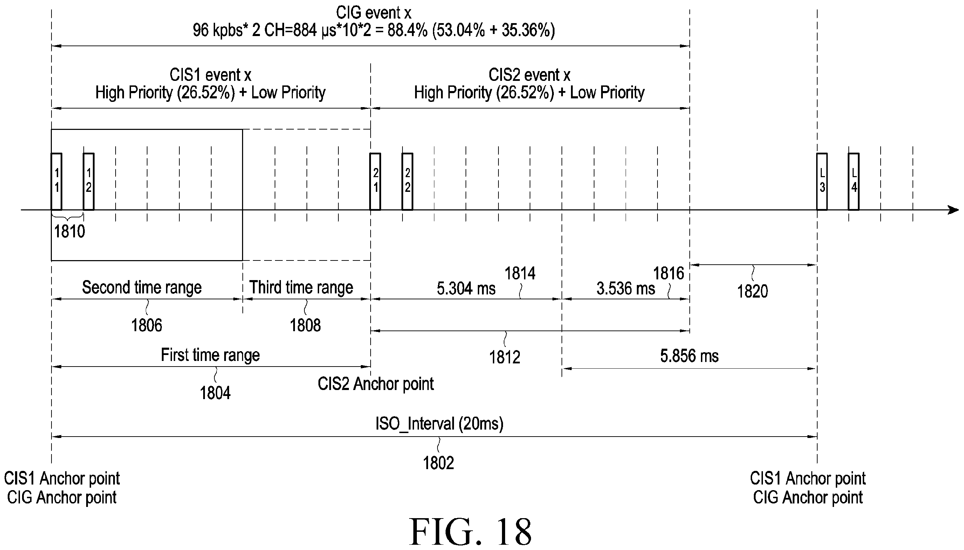

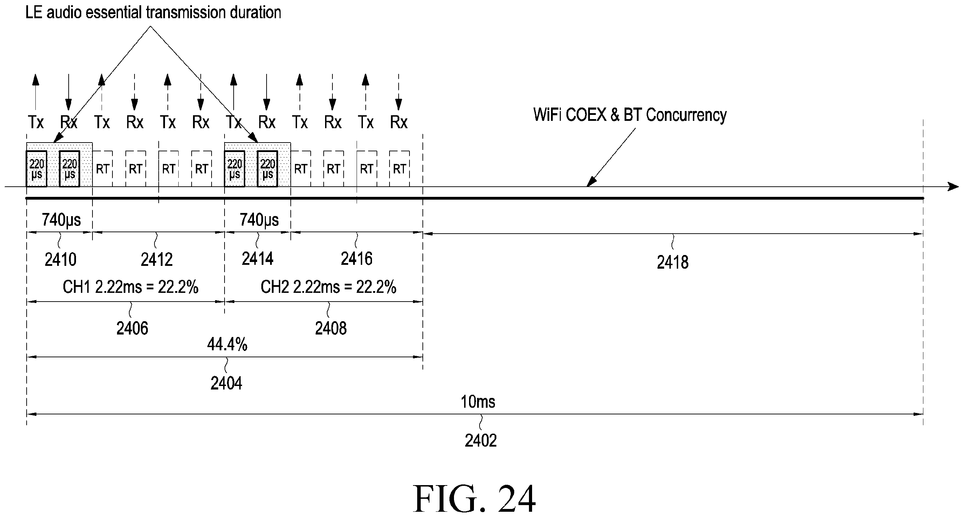

In operation 1650, the electronic device 101 (e.g., the processor 120) may perform the second communication task using the third resource and, if possible, perform the third task using the fourth resource. In an embodiment, when the current ISO interval has a remaining time period (e.g., the time period 1820 of FIG. 18 or the time period 2418 of FIG. 24) except for the time period corresponding to the second resource and the third resource, the electronic device 101 (e.g., the processor 120) may perform a Bluetooth concurrency operation or Wi-Fi coexistence operation according to the third task using the fourth resource including the remaining time period. If the remaining time period does not exist, the third task may be omitted or be performed in a time period corresponding to a subsequent CIS event.

Although not shown, the electronic device 101 (e.g., the processor 120) may determine whether the third task needs to be performed even at each transmission occasion (e.g., each subevent in the second time period) corresponding to the second resource. If the third task has the third priority which is higher than the first priority, the electronic device 101 (e.g., the processor 120) may omit or delay the first communication task in the second time period and perform the third task.

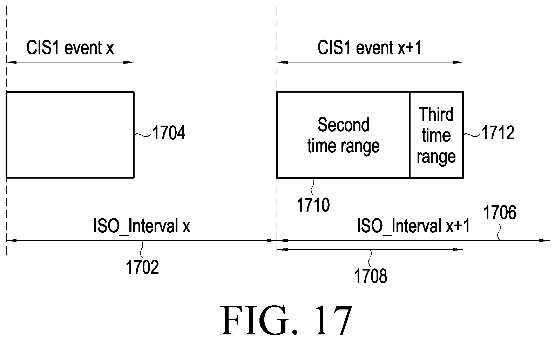

FIG. 17 is a timing diagram illustrating an example of allocating time periods by an electronic device according to an embodiment.

Referring to FIG. 17, ISO_Interval x 1702 and ISO_Interval x+1 1706 may have a length of, e.g., 20ms (milliseconds) and may include at least one CIS event. For example, ISO_Interval x 1702 may include CIS1 event x for CIS1 (e.g., the first CIS link 506), and ISO_Interval x+1 1706 may include CIS1 event x+1 for CIS1 (e.g., the first CIS link 506).

In an embodiment, the time period 1704 corresponding to CIS1 event x in ISO_Interval x 1702 may include subevents (e.g., NSE subevents) having the same priority (e.g., the first priority designated for the CIS task). The electronic device 101 may perform CIS communication (e.g., at least one CIS task) using the entire time period 1704. In an embodiment, when another task with a higher priority than the first priority occurs (or is scheduled) in the time period 1704, the electronic device 101 may omit or delay the CIS task and perform the other task.

In an embodiment, the electronic device 101 may determine to divide the first time period 1708 available for CIS1 event x+1 in ISO_Interval x+1 1706 into at least two time periods (e.g., the second time period 1710 and the third time period 1712). The first time period 1708 may include NSE subevents designated for CIS1 event x+1. The second time period 1710 may include first subevents which are at least some of the NSE subevents and be assigned the first priority. The third time period 1712 may include second subevents which are some of the remainder of the NSE subevents and be assigned the second priority lower than the first priority. Upon detecting that another task with a higher priority than the second priority is scheduled in the third time period 1712, the electronic device 101 may not perform the CIS task in the third time period 1712 but perform the other task. Through the operation, the electronic device 101 may perform the other task which has a priority lower than the first priority but higher than the second priority while performing CIS communication.

In the illustrated example, two time periods 1710 and 1712 are shown. However, even when the first time period 1708 is divided into more than two time periods, embodiments of the disclosure are applicable.

FIG. 18 is a timing view illustrating another example of allocating time periods by an electronic device according to an embodiment.

Referring to FIG. 18, ISO_Interval 1802 may have a length of, e.g., 20ms (milliseconds) and may include at least one CIG event (e.g., CIG event x). For example, the electronic device 101 may use one CIG event (e.g., CIG event x) including one or more CIS links for a multi-channel audio service.

For example, for a two-channel audio service, CIG event x may include a CIS event (e.g., CIS1 event x) for CIS1 (e.g., the first CIS link 506) and a CIS event (e.g., CIS2 event x) for CIS2 (e.g., the second CIS link 508). In an embodiment, CIS1 event x and CIS2 event X may not overlap but abut each other. Although not shown, in another embodiment, CIS1 event x and CIS2 event x may partially overlap each other.

In an embodiment, the electronic device 101 may determine the amount of resources that may be allocated to the first external electronic device 202 and the second external electronic device 204 except for the minimum essential operation (e.g., BLE scan or BLE advertising) of the frequency band used for CIS communication. As an embodiment, the first time period 1806 may mean the amount of resources available for CIS1 event x. When NSE=10, CIS1 event x in ISO_Interval 1802 may include 10 subevents, and each subevent may have a uniform time interval 1810 determined by the Sub_Interval parameter.

In an embodiment, the electronic device 101 may divide the first time period 1804 corresponding to CIS1 event x into a second time period 1806 including one or more (e.g., six) first subevents corresponding to the first priority (e.g., having a priority value of '15') and a third time period 1808 including one or more (e.g., four) second subevents corresponding to the second priority (e.g., having a priority value of '7'). In an embodiment, the second time period 1806 may be 5.304 ms, and the third time period 1808 may be 3.536 ms.

In an embodiment, CIS2 event x may also be configured similarly to CIS1 event x. The electronic device 101 may divide the time period 1812 corresponding to CIS2 event x into a time period 1814 including one or more (e.g., six) first subevents corresponding to the first priority (e.g., having a priority value of '15') and a time period 1816 including one or more (e.g., four) second subevents corresponding to the second priority (e.g., having a priority value of '7'). In an embodiment, the length of the time period 1814 may be 5.304 ms, and the length of the time period 1816 may be 3.536 ms.

In an embodiment, the electronic device 101 may calculate the time period (including, e.g., the time period 1806 and the time period 1808) corresponding to CIG1 event x, which is the maximum resource available for CIS communication in ISO_Interval 1802, as follows. (e.g., the data transmission rate is 96 kbps)

$$884\mu s \times 10 \times 2 = 17.680\text{ms}$$

The calculated maximum resource 17.680 ms may be 88.4% of ISO_Interval 1802.

A second resource (including the time period 1806 and the time period 1814) of the first priority corresponding to CIS1 event x and CIS2 event x may occupy a time period of 53.04% of ISO_Interval 1802. The third resource of the second priority (including the time period 1808 and the time period 1816) may occupy a time period of 35.36% of ISO_Interval 1802.

In an embodiment, the second time period 1806 corresponding to the second resource of the first priority may be preferentially used for CIS communication. In an embodiment, the electronic device 101 may perform a first CIS task (e.g., initial transmission of a CIS data packet) in a second time period 1806. In an embodiment, the third time period 1808 corresponding to the third resource of the second priority may be used for another task (e.g., the third task). In an embodiment, when the third task is generated (or scheduled) in the third time period 1808, the electronic device 101 may perform the third task in the third time period 1808. In an embodiment, when the third task has a higher priority (e.g., priority value '9') than the second priority, the electronic device 101 may perform the third task in the third time period 1808, otherwise may not perform the third task. When the third task is determined not to be performed, and the second CIS task (e.g., transmission or retransmission of a CIS data packet) that needs to be performed in the third time period 1808 exists, the electronic device 101 may perform the second CIS task in the third time period 1808.

In an embodiment, the ISO interval 1802 may include the remaining time period 1820 except for the time period 1804 corresponding to CIS1 event x and the time period 1812 corresponding to CIS2 event x, and the remaining time period 1820 may be used for, e.g., Bluetooth concurrency operation or Wi-Fi operation.

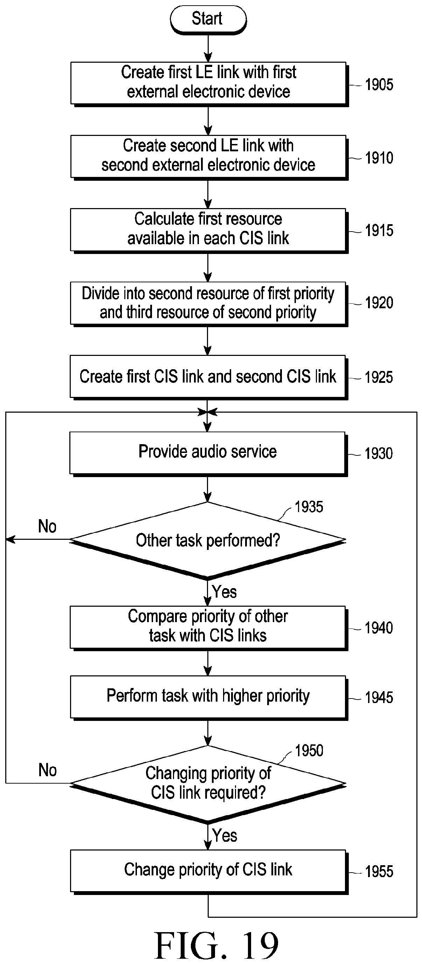

FIG. 19 is a flowchart illustrating a procedure for a 2-channel audio service according to an embodiment. At least one of the shown operations may be performed by the processor (e.g., the processor 120) of the source electronic device (e.g., the electronic device 101). At least one of the operations described below may be omitted, modified, or reordered according to various embodiments.

Referring to FIG. 19, the electronic device 101 (e.g., the processor 120) may perform a BLE scan (e.g., operation 414 of FIG. 4) to search for any external electronic device. In operation 1905, the electronic device 101 (e.g., the processor 120) may receive an advertising packet (e.g., the advertising packet 412) from the first external electronic device (e.g., the first external electronic device 202) through the BLE scan and create (or establish) a first LE communication link (e.g., the first ACL link 502) with the first external electronic device 202. In operation 1910, the electronic device 101 (e.g., the processor 120) may receive an advertising packet (e.g., the advertising packet 412) from the second external electronic device (e.g., the second external electronic device 204) through the BLE scan and create (or establish) a second LE communication link (e.g., the second ACL link 504) with the second external electronic device 204.

In an embodiment, the electronic device 101 (e.g., the processor 120) may output a user interface related to the first external electronic device 202 and/or the second external electronic device 204 through the display (e.g., the display module 160) based on information included in the received advertising packet(s).

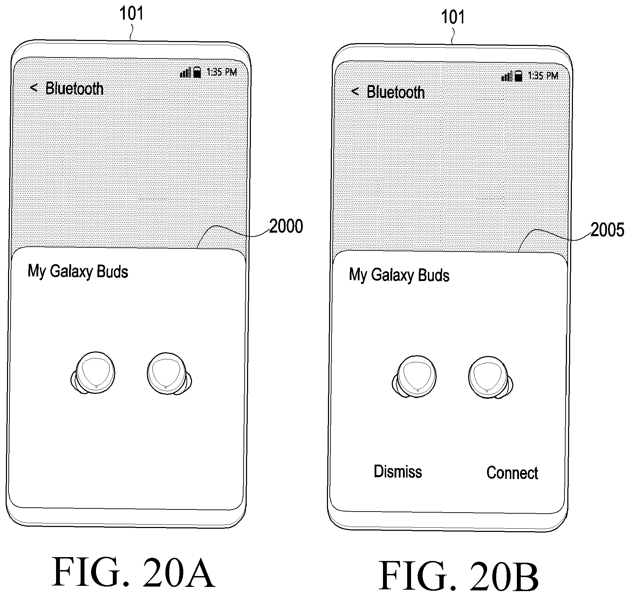

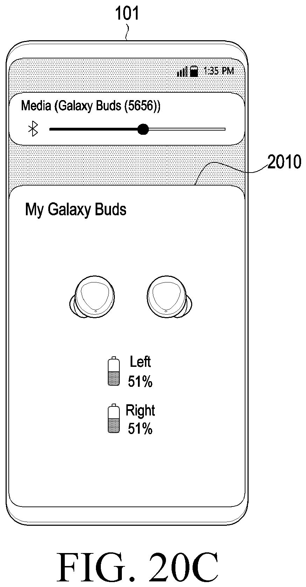

FIGS. 20A, 20B, and 20C illustrate various examples of a user interface displayed on an electronic device 101 according to an embodiment.

Referring to FIGS. 20A and 20B, the electronic device 101 may display a user interface 2000 or 2005 through the display module 160 based on a set condition and information included in the advertising packet received from the external electronic device (e.g., the first external electronic device 202 and/or the second external electronic device 204). In an embodiment, the user interface 2000 or 2005 may include device recognition information, and the device recognition information may be information created corresponding to the result of recognition of the external electronic device by the electronic device 101. For example, the electronic device 101 may create the model name (e.g., Galaxy Buds) of the external electronic device, as the device recognition information. In an embodiment, the device recognition information may indicate whether the external electronic device has previously paired with the electronic device 101 or the user account of the electronic device. In an embodiment, the user interface 2005 may further include an input menu (e.g., "Dismiss" and "Connect") for receiving an input as to whether to accept connection with the external electronic device.

Referring to FIG. 20C, the electronic device 101 may output, through the display module 160, a user interface 2010 for notifying the user of the external electronic device based on the advertising packet received from the external electronic device (e.g., the first external electronic device 202 and/or the second external electronic device 204). The user interface 2010 may include at least one of an image representing the shape of the external electronic device or text indicating the name of the external electronic device. In an embodiment, the user interface 2010 may further include an image representing the remaining battery (e.g., 51%) of the external electronic device.

Referring back to FIG. 19, in operation 1915, the electronic device 101 (e.g., the processor 120) may determine to start an audio service through CIS communication with the first external electronic device 202 and the second external electronic device 204 according to the user's intent (e.g., playing music player) or a designated policy and calculate a first resource available to the first CIS link (e.g., the first CIS link 506) with the first external electronic device 202 and the second CIS link (e.g., the second CIS link 508) with the second external electronic device 204. In an embodiment, the electronic device 101 (e.g., the processor 120) may perform operation 1915 to assign different priorities (e.g., first priority and second priority) to at least one of the first CIS link 506 or the second CIS link 508 while providing the audio service through CIS communication to the first external electronic device 202 and the second external electronic device 204.

In an embodiment, the electronic device 101 (e.g., the processor 120) may determine that the first time period (e.g., the first time period 1804 and/or the first time period 1812), meaning the time period corresponding to one CIS event in one CIG event, is the first resource, as the maximum amount of resources allocable to each of the first external electronic device 202 and the second external electronic device 204 except for the minimum essential operation (e.g., Bluetooth concurrency operation such as BLE scan or BLE advertising) of the frequency band used for CIS communication.

In an embodiment, the first resource may include the maximum resource (e.g., 60-100% of the ISO interval) determined to be used for CIS communication by the electronic device 101 among all the resources (e.g., ISO interval) available for CIS communication. In an embodiment, the first resource may be determined to be the remaining time period except for a designated time interval (e.g., 20-40%) for another task e.g., Bluetooth concurrency operation or Wi-Fi coexistence operation) of the ISO interval. In an embodiment, the first resource may be calculated based on the NSE and SE length set for the CIS link. In an embodiment, the first resource may be determined to be close to 100% of the ISO interval considering the NSE and SE length set for the CIS link.

In operation 1920, the electronic device 101 (e.g., the processor 120) may divide the first resource (e.g., the first time period 1804 or 1812) into at least two or more resources (e.g., the second time period 1806 and/or 1814 and the third time period 1808 and/or 1816), set a first priority to the second resource (e.g., the second time period 1806 and/or 1814) and set a second priority having a lower priority value, to the third resource (e.g., the third time period 1808 and/or 1816). For example, the second priority may have a lower priority value than the first priority. In an embodiment, the electronic device 101 (e.g., the processor 120) may divide the first resource into a second resource and a third resource according to a designated time ratio. In an embodiment, the electronic device 101 (e.g., the processor 120) may determine the second resource corresponding to a designated minimum time period of the first resource and determine the remaining time period as the third range.

In operation 1925, the electronic device 101 (e.g., the processor 120) may have parameters included in the CIS parameters (e.g., the control data 800), create a first CIS link 506 with the first external electronic device 202 and create a second CIS link 508 with the second external electronic device 204. In an embodiment, before performing operation 1915 and operation 1920, the first CIS link 506 and the second CIS link 508 may have already been established, and the electronic device 101 (e.g., the processor 120) may apply the second resource and third resource to the first CIS link 506 and the second CIS link 508 which have already been established, in operation 1925.

In operation 1930, the electronic device 101 (e.g., the processor 120) may provide the audio service to the first external electronic device 202 and the second external electronic device 204 through the first CIS link 506 and the second CIS link 508. In an embodiment, the electronic device 101 (e.g., the processor 120) may transmit audio data to the first external electronic device 202 using the second time period 1706 of the first CIS link 506 and, if possible, further use the third time period 1712 to transmit audio data to the first external electronic device 202. In an embodiment, if possible with the second time period 1724 of the second CIS link 508, the electronic device 101 (e.g., the processor 120) may further use the third time period 1726 to transmit audio data to the second external electronic device 204. Here, when the third time period 1726 is available may mean that there is data to be transmitted of the CIS task scheduled in the third time period 1726, and there is no other task having a higher priority than the second priority corresponding to the third time period 1726.

In operation 1935, the electronic device 101 (e.g., the processor 120) may identify that another task (e.g., the third task) which should be performed in the same frequency band as CIS communication has occurred (e.g., the data of the third task is stored in the task queue) while providing the audio service. In an embodiment, the electronic device 101 (e.g., the processor 120) may identify that the third task has been scheduled which includes at least one of the Bluetooth concurrency operation (e.g., at least one of maintaining BLE connection, BLE scan, or BLE advertising) or Wi-Fi coexistence operation. When there is no other task, the electronic device 101 (e.g., the processor 120) may return to operation 1930, continuously providing the audio service until no more audio data to be transmitted exists or termination of the audio service is requested.

In operation 1940, the electronic device 101 (e.g., the processor 120) may compare the priority of the third task with the priorities (e.g., the first priority and the second priority) of the CIS tasks to be performed through the CIS links. In operation 1945, the electronic device 101 (e.g., the processor 120) may preferentially perform tasks having higher priority. In an embodiment, when the third task has a higher priority than the second priority, the electronic device 101 (e.g., the processor 120) may perform the third task through the third resource.

In an embodiment, the electronic device 101 (e.g., the processor 120) may determine whether there is a CIS data packet (e.g., the first CIS data packet) (e.g., whether it is stored in the task queue) to be transmitted in one subevent (e.g., the first subevent) of the second time period 1710 and, if there is the first CIS data packet to be transmitted, determine whether there is another task (e.g., the third task) (e.g., whether the data to be transmitted of the third task is stored in the task queue) having a higher priority than the first priority designated for the second time period 1710. Unless the third task has a higher priority than the first priority, the electronic device 101 (e.g., the processor 120) may transmit the first CIS data packet in the first subevent of the second time period 1710.

In contrast, when the third task has a higher priority than the first priority, the electronic device 101 (e.g., the processor 120) may omit transmission of the first CIS data packet in the first subevent of the second time period 1710 and may transmit the data of the third task in the time period corresponding to the first subevent. In an embodiment, the first priority corresponding to the second time period 1710 may have a relatively high priority value (e.g., '15' of Table 2) among the communication tasks that may be performed by the electronic device 101 so that the electronic device 101 (e.g., the processor 120) may ensure CIS communication in the second time period 1710 as much as possible. For example, when the third task is an ACL backoff task and has a priority value (e.g., '16' of Table 2) higher than the first priority, the electronic device 101 (e.g., the processor 120) may perform the ACL backoff task without performing CIS transmission in the second time period 1710.

In an embodiment, the electronic device 101 (e.g., the processor 120) may determine whether there is a CIS data packet (e.g., the first CIS data packet) (e.g., whether it is stored in the task queue) to be transmitted in one subevent (e.g., the second subevent) of the third time period 1712 and, if there is the second CIS data packet to be transmitted, determine whether there is another task (e.g., the third task) (e.g., whether the data to be transmitted of the third task is stored in the task queue) having a higher priority than the second priority designated for the third time period 1712. Unless the third task has a higher priority than the second priority, the electronic device 101 (e.g., the processor 120) may transmit the second CIS data packet in the second subevent of the third time period 1712.

In contrast, when the third task has a higher priority than the second priority, the electronic device 101 (e.g., the processor 120) may omit transmission of the second CIS data packet in the second subevent of the third time period 1712 and may transmit the data of the third task in the time period corresponding to the second subevent. In an embodiment, the second priority corresponding to the third time period 1712 may have a priority value (e.g., '7' of Table 2) lower than the Bluetooth concurrency operation or Wi-Fi operation so that the electronic device 101 (e.g., the processor 120) may perform another task such as Bluetooth concurrency operation or Wi-Fi operation using the third time period 1712. In an embodiment, when the third task has the same priority as the second priority, the electronic device 101 (e.g., the processor 120) may determine to perform, in the third time period 1712, the earlier scheduled task (e.g., the task stored earlier in the task queue) of the third task and transmission of the second CIS data packet.

In operation 1950, the electronic device 101 (e.g., the processor 120) may determine whether it is required to change the priority (e.g., the first priority and/or the second priority) of the CIS task performed through the first CIS link 506 and the second CIS link 508 according to a designated rule or designated policy while providing the audio service. In an embodiment, the electronic device 101 (e.g., the processor 120) may determine whether to change the priority (e.g., the first priority and/or the second priority) of the CIS task considering at least one of the CIS policy, passage of time, communication status, or scheduling context. For example, the communication status may be related to at least one of the wireless environment, storage quantity of transmission queue, or number of retransmissions of the first CIS link 506 and the second CIS link 508. For example, the scheduling context may include at least one of the rate of creation of CIS data packets, frequency of generation of packets for Bluetooth concurrency operation, or rate of data traffic for Wi-Fi coexistence operation. In an embodiment, the electronic device 101 (e.g., the processor 120) may execute operation 1950 whenever each subevent starts or at each time when a designated number of subevents start. In an embodiment, operation 1950 may include the operation of changing the second priority and/or the time period (e.g., the first time period and/or the second time period) when the second priority is to be applied.

In an embodiment, when it is determined as a result of operation 1950 that changing priority is required, the electronic device 101 (e.g., the processor 120) may change the value of the first priority and/or the second priority to a higher or lower value in operation 1955. Thereafter, the electronic device 101 (e.g., the processor 120) may return to operation 1930, continuously providing the audio service according to the changed first priority and/or second priority. In an embodiment, the electronic device 101 (e.g., the processor 120) may provide information about the changed value of the first priority and/or second priority to the first external electronic device 202 and/or the second external electronic device 204.

In an embodiment, when changing the priority is not required as a result of operation 1950, the electronic device 101 (e.g., the processor 120) may return to operation 1930, continuously providing the audio service until no more audio data to be transmitted exists or termination of the audio service is requested.

In an embodiment, the first external electronic device 202 may transmit an advertising packet to allow the electronic device 101 to discover the first external electronic device 202. When the electronic device 101 receives an advertising packet of the first external electronic device 202, the first external electronic device 202 may create a first LE communication link (e.g., the first ACL link 502) with the electronic device 101 according to a request (e.g., the scan request message 416) of the electronic device 101. The first external electronic device 202 may connect the first CIS link (e.g., the first CIS link 506) defined by CIS parameters (e.g., the control data 800) allocated by the electronic device 101 to the electronic device 101 and receive the audio service from the electronic device 101 through the first CIS link 506. In an embodiment, the second external electronic device 204 may connect the electronic device 101 with the second CIS link 508 in a similar manner to that for the first external electronic device 202 and receive the audio service from the electronic device 101.

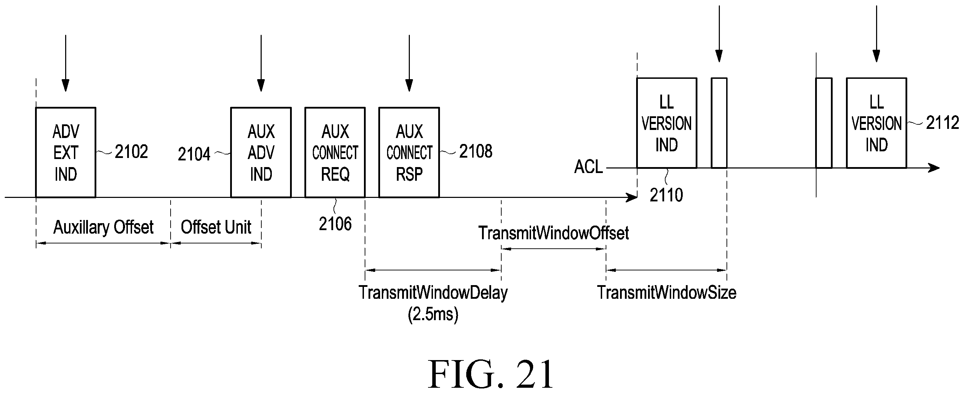

FIG. 21 is a view illustrating a procedure for generating an LE communication link by an electronic device according to an embodiment.

Referring to FIG. 21, the external electronic device (e.g., the first external electronic device 202) may transmit an advertising packet 2102 (e.g., ADV_EXT_IND) including advertisement data through the primary advertising channel and transmit an auxiliary advertisement packet 2104 (e.g., AUX_ADV_IND) including extended advertisement data through the secondary advertising channel. The first external electronic device 202 may receive the connection request packet 2106 (e.g., AUX_CONNECT_REQ) from the electronic device 101 through the secondary advertising channel and transmit a connection response packet 2108 (e.g., AUX_CONNECT_RSP) to the electronic device 101.

After transmitting the connection response packet 2108, the first external electronic device 202 may receive a version indication packet 2110 (e.g., LL_VERSION_IND) including version information from the electronic device 101 through the first LE communication link (e.g., the first ACL link 502) and transmit a version indication packet 2112 including its own version information to the electronic device 101. The electronic device 101 and the first external electronic device 202 may create a first LE communication link by exchanging the packets of FIG. 21 and transmit/receive data through the first LE communication link.

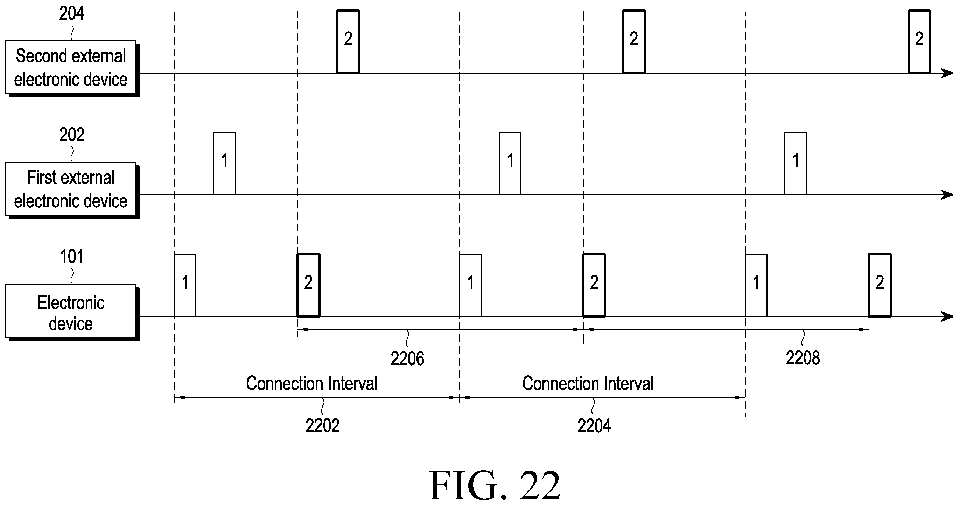

FIG. 22 is a view illustrating a procedure for communicating through a plurality of LE communication links by an electronic device according to an embodiment.

Referring to FIG. 22, e.g., as shown in FIG. 20, the electronic device 101 may create a first LE communication link (e.g., the first ACL link 502) with the first external electronic device 202 and maintain the first LE communication link while creating a second LE communication link (e.g., the second ACL link 504) with the second external electronic device 204. In an embodiment, the electronic device 101 may transmit data packets through the first ACL link to the first external electronic device 202 during each connection interval (e.g., the connection interval 2202 or connection interval 2204). In an embodiment, the electronic device 101 may transmit data packets to the second external electronic device 204 through the second ACL link during each connection interval (e.g., the connection interval 2206 or connection interval 2208). For example, the connection interval 2202 or connection interval 2204 may include at least one transmission occasion for the first external electronic device 202, and the connection interval 2206 or connection interval 2208 may include at least one transmission occasion for the second external electronic device 204.

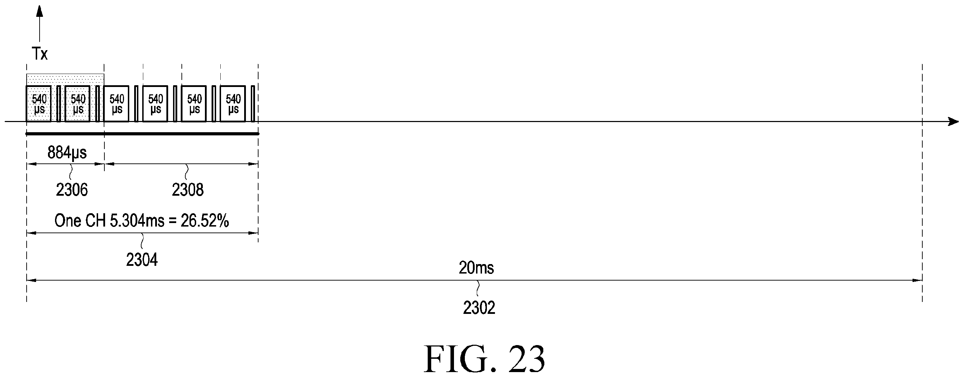

FIG. 23 is a view illustrating an operation of determining a resource for a media service according to an embodiment. Here, as an example, a one-channel media type of audio service is exemplified.

Referring to FIG. 23, the electronic device 101 may maintain a CIS link (e.g., the first CIS link 506) for performing the audio service and calculate the first time period 2304 corresponding to the first resource available for the first CIS link 506 in the ISO interval 2302. In an embodiment, the first time period 2304 may include the maximum resource available for the first CIS link 506.

In an embodiment, the electronic device 101 may determine the first time period 2304 according to at least one of the service type (e.g., music playback) for the electronic device 101 and external electronic device (e.g., the first external electronic device 202), communication status, or scheduling. As an example, the electronic device 101 may calculate the first time period 2304 considering at least one CIS parameter (e.g., at least one of CIS count, ISO interval, FT, BN, SE length, or NSE). As an example, the electronic device 101 may determine the number (e.g., six) of subevents to be included in the first time period 2304.

As an example, when the user requests to play music in a state in which one external electronic device (e.g., the first external electronic device 202) is connected to the electronic device 101, the electronic device 101 may set CIS parameters for a media type of audio service providing a transmission rate of 96kbps and a maximum latency of 100ms. For example, the CIS parameters may include ISO interval = 20 ms, BN = 2, FT = 5, SE length = 884 $\mu$s, and NSE = 6. Based on the CIS parameters, the maximum resource available for CIS communication may be calculated as NSE $\times$ SE length / ISO interval. As an example, the first time period 2304 corresponding to the maximum resource required for CIS communication with the first external electronic device 202 is 884 $\mu$s $\times$ 6 / 20 ms = 5.304 ms, which is 26.52% of the ISO interval 2302. The first time period 2304 may include six subevents each having a length of 884 $\mu$s.

In an embodiment, the electronic device 101 may determine the second time period 2306 including the first two subevents within the first time period 2304 as the second resource corresponding to the first priority. The third time period 2308 corresponding to the remaining four subevents may be determined as a third resource corresponding to a second priority lower than the first priority. As an example, the electronic device 101 may determine the second time period 2306 and/or third time period 2308 considering at least one of a designated rule (e.g., the time ratio for the CIS event), communication status of CIS link, or scheduling context. For example, the communication status may be related to the number of retransmissions of the first CIS link 506 and the second CIS link 508. For example, the scheduling context may include at least one of the rate of creation of CIS data packets, frequency of generation of packets for Bluetooth concurrency operation, or rate of data traffic for Wi-Fi coexistence operation.

In an embodiment, the electronic device 101 may transmit CIS data packets using the first subevent and second subevent in the second time period 2306. In the third time period 2308 (e.g., the third subevent), the electronic device 101 may determine whether another task (e.g., at least one of the Bluetooth concurrency operation or Wi-Fi coexistence operation) in the same frequency band as CIS communication needs to be performed. When the other task is needed, the electronic device 101 may perform the other task in the third time period 2308. In this case, the third or subsequent subevents included in the third time period 2308 may not be used for CIS communication.

FIG. 24 is a view illustrating an operation of determining a resource for an conversational service according to an embodiment. Here, a two-channel conversational service is exemplified.

Referring to FIG. 24, the electronic device 101 may connect two external electronic devices (e.g., the first external electronic device 202 and the second external electronic device 204) with the CIS links for two channels, respectively, and perform voice call. For example, the CIS links may include a first CIS link 506 for a first channel CH1 (e.g., left channel) and a second CIS link 508 for a second channel CH2 (e.g., right channel).

In an embodiment, the electronic device 101 may determine CIS parameters for a conversational type of audio service providing bidirectional 32kbps and a maximum latency of 10ms. For example, the CIS parameters may include ISO interval = 10 ms, BN = 1, FT = 1, SE length = 740 $\mu$s, and NSE = 3. Based on the CIS parameters, the time period 2404 corresponding to the first resource available for the two CIS links 506 and 508 is 740 $\mu$s $\times$ 3 $\times$ 2/10 ms = 4.44 ms, which is 44.4% of the ISO interval 2402. As an example, the time period 2404 may include six subevents each having a length of 740 $\mu$s.

The time period 2404 may include a time period 2406 including (e.g., three) subevents for the first channel and a time period 2408 including (e.g., three) subevents for the second channel. The time period 2406 may be a first time period corresponding to the first CIS link 506 for the first channel, and the time period 2408 may be a first time period corresponding to the second CIS link 508 for the second channel.

In an embodiment, the electronic device 101 may determine that the second time period 2410 corresponding to the first subevent in the time period 2406 is the second resource corresponding to the first priority and that the third time period 2412 corresponding to the remaining two subevents is the third resource corresponding to the second priority. The third time period 2412 may include the second and third subevents for the first CIS link 506.

In an embodiment, the electronic device 101 may transmit the CIS data packet of the first channel to the first external electronic device 202 using the first subevent of the first CIS link 506 corresponding to the second time period 2410. In the third time period 2412 (e.g., the second subevent and third subevent of the first CIS link 506), the electronic device 101 may determine whether another task (e.g., at least one of the Bluetooth concurrency operation or Wi-Fi coexistence operation) in the same frequency band as CIS communication needs to be performed. When the other task is needed, the electronic device 101 may perform the other task in the third time period 2412. In this case, the subevents included in the third time period 2412 may not be used for CIS communication.

In an embodiment, the electronic device 101 may determine that the second time period 2414 corresponding to the first subevent in the right time period 2408 is the second resource corresponding to the first priority and that the third time period 2416 corresponding to the remaining two subevents is the third resource corresponding to the second priority. The third time period 2416 may include the second and third subevents for the second CIS link 508. A description of the operation of the electronic device 101 in the time period 2408 may be similar to that in the time period 2406.

In an embodiment, the electronic device may perform a Bluetooth concurrency operation or Wi-Fi coexistence operation using the third resource (e.g., the third time period 2412) for the second priority except for the second resource (e.g., the second time period 2410) which may be determined as a predetermined ratio or a predetermined length of the first resource (e.g., the first time period 2406) available for CIS communication. As an embodiment, the Bluetooth concurrency operation may include at least one of a Bluetooth inquiry, Bluetooth inquiry scan, Bluetooth paging, Bluetooth page scan, BLE scan, BLE advertising, Bluetooth connection maintaining, BLE connection maintaining, or channel scan. The Wi-Fi coexistence operation may include Wi-Fi data transmission performed in the same frequency band as CIS communication.

In an embodiment, the ISO interval 2402 may include the remaining time period 2418 except for the time period 2404. When the remaining time period 2418 is not zero, it may be used for at least one of the Bluetooth concurrency operation or Wi-Fi coexistence operation. In an embodiment, since the Bluetooth concurrency operation or Wi-Fi coexistence operation may be performed in the third time period (e.g., the time period 2412 and the time period 2416), not the remaining time period 2418, the electronic device 101 (e.g., the processor 120) may maximally allocate the time period 2404 in the ISO interval 2402, thus minimizing the remaining time period 2418.

In an embodiment, the electronic device 101 may determine that the time period (e.g., the time periods 2410 and 2414) corresponding to the first resource is as large a value as possible to process another task scheduled during CIS communication. Table 1 shows an example of the maximum resource necessary for CIS communication (e.g., including one or more CIS links) in bidirectional mode.

[Table 1]

| Mode | SE length | NSE | Reserved resource | NSE | Reserved resource |
|---|---|---|---|---|---|
| 116↔96 | 1480 | 3 | 8730 (87.3%) | 2 | 5770 (57.5%) |
| 116↔64 | 1320 | 3 | 7770 (77.7%) | 2 | 5130 (51.3%) |
| 116↔32 | 1160 | 3 | 6810 (68.1%) | 2 | 4490 (44.9%) |
| 96↔96 | 1380 | 3 | 8130 (81.3%) | 2 | 5370 (53.7%) |
| 96↔64 | 1220 | 3 | 7170 (71.7%) | 2 | 4730 (47.3%) |
| 96↔32 | 1060 | 3 | 6210 (62.1%) | 2 | 4090 (40.9%) |
| 64↔96 | 1220 | 3 | 7170 (71.7%) | 2 | 4730 (47.3%) |
| 64↔64 | 1060 | 3 | 6210 (62.1%) | 2 | 4090 (40.9%) |
| 64↔32 | 900 | 3 | 5250 (52.5%) | 2 | 3450 (34.5%) |
| 32↔96 | 1060 | 3 | 6210 (62.1%) | 2 | 4090 (40.9%) |
| 32↔64 | 900 | 3 | 5250 (52.5%) | 2 | 3450 (34.5%) |
| 32↔32 | 740 | 3 | 4290 (42.9%) | 2 | 2810 (28.1%) |

In Table 1, the mode may mean CIS communication using any one transmission rate among 116kbps, 96kbps, 64kbps, or 32kbps and any one reception rate among 96kbps, 64kbps, or 32kbps. In each mode, the SE length may be calculated based on the packet transmission duration (Tx packet duration) corresponding to the transmission rate, the packet reception duration (Rx packet duration) corresponding to the reception rate, and reserved duration (e.g., $300\mu s$).

As an example, for a transmission rate of 116 kbps, the packet transmission duration may be $640\mu s$. For a transmission rate of 96 kbps, the packet transmission duration may be $540\mu s$. For a transmission rate of 64 kbps, the packet transmission duration may be $380\mu s$. For a transmission rate of 32 kbps, the packet transmission duration may be $220\mu s$. As an example, for a reception rate of 96 kbps, the packet reception duration may be $540\mu s$. For a reception rate of 64 kbps, the packet reception duration may be $380\mu s$. For a reception rate of 32 kbps, the packet reception duration may be $220\mu s$.

For example, the SE length corresponding to the packet transmission duration of $220\mu s$ and the packet reception duration of $220\mu s$ may be $740\mu s$. The maximum resource required for CIS communication for NSE=3 may correspond to $4290\mu s$ (42.9%).

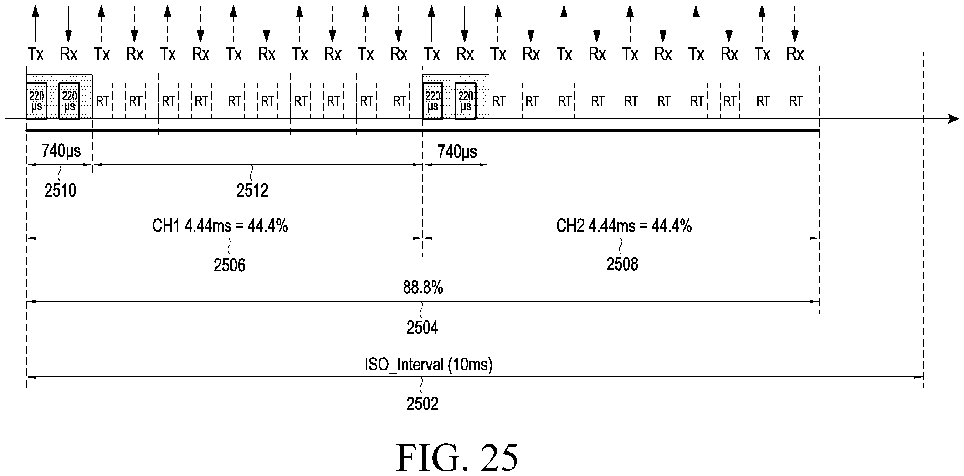

FIG. 25 is a view illustrating an example of maximum resource allocation according to an embodiment.

Referring to FIG. 25, the length of the ISO interval 2502 for CIS communication may be 10 ms, and the time period 2504 corresponding to the maximum resource that may be used for CIS communication within the ISO interval 2502 may be determined to be 8.88ms (i.e., 88.8%) based on, e.g., NSE,, SE length and CIS count. The time period 2504 may include a time period 2506 (=4.44ms) including (e.g., six) subevents for the first CIS link 506 of the first channel CH1 (e.g., left channel) and a time period 2508 (=4.44ms) including (e.g., six) subevents for the second CIS link 508 of the second channel CH2 (e.g., the right channel). Each subevent may include one transmission and one reception and may have a length of, e.g., 740$\mu$s.

The electronic device 101 may determine that the second time period 2510 corresponding to the first subevent in the time period 2506 is the second resource corresponding to the first priority and that the third time period 2512 corresponding to the remaining subevents is the third resource corresponding to the second priority. In an embodiment, upon failing in data transmission in the second time period 2510, the electronic device 101 may determine that the subevents for the third time period 2512 may be used for retransmission (RT) of data.

In an embodiment, the electronic device 101 may determine the time period (e.g., the second time period 2510) that may essentially be used for CIS communication according to per-task priorities of the time period 2504 determined as the maximum resource for CIS communication while providing the audio service or before starting the audio service. In an embodiment, the second time period 2510 may be determined according to a designated length or time ratio for the time period 2506.

A description of the operation of the electronic device 101 in the time period 2508 may be similar to that in the time period 2506.

In an embodiment, the per-task priorities may include a first priority and a second priority for CIS communication, and the first priority may have a higher priority value than the second priority. In an embodiment, the priorities (e.g., the first priority and the second priority) may be varied depending on the scheduling context of the electronic device 101 or the wireless environment.

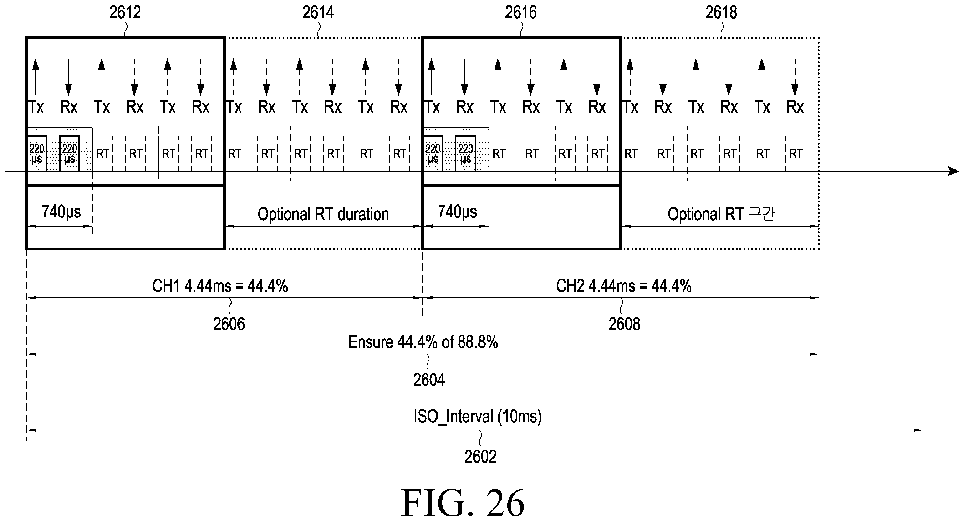

FIG. 26 is a view illustrating an example of resource division for CIS communication according to an embodiment.

Referring to FIG. 26, the electronic device 101 may allocate the time period 2604 corresponding to the maximum resource for CIS communication as 88.8% of the ISO interval 2602. The time period 2604 may be divided into a time period 2606 (=44.4%) for the first channel CH1 (e.g., left channel) and a time period 2608 (=44.4%) for the second channel CH2 (e.g., right channel). As an example, the time period 2606 and the time period 2608 may each include 6 subevents.

In an embodiment, the electronic device 101 may determine the time period (e.g., the time period 2612 and/or the time period 2616) corresponding to the first priority of the time period 2604 according to a designated time ratio (e.g., 50%). For example, for the first CIS link 506, the electronic device 101 may allocate the second time period 2612, which is a half (=22.2%) of the time period 2606, as the first priority and the third time period 2614, which is the other half (=22.2%), as the second priority lower than the first priority. For example, for the second CIS link 506, the electronic device 101 may allocate the second time period 2616, which is a half (=22.2%) of the time period 2608, as the first priority and the third time period 2618, which is the other half (=22.2%), as the second priority lower than the first priority.

In the illustrated example, the second time period 2612 and the third time period 2616 ensured for CIS communication each may include three subevents. For example, the second time period 2612 may include the first three subevents of the time period 2606, and the third time period 2616 may include the first three subevents of the time period 2608. For example, the electronic device 101 may fail to transmit data using the first subevent of the second time period 2612 and perform retransmission (RT) of the data in the second subevent and the third subevent of the second time period 2612. If transmission of the data fails during the second time period 2612 and there is no other task having a higher priority, at least one subevent of the third time period 2614 may be used for retransmission of the data. In contrast, if another task having a higher priority than the second priority corresponding to the third time period 2614 exists, the electronic device 101 does not perform the data retransmission in the third time period 2614 but may perform the other task.

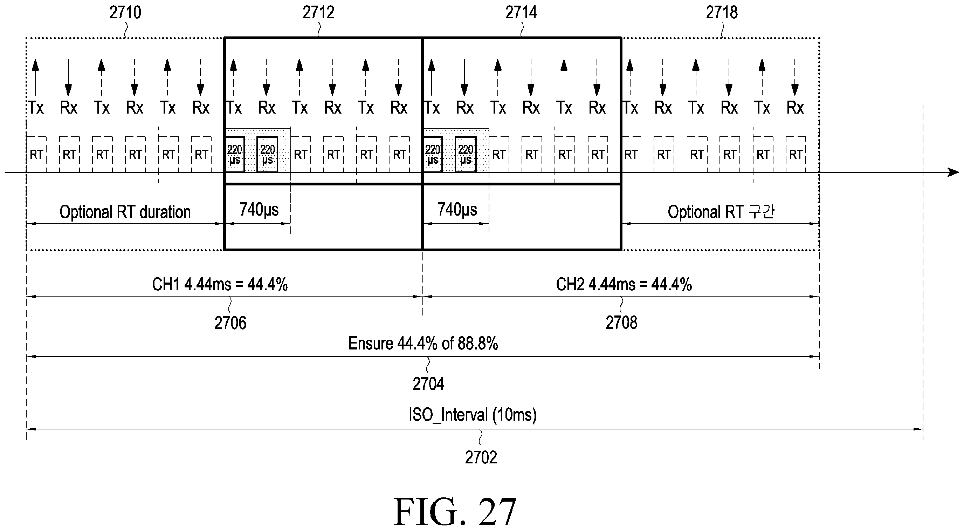

FIG. 27 is a view illustrating another example of resource division for CIS communication according to an embodiment.

Referring to FIG. 27, the electronic device 101 may allocate the time period 2704 corresponding to the maximum resource for CIS communication as 88.8% of the ISO interval 2702. The time period 2704 may be divided into a time period 2706 (=44.4%) for the first channel CH1 (e.g., left channel) and a time period 2708 (=44.4%) for the second channel CH2 (e.g., right channel). As an example, each of the time period 2706 and the time period 2708 may include six subevents having a length of 740$\mu$s.

In an embodiment, the time period 2712 used to ensure CIS communication of the first channel may include the last three subevents (e.g., subevents #3, 4, and 5) in the time period 2706, and the time period 2714 used to ensure CIS communication of the second channel may include the first three subevents (e.g., subevents #0, 1, and 2) in the time period 2708. The electronic device 101 may use the successively continuous time period 2712 and time period 2714 to transmit first channel audio data (e.g., left audio data) and second channel audio data (e.g., right audio data).

In an embodiment, the time period 2710 corresponding to the remaining front subevents (e.g., subevents #0, 1, and 2) of the time period 2706 and the time period 2718 corresponding to the remaining rear subevents (e.g., subevents #3, 4, and 5) of the time period 2708 may be used for CIS communication or other tasks (e.g., Bluetooth concurrency operation or Wi-Fi coexistence operation) according to the per-task priorities.

For example, the electronic device 101 may fail in data transmission using the first subevent (e.g., subevent #3) of the time period 2712 and perform retransmission (RT) of data in the second and third subevents (e.g., subevents $4 and 5) of the time period 2712. When failing in data transmission during the time period 2712, if there is no other task having a higher priority, the first three subevents (e.g., subevents #0, 1, and 2) of the next ISO interval (not shown) may be used for data retransmission. In contrast, if there is another task having a higher priority in the first three subevents of the next ISO interval, the electronic device 101 does not perform data retransmission but may perform the other task.

For example, upon failing to transmit the data during the time period 2714, if there is no other task having a higher priority, the electronic device 101 may use at least one subevent of the time period 2718 for data retransmission. In contrast, if another task having a higher priority than the second priority corresponding to the time period 2718 exists, the electronic device 101 does not perform the data retransmission in the time period 2718 but may perform the other task.

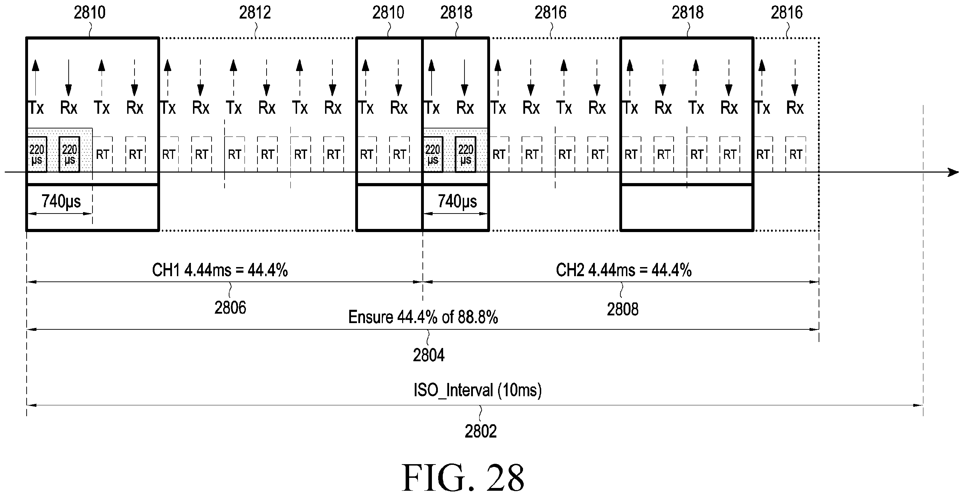

FIG. 28 is a view illustrating an example of resource division according to a time ratio according to an embodiment.

Referring to FIG. 28, the electronic device 101 may allocate the time period 2804 corresponding to the maximum resource for CIS communication as 88.8% of the ISO interval 2802. The time period 2804 may be divided into a time period 2806 (=44.4%) for the first channel CH1 (e.g., left channel) and a time period 2808 (=44.4%) for the second channel CH2 (e.g., right channel). In an example, each of the time period 2806 and the time period 2808 may include six subevents having a length of $740 \mu s$.

In an embodiment, the time period 2810 used for ensuring CIS communication of the first channel may include the first two subevents (e.g., subevents #0 and 1) and the last subevent (e.g., subevent #5) in the time period 2806, and the time period 2818 used for ensuring CIS communication of the second channel may include the first subevent (e.g., subevent #0) and the fourth and fifth subevents (e.g., subevents #3 and 4) in the time period 2808. The electronic device 101 may transmit first channel audio data (e.g., left audio data) using the subevents (e.g., subevents #0, 1, and 5) of the time period 2806 and transmit second channel audio data (e.g., right audio data) using the subevents (e.g., subevents #0, 3, and 4) of the time period 2088.

In an embodiment, the time period 2812 corresponding to the remaining subevents (e.g., subevents #2, 3, and 4) of the time period 2806 and the time period 2816 corresponding to the remaining subevents (e.g., subevents #1, 2, and 5) of the right time period 2808 may be used for CIS communication or other tasks (e.g., Bluetooth concurrency operation or Wi-Fi coexistence operation) according to the per-task priorities.

In an embodiment, the electronic device 101 may create a priority table defining the priority for each task of communication including CIS communication and store the priority table in the memory (e.g., the memory 130). The priority table may include per-task priorities for a plurality of tasks. Each priority may be expressed as a decimal value or a hexadecimal value to be compared with the priorities of other tasks.

In an embodiment, the electronic device 101 may give a higher priority to a task that is more important to the user and change at least one of the per-task priorities according to at least one of the passage of time, communication status, or scheduling context. For example, the CIS task for CIS communication is periodically executed and intended for the audio service targeting realtime data transmission considering the maximum latency and may thus have a higher priority than the other Bluetooth tasks (e.g., Bluetooth concurrency operation).

In an embodiment, the electronic device 101 may assign different priorities, e.g., first priority and second priority, to CIS tasks. The CIS task of the first priority (higher priority) may include CIS transmission using at least one of the subevents included in the time period (e.g., the second time period 1710 of FIG. 17) ensuring CIS communication. The CIS task of the second priority (lower priority) may include CIS transmission using at least one of the subevents included in the remaining time period (e.g., the third time period 1712 of FIG. 17).

Table 2 shows an example priority table defining the priorities for BT concurrency tasks.

[Table 2]

| task | priority |
| --- | --- |
| Page Scan | 9 |
| Page | 13 |
| Inquiry Scan | 9 |
| Inquiry | 5 |
| BLE Scan duty full | 3 |
| BLE Scan duty 50% over | 5 |

(continued)

| task | priority |
|---|---|
| BLE Scan duty 50% under | 9 |
| BLE Advertising | 7 |
| BLE Advertising Extension | 5 |
| BT Connection Active mode - Idle | 5 |
| BT Connection Active mode - eSCO/SCO | 15 |
| BT Connection Active mode - ACL Back off | 16 |
| BT sniff mode | 13 |
| BT sniff mode - ACL Back off | 15 |
| BT Connection - CI | 13 |
| BT Connection-MD | 9 |
| BT Connection - ACL Back off | 16 |
| BLE CIS - High Priority | 15 |
| BLE CIS - Low Priority | 7 |

Referring to Table 2, CIS communication may be divided into a first CIS task having a higher priority (e.g., 15) and a second CIS task having a lower priority (e.g., 7). As an embodiment, the first CIS task may include CIS transmission using at least one of the first N1 subevents (e.g., subevents #0 and 1) in one CIS event including N subevents. As an example, the second CIS task may include CIS transmission using at least one of the last N2 subevents in one CIS event. (N = N1 + N2)
In an embodiment, upon detecting the need to perform another task (e.g., page scan or inquiry scan) having a higher priority than the priority value (e.g., 7) of the second CIS task in the third time period, the electronic device 101 may not transmit CIS data packets in the subevents of the third time period but perform the other task during the third time period. In an embodiment, upon detecting scheduling of another task (e.g., inquiry) having a lower priority than the priority value (e.g., 7) of the second CIS task in the third time period, the electronic device 101 may transmit CIS data packets in the subevents of the third time period while delaying or omitting inquiry.

Likewise, in an embodiment, upon detecting the need to perform another task (e.g., ACL backoff) having a higher priority than the priority value (e.g., 15) of the first CIS task in the second time period, the electronic device 101 may not transmit CIS data packets in the subevents of the second time period but perform the other task during the second time period. In an embodiment, upon detecting scheduling of another task (e.g., page or page scan) having a lower priority than the priority value (e.g., 15) of the first CIS task in the second time period, the electronic device 101 may transmit CIS data packets in the subevents of the second time period while delaying or omitting page or page scan.

In an embodiment, the CIS events for CIS communication may at least partially overlap each other. As an example, the overlap between at least a portion of the first CIS event and at least a portion of the second CIS event may be referred to as a hybrid arrangement or hybrid packing in the sense of having both the features of the sequential arrangement (e.g., the sequential arrangement of FIG. 13) and the interleaved arrangement (e.g., the interleaved arrangement of FIG. 14). In an embodiment, the electronic device 101 may set (e.g., schedule) CIS events according to the hybrid arrangement based on meeting a designated condition.

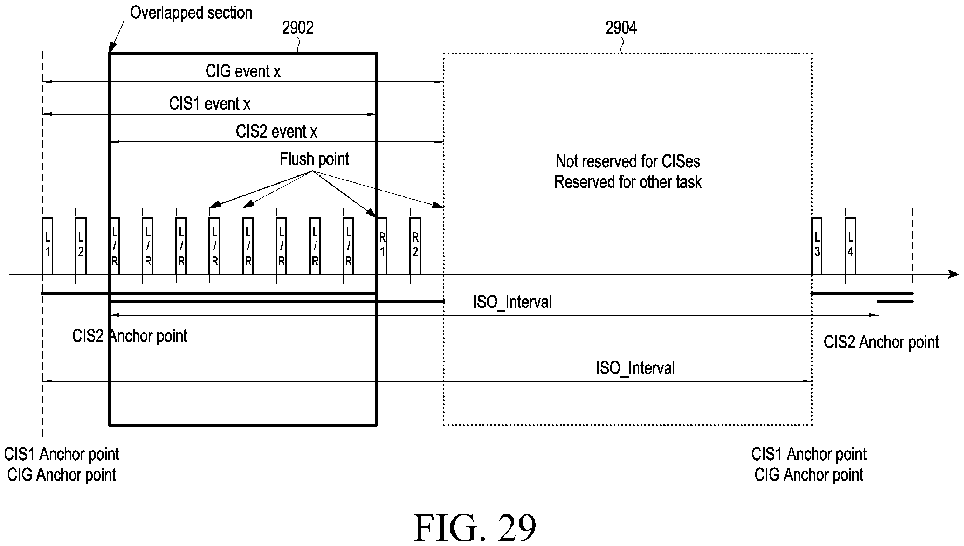

FIG. 29 is a view illustrating an example of resource division applied to a hybrid arrangement according to an embodiment.

Referring to FIG. 29, CIG event x may include CIS 1 event x and CIS2 event x, and CIS1 event x and CIS2 event x, each, may include, e.g., 10 subevents. CIS2 event x may partially overlap part of CIS1 event x. In an embodiment, the length (e.g., the number of subevents) of the overlapping section 2902 of CIS1 event x and CIS2 event x may be determined according to various conditions.

The overlapping section 2902 of CIS1 event x and CIS2 event x may include, e.g., eight subevents, and be set as the second time period corresponding to the first priority capable of ensuring CIS communication. In an embodiment, the time period 2904 which is not included in CIS1 event x or CIS2 event x may not be reserved for CIS communication but be used for another task (e.g., Bluetooth concurrency operation or Wi-Fi coexistence operation).

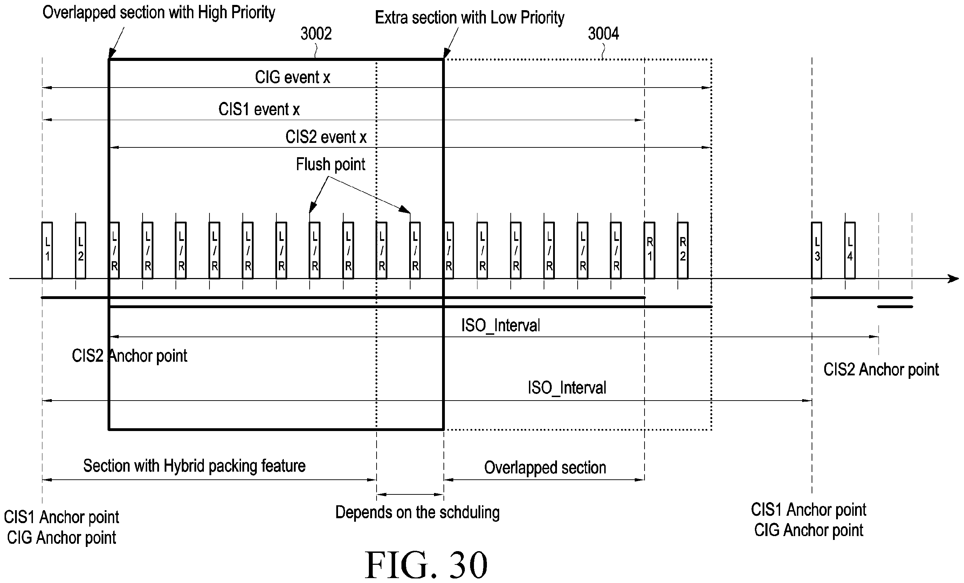

FIG. 30 is a view illustrating another example of resource division applied to a hybrid arrangement according to an embodiment.

Referring to FIG. 30, CIG event x may include CIS1 event x and CIS2 event x, and CIS1 event x and CIS2 event x, each, may include, e.g., 18 subevents. CIS2 event x may at least partially overlap CIS1 event x. In an embodiment, the time period 3002 including at least some first subevents (e.g., first ten) among the (e.g., 16) overlapping subevents of CIS1 event x and CIS2 event x may be set as the second time period corresponding to the first priority capable of ensuring CIS communication.

In an embodiment, the time period 3004 including some subevents (e.g., the last eight) among the (e.g., 16) overlapping subevents of CIS1 event x and CIS2 event x and the last subevents (e.g., the last two) of CIS2 event x may be set as the third time period corresponding to the second priority lower than the first priority. The time period 3004 may be used for the second CIS task having the second priority or for another task (e.g., Bluetooth concurrency operation or Wi-Fi coexistence operation) having a higher priority than the second priority. In an embodiment, the time period 3002 and the time period 3004 may partially (e.g., in two subevents) overlap each other. The two overlapping subevents may be used for the first CIS task, the second CIS task, or another task according to the scheduling of the electronic device 101 (e.g., the processor 120).

In an embodiment, the subevents (e.g., the first two) of CIS1 event x not overlapping CIS2 event x and/or the subevents (e.g., the last two) of CIS2 event x not overlapping CIS1 event x may be set as the second priority. In an embodiment, the subevents (e.g., the first two) of CIS1 event x not overlapping CIS2 event x and/or the subevents (e.g., the last two) of CIS2 event x not overlapping CIS1 event x may be set as the first priority.

In an embodiment, all of the overlapping subevents of CIS1 event x and CIS2 event x may be set as the second time period corresponding to the first priority, and the non-overlapping subevents (e.g., the first two subevents of CIS1 event x and the last two subevents of CIS2 event x) may be set as the third time period corresponding to the second priority. In an embodiment, the second time period may include at least some of the overlapping subevents of CIS1 event x and CIS2 event x and at least some of the non-overlapping subevents, and the third time period may correspond to the remaining subevents not set as the second range. Other various embodiments are possible.

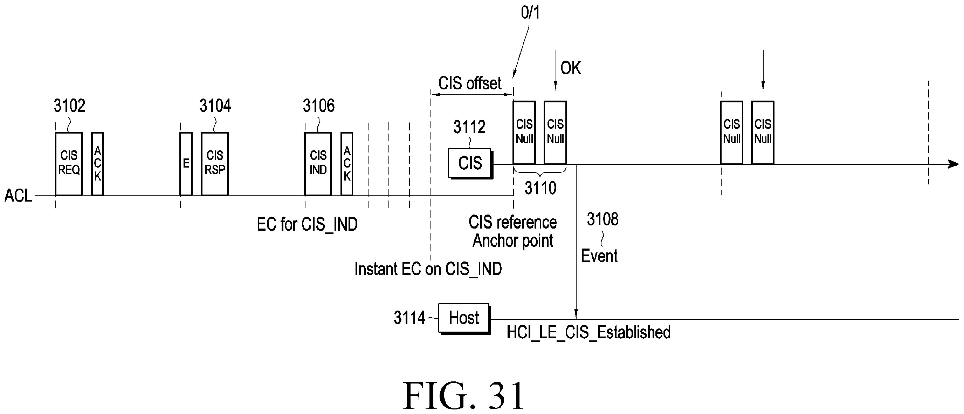

FIG. 31 is a view illustrating an operation of providing an audio service through CIS links according to an embodiment.

Referring to FIG. 31, the electronic device 101 may connect an external electronic device (e.g., the first external electronic device 202) with an ACL link (e.g., the first ACL link 502) and establish a CIS link (e.g., the first CIS link 506) by exchanging a CIS_REQ packet 3102 (e.g., CIS_REQ of operation 710), a CIS_RSP packet 3104 (e.g., CIS_RSP of operation 712), and a CIS_IND packet 3106 (e.g., CIS_IND of operation 714) through the ACL link.

In an embodiment, the processor 120 of the electronic device 101 may include a CIS module 3112 and a host 3114. The electronic device 101 (e.g., the CIS module 3112) may identify that the first CIS link 506 is available by exchanging CIS null packets 3110 (e.g., the CIS null PDUs of operations 716, 718, and 720) through the first CIS link 506 and transmit a human computer interface (HCI) event message 3108 (e.g., HCI_LE_CIS_Established) to indicate establishment of the first CIS link 506 to the host 3114.

In an embodiment, the event message may include CIS parameters applied to the first CIS link 506, e.g., ISO interval=20ms, BN=2, FT=5, and NSE=6. As an example, the electronic device 101 may allocate 47.2% of resources to the first CIS link 506 and open the first CIS link 506 using the CIS parameters.

Table 3 below shows an example of CIS parameters set by the electronic device 101 and transferred to the second external electronic device 202 through the CIS_REQ packet 3102.

[Table 3]

| Control Pkt | LL CIS REQ |
|---|---|
| CIG ID | 0x01 |
| CIS ID | 0x00 |
| M_to_S PHY | LE 2M PHY |
| S_to_M PHY | LE 2M PHY |
| Framed | All CIS Data PDUs shall be unframed |
| Max_SDU_Size_M_TO_S | 120 octets |
| Max_SDU_Size_S_TO_M | 0 octets |
| SDU_Interval_M_TO_S | $10000\mu s$ |
| SDU_Interval_S_TO_M | $10000\mu s$ |
| Max PDU Size M to S | 120 |

(continued)

| Framed | All CIS Data PDUs shall be unframed |
|---|---|
| Max PDU Size S to M | 0 |
| Number of Sub events | 10 |
| Sub event Interval | $944\mu s$ |
| Burst Number M_to_S | 0 (No CIS payload) |
| Burst Number S_to_M | 2 |
| Flush Timeout M_to_S | 5 |
| Flush Timeout S_to_M | 1 |
| ISO Interval | 20.00ms |
| Calculated Flush Timeout M_to_S | 100.00ms |
| Calculated Flush Timeout S_to_M | 20.00ms |
| CIS Offset Minimum | $11250\mu s$ |
| CIS Offset Maximum | $11250\mu s$ |
| Conn Event Counter | 0x0a0a |

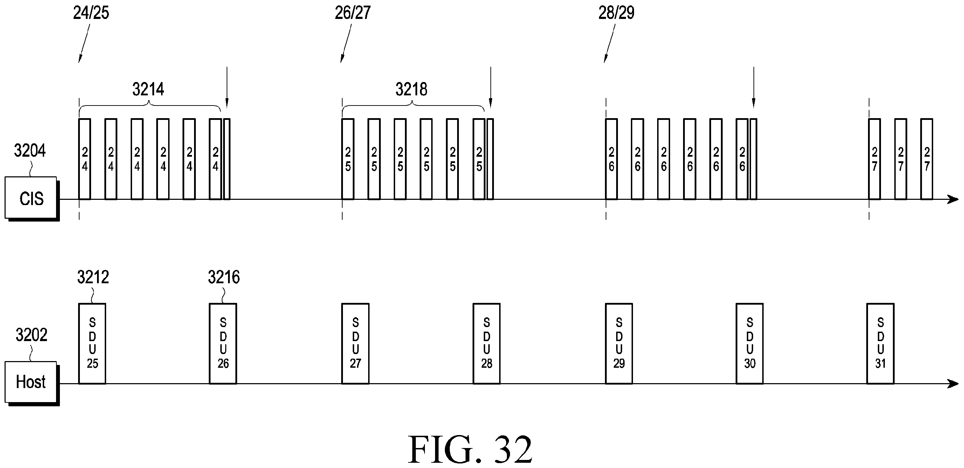

FIG. 32 is a view illustrating an operation of opening a CIS link according to an embodiment.

Referring to FIG. 32, a processor 120 of an electronic device 101 may include a CIS module 3204 (e.g., the CIS module 3112) and a host 3202 (e.g., the host 3114). According to an embodiment, the electronic device 101 (e.g., the host 3202) may identify that the first CIS link 506 is established by receiving the event message 3108 of FIG. 31 from the CIS module 3204 and transmit a service data unit (SDU) 3212 (e.g., SDU25 and SDU26 3216) including audio data to be transmitted through the second CIS link 508 to the CIS module 3204, e.g., at each ISO interval.

The electronic device 101 (e.g., the CIS module 3204) may transmit CIS data packets 3214 corresponding to the previous SDU (e.g., SDU24 (not shown)) at the current ISO interval and receive an ACK response corresponding to the CIS data packets 3214. The electronic device 101 (e.g., the CIS module 3204) may transmit CIS data packets 3218 corresponding to SDU25 3212 at the subsequent ISO interval and receive an ACK response corresponding to the CIS data packets 3218. The electronic device 101 (e.g., the CIS module 3204) may transmit CIS data packets corresponding to SDU26 3216 at the next ISO interval. The subsequent SDUs may be transmitted in the same manner.

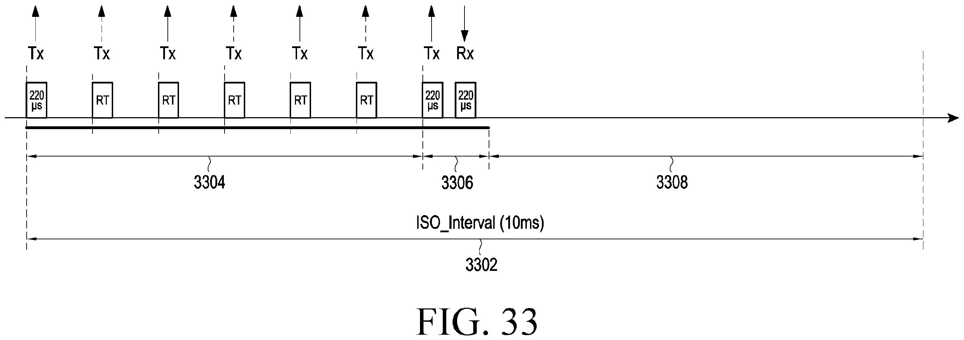

FIG. 33 is a view illustrating an operation of operating CIS communication considering a wireless environment or scheduling context according to an embodiment.

Referring to FIG. 33, the electronic device 101 may retransmit CIS data packets including the same audio data until the audio data reaches the flush point indicated by the FT parameter. When there is no other scheduled task, and an ACK response for the audio data is not received from the external electronic device (e.g., the first external electronic device 202 or the second external electronic device 204) due to the wireless environment, the electronic device 101 may steadily retransmit CIS data packets including the same audio data using a plurality of subevents.

In an embodiment, the electronic device 101 may allocate a time period 3304 including six subevents for the first CIS link 506 with the first external electronic device 202 in the ISO interval 3302. The time period 3304 may correspond to the first priority having a high priority value.

In an embodiment, the first external electronic device 202 may fail to normally receive the CIS data packet from the electronic device 101 due to poor wireless environment of the first CIS link 506. When no other task (e.g., the ACL backoff task of Table 2) having a higher priority than the first priority occurs during the time period 3304 of the first CIS link 506, all of the six transmission occasions (i.e., six subevents) of the first CIS link 506 may be used for transmission (e.g., initial transmission and retransmission (RT)) of CIS data packets.

In an embodiment, the electronic device 101 may receive an ACK response from the second external electronic device 204 immediately after transmitting the CIS data packet in the first subevent 3306 of the second CIS link 508. In an embodiment, the electronic device 101 may use the time period 3308 corresponding to the remaining subevents (and remaining range) of the second CIS link 508 for another task (e.g., Bluetooth concurrency operation or Wi-Fi coexistence operation) using the same frequency band (e.g., 2.4GHz).

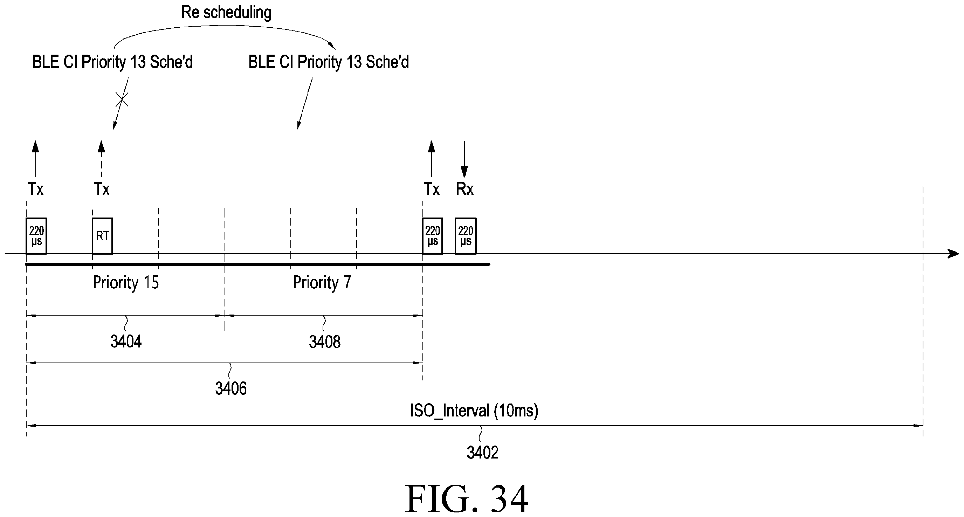

FIG. 34 is a view illustrating an operation of performing a CIS task with priority according to an embodiment.

Referring to FIG. 34, a first touch input 3406 corresponding to one CIS event for CIS communication (e.g., the first CIS link 506) in an ISO interval 3402 may include, e.g., six subevents, a second time period 3404 set to correspond to the priority value of 15 in the first time period 3406 may include three subevents, and a third time period 3408 set to correspond to the priority value of 7 may include three sub events.

In an embodiment, the electronic device 101 may transmit and retransmit CIS data packets using the first subevent and second subevent among the subevents of the second time period 3404. The electronic device 101 may identify that the BLE connection interval (CI) task having a priority value of 13 in the second subevent of the second time period 3404 is scheduled but, since the priority value of 13 is smaller than the priority value, 15, of the second time period 3404, disregard the BLE CI task during the second time period 3404. When an ACK response is received from the first external electronic device 202 after retransmission (RT) using the second subevent, the third subevent of the second time period 3404 may not be used for CIS transmission.

In an embodiment, the electronic device 101 may reschedule the BLE CI task to a next time period, e.g., the third time period 3408. Since the priority value 13 is larger than the priority value 7 of the third time period 3408, the electronic device 101 may determine not to perform the CIS task during the second time period 3404. The second time period 3404 may be used to perform the BLE CI task by the electronic device 101.

In an embodiment, the electronic device 101 may perform CIS tasks using subevents for another CIS event after the first time period 3406 corresponding to one CIS event. A description of the operation of the electronic device 101 for the other CIS event may be similar to that in the first time period 3406.

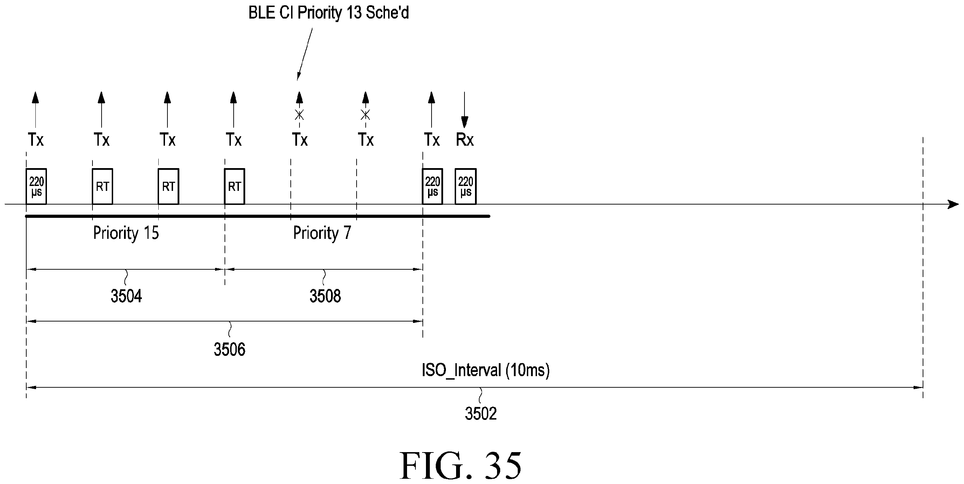

FIG. 35 is a view illustrating an operation of performing a BLE task with priority according to an embodiment.

Referring to FIG. 35, a first touch input 3506 corresponding to one CIS event for CIS communication (e.g., the first CIS link 506) in an ISO interval 3502 may include, e.g., six subevents, a second time period 3504 set to correspond to the priority value of 15 in the first time period 3506 may include three subevents, and a third time period 3508 set to correspond to the priority value of 7 may include three sub events.

In an embodiment, the electronic device 101 may transmit and retransmit CIS data packets using three subevents in the second time period 3504. When an ACK response corresponding to the CIS data packet is not received from the first external electronic device 202 during the second time period 3504, and no other task scheduled is present in the first subevent of the third time period 3508, the electronic device 101 may retransmit the CIS data packet in the first subevent of the third time period 3508.

In an embodiment, the electronic device 101 may identify that a BLE CI task having a priority value of 13 is scheduled in the second subevent of the third time period 3508. Since the BLE CI task has a higher priority value, 13, larger than the priority value 7 of the third time period 3508, although failing to receive an ACK response to the CIS data packet, the electronic device 101 may determine to stop retransmitting the CIS data packet in the second subevent of the third time period 3508. The remaining time period of the third time period 3508 may be used to perform the BLE CI task.

In an embodiment, the electronic device 101 may perform CIS tasks using subevents for another CIS event after the first time period 3506 corresponding to one CIS event. A description of the operation of the electronic device 101 for the other CIS event may be similar to that in the first time period 3506.

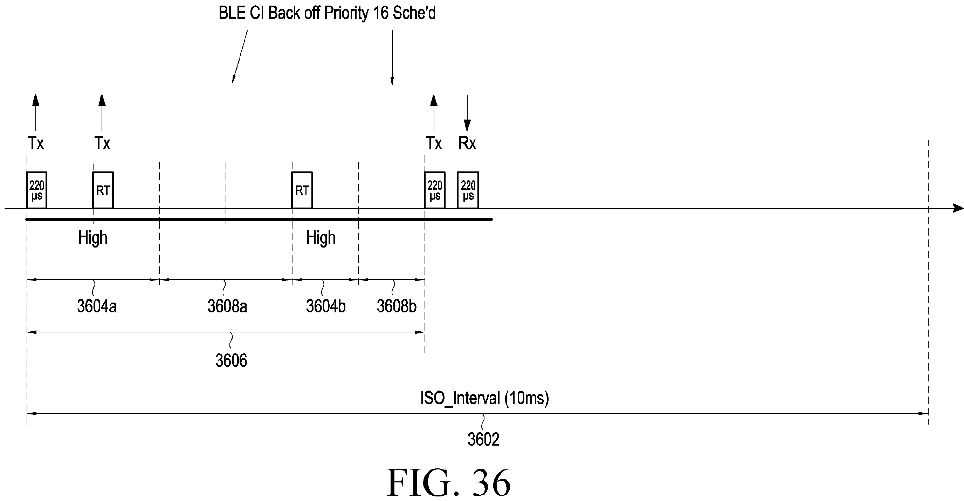

FIG. 36 is a view illustrating an operation of changing priority for CIS communication according to an embodiment.

Referring to FIG. 36, a first time period 3606 corresponding to one CIS event for CIS communication (e.g., the first CIS link 506) in an ISO interval 3602 may include, e.g., six subevents. The electronic device 101 may determine to change priority in any subevent while providing the audio service to the first external electronic device 202 through the first CIS link 506. In an embodiment, when a short and repetitive task (e.g., BLE CI backoff operation) is newly required, the electronic device 101 may set a priority every subevent or every designated numbers of subevents to ensure the CIS task as much as possible while allowing the task to be quickly done.

In an embodiment, the electronic device 101 may change the priority value to 16 for the time period 3604a corresponding to the first subevent and the second subevent in the first time period 3606 and the time period 3604b corresponding to the fifth subevent. In an embodiment, the electronic device 101 may change the priority value to '7' for the time period 3608a corresponding to the third subevent and the fourth subevent and the time period 3608b corresponding to the sixth subevent. For example, the BLE CI backoff operation may have a priority value '16' and the electronic device 101 may quickly perform the BLE CI backoff operation in the time period 3608a or the time period 3608b.

In an embodiment, the electronic device 101 may perform CIS tasks using subevents for another CIS event after the first time period 3606 corresponding to one CIS event. A description of the operation of the electronic device 101 for the other CIS event may be similar to that in the first time period 3606.

In an embodiment, when the electronic device 101 and the external electronic device (e.g., the first external electronic device 202 or the second external electronic device 204) are able to support functions with the same purpose, the electronic device 101 may provide CIS operation information indicating the second time period (e.g., the second time period 1706) corresponding to the first priority and the third time period (e.g., the third time period 1708) corresponding to the second priority to the external electronic device (e.g., the first external electronic device 202 or the second external electronic device 204).

In an embodiment, the external electronic device (e.g., the first external electronic device 202 or the second external electronic device 204) may perform CIS communication according to the CIS operation information received from the electronic device 101.

For example, when the battery level of the external electronic device (e.g., the first external electronic device 202 or the second external electronic device 204) is less than a designated threshold, the external electronic device (e.g., the first external electronic device 202 or the second external electronic device 204) may intentionally disregard not to listen the third time period (e.g., the third time period 1712 of FIG. 17) set as the second priority according to the CIS operation information transferred from the electronic device 101.

BIS may refer to logical transmission used to transmit one or more isochronous data streams to all devices for BIS within a designated range. The BIS may include one or more subevents for transmitting isochronous data packets (e.g., BIS data packets). The BIS may support transmission of several new isochronous data packets in all BIS events. The BIS does not include an acknowledgment protocol, and may be transmitted unidirectionally from a broadcasting device (e.g., a source electronic device) that broadcasts traffic. To enhance reliability of BIS logical transmission, isochronous data packets may be unconditionally retransmitted by increasing the number of subevents in all events. Transmission reliability may be enhanced by transmitting the isochronous data packets at an interval preceding an interval related to the isochronous data packets. This is referred to as pre-transmission. The BIS may be identified by a unique access address and timing information. The access address and timing information may be transmitted through a packet transmitted using a corresponding periodic advertising broadcast logic transmission.

A scanning device (e.g., a sink electronic device) supporting a synchronized receiver role (e.g., a sink role) may receive isochronous data (e.g., isochronous data packets) from the BIS after synchronizing with the BIS using the timing information obtained from periodic advertising packets.

Each BIS may be part of a broadcast isochronous group (BIG). The BIG may include two or more BISs having the same isochronous interval (e.g., ISO_Interval). BISs in the BIG have a common timing reference based on the source electronic device, and may be temporally synchronized with each other. The maximum number of BISs in the BIG may have a designated value (e.g., 31). BIG may also include control subevents.

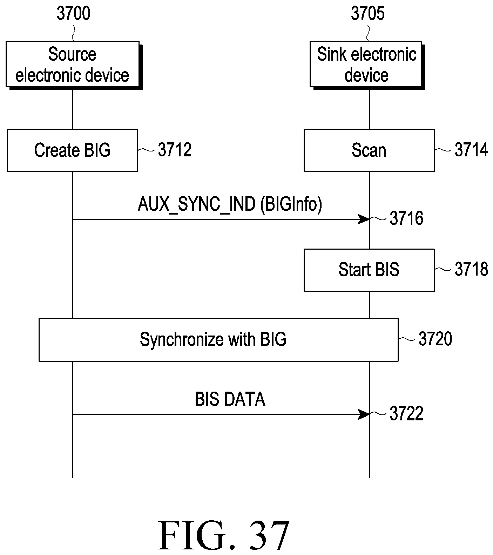

FIG. 37 is a signal flowchart illustrating a procedure for synchronizing with a broadcast isochronous group (BIG), according to an embodiment.

Referring to FIG. 37, in operation 3712, the source electronic device 400 (e.g., the electronic device 101) may create a BIG including one or more BISs and may start periodic advertising related to the BIG. In operation 3714, the sink electronic device 3705 (e.g., the first external electronic device 202 or the second external electronic device 204) may start BLE scan for reception synchronization. In an embodiment, the sink electronic device 3705 may not perform BLE scan, and may obtain a scan result (e.g., synchronization information) required to receive BIS parameters of the source electronic device 3700 from an external electronic device (not shown) acting as a BIS assistant performing BLE scan.

In operation 3716, the source electronic device 3700 may periodically transmit an advertising packet (e.g., AUX_SYNC_IND) related to the BIG at a designated interval. For example, AUX_SYNC_IND may include BIS parameters (e.g., BIG information 3800) in an additional controller advertising data (ACAD) field. The BIG information may include parameters used to synchronize with a BIG (e.g., at least one BIS link) provided by the source electronic device 3700. In an embodiment, the sink electronic device 3705 may directly receive the BIG information from the source electronic device 3700, may receive the BIG information from the source electronic device 3700 based on assistance from an external electronic device (not shown), or may receive the BIG information from the external electronic device (not shown).

In an embodiment, instead of performing BLE scan, the sink electronic device 3705 may receive a scan result (e.g., synchronization information) from an external electronic device (not shown) and may obtain BIS parameters (e.g., the BIG information 3800) for a BIS link from the advertising packet received through the synchronization information. In an embodiment, the sink electronic device 3705 may receive the advertising packet from the source electronic device 3700 and may obtain BIG information (e.g., the BIG information 3800) from the advertising packet, based on the scan result (e.g., synchronization information) received from an external electronic device (not shown) performing BLE scan.

In operation 3718, the sink electronic device 3705 may determine to start receiving the BIS based on the BIG information. In operation 3720, the sink electronic device 3705 may synchronize with the BIG of the source electronic device 3700 using parameters included in the BIG information. In an embodiment, the BIG synchronization operation performed by the sink electronic device 3705 may include an operation of calculating an access address and timing information at which audio data is transmitted, based on the BIG information. In an embodiment, the timing information may include channel information (e.g., a channel map) and transmission time points of audio data.

In operation 3722, the sink electronic device 3705 may receive audio data (e.g., at least one BIS data packet) broadcast by the source electronic device 3700 through at least one BIS in the BIG.

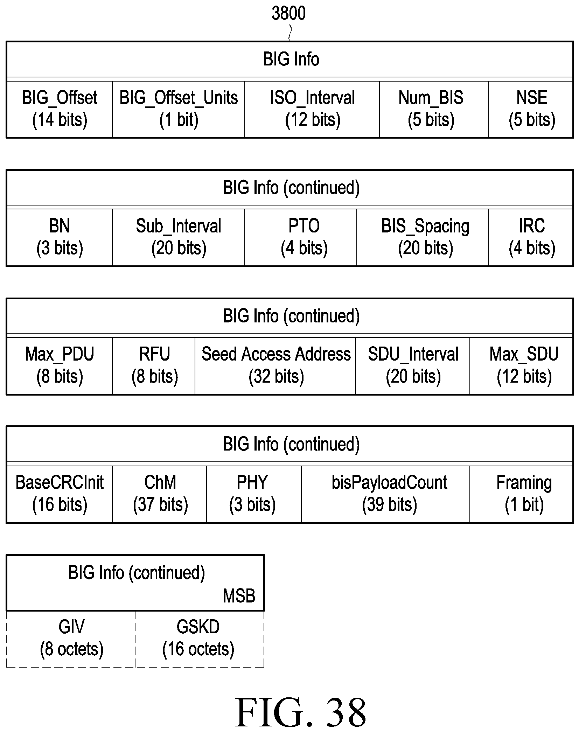

FIG. 38 is a view illustrating a format of BIG information according to an embodiment.

Referring to Fig. 38, the BIG information 3800 may include at least one of BIG Offset, BIG_Offset_units, ISO_Interval, Num_BIS, number of subevent (NSE), burst number (BN), Sub_Interval, pre-transmission offset (PTO), BIS_Spacing, immediate repetition count (IRC), Max_PDU, reserved for future use (RFU), SeedAccessAddress, SDU_Interval, Max_SDU, BaseCRCInit, channel map (ChM), physical (PHY), bisPayloadCount, Framing, group initialization vector (GIV), or group session key derivation (GSKD). In an embodiment, the length of the BIG information 500 may be 33 octets when not encrypted, and 57 octets when encrypted.

Parameters that may be included in the BIG information 3800 will be described below.

Num_BIS indicates the number of BISs in the BIG. Each of the BISs in the BIG may be assigned a different BIS_Number from 1 to Num_BIS.

ISO_Interval may indicate a time of 1.25 ms between two adjacent BIG anchor points. (e.g. 5ms to 4s) BIS_Spacing may indicate the time between the start time of the subevents in adjacent BISs in the BIG and the start time of the first subevent of the last BIS.

Sub_Interval may indicate the time between start times of two consecutive subevents of each BIS.

Max_PDU is the maximum number of data octets capable of transmitting each BIS data packet within the BIG and may indicate the maximum duration of the packet. (e.g. 1 to 251 octets)

Max_SDU may indicate the maximum size (e.g., maximum duration) of the service data unit (SDU) in the BIG. (e.g. 1 to 4095 octets)

BN, PTO, and IRC may include values for controlling which data is transmitted in each BIG event. Subevents of each BIS event may be divided into groups (e.g., subevent groups) including BN subevents. Thus, the number of groups (e.g., group count (GC)) is NSE/BN. IRC may designate the number of groups carrying data related to the current BIS event. The remaining groups may carry data related to future BIS events designated by the PTO.

IRC may be greater than 0 and may not be greater than GC. If IRC = GC, the PTO may be ignored, otherwise the PTO may be greater than zero. Groups of subevents may be sequentially numbered (e.g., group index g) from 0 to GC-1. When g < IRC, the group g may include data related to the current BIS event. When g >= IRC, group g may include data related to a future BIS event (e.g., PTO $\times$ (g - IRC + 1)th BIS event) after the current BIS event.

The NSE indicates the maximum number of subevents within each BIG event.

The framing field may indicate whether the BIG transmits framed data or unframed data.

BIG_Offset may indicate the time from the start time of the packet (e.g., AUX_SYNC_IND 3716) including the BIG information 3800 to the next BIG anchor point. The value of BIG_Offset may be indicated in units indicated by bits of BIG_Offset_Units. The time offset is determined by multiplying the value of BIG_Offset by the unit indicated by BIG_Offset_Units. The time offset may be greater than 600 $\mu$s (micro second). When the bit of BIG_Offset_Units is set, the unit is 300 $\mu$s, otherwise 30 $\mu$s. The bit of BIG_Offset_Units may not be set if the time offset is less than 491,460 $\mu$s. The BIG anchor point may be between the time offset and the time offset plus 1 unit after the start time of the packet (e.g., AUX_SYNC_IND) as follows.

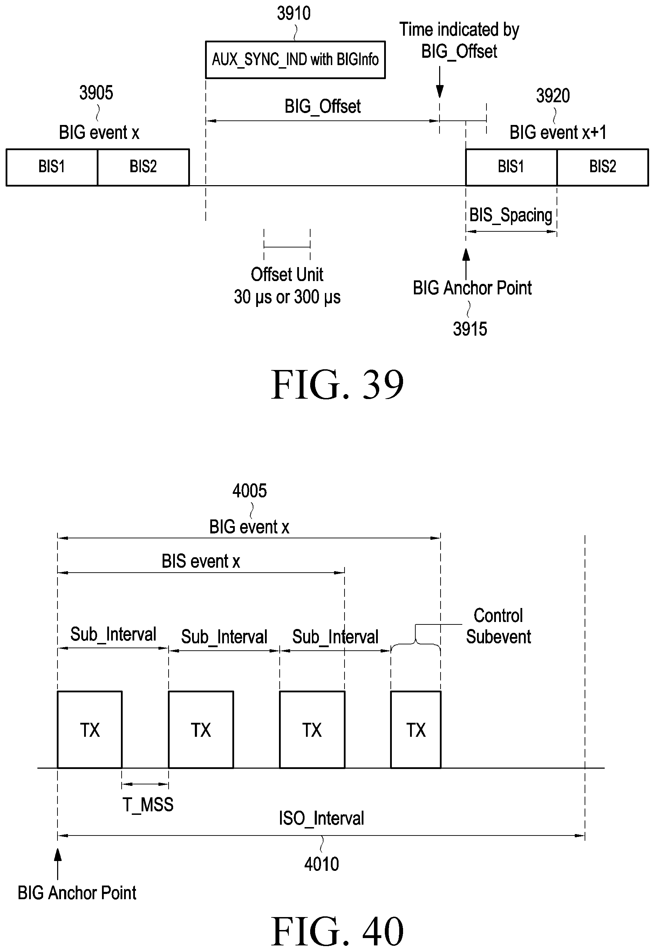

FIG. 39 is a view illustrating a BIG event for a periodic advertising event according to an embodiment.

Referring to FIG. 39, each BIS in the BIG provided by the source electronic device 3700 (e.g., the electronic device 101) may be configured as a schedule of a time slot known as an event and a subevent. The source electronic device 3700 may transmit BIS data packets in subevents (e.g., a BIS1 subevent and a BIS2 subevent) within a BIG event (e.g., a BIG event x 3905).

The source electronic device 3700 may transmit an advertising packet 3910 (e.g., AUX_SYNC_IND with BIGInfo) including BIG information (e.g., BIG information 3800) at a designated time point. The source electronic device 3705 may determine the start time of the BIG anchor point 3915 after the start time of the AUX_SYNC_IND based on the BIG_Offset and the BIG_Offset_Units included in the BIG information 3800. A next BIG event (e.g., BIG event x+1 3920) may start from the BIG anchor point 3915, and each BIS subevent (e.g., BIS1 subevent or BIS2 subevent) may have a duration defined by BIS_Spacing.

SeedAccessAddress may indicate the seed access address for BIG.

SDU_Interval may indicate the time interval of the SDU.

BaseCRCInit may include the cyclic redundancy check (CRC) initial value for the BIS data packet.

ChM may include a channel map indicating a used data channel and an unused data channel.

PHY may indicate the physical channel transmission scheme (e.g., the symbol per second and/or the coding scheme) used by the BIG.

bisPayloadCount may include a count value for detecting the missing payload. bisPayloadCount may include a value for the first subevent of the BIG event based on BIG_Offset.

When the BIG is encrypted, the GIV and GSKD may include values for describing encryption.

The parameters included in the BIG information 500 may not be changed during the lifetime of the BIG.

FIG. 40 is a view illustrating a BIG event and a BIS event according to an embodiment.

Referring to FIG. 40, a BIG event (e.g., the BIG event x 4005) may include one or more BIS data packets (e.g., PDUs). The source electronic device 3700 (e.g., the electronic device 101) may transmit BIS data packets in BIG events (e.g., BIG event x 4005). Each BIG event (e.g., BIG event x 4005) may be divided into Num_BIS BIS events and, if present, one control subevent. Each BIS event may be divided into NSE subevents.

Each BIS event may start at the BIS anchor point and end after the last subevent. Each BIG event (e.g., the BIG event x 4005) may start at the BIG anchor point and, if there is a control subevent, it may end thereafter, otherwise, end at the last constituent BIS event. The BIG anchor points may be regularly spaced apart by an interval of ISO_Interval 4010. The BIS anchor points for BIS n of the BIG may be after (n - 1) × BIS_Spacing from the BIG anchor points, and may be regularly spaced apart by ISO_Interval 4010. The subevents of each BIS may be spaced apart by Sub_Interval. The source electronic device 3700 may terminate the current BIG event (e.g., the BIG event x 4005), at least T_IFS (e.g., 150 μs) before the BIG anchor point of the next BIG event. The interval between consecutive subevents in the BIS may be defined as T_MSS.

BISs in the BIG may be arranged sequentially or interleaved according to Sub_Interval and BIS_Spacing. In the case of sequential arrangement, BIS_Spacing may be greater than or equal to NSE × Sub_Interval, and all subevents of the BIS event may occur together. When interleaved, Sub_Interval may be Num_BIS × BIS_Spacing, the first subevents of all BISs may be adjacent, and the second subevents of all the following BISs may be adjacent.

The maximum length possible for the data portion (except for the control subevent) of the BIG event may be represented as BIG_Sync_Delay. The value of BIG_Sync_Delay may be the same as the time from the BIS anchor point to the BIG synchronization point, which is the end point of the packet including the payload of the Max_PDU octet transmitted in the last subevent. (BIG_Sync_Delay = (Num_BIS - 1) × BIS_Spacing + (NSE - 1) × Sub_Interval + MPT)

The BIS subevent is an opportunity for the source electronic device 3700 to transmit BIS data packets and for the electronic device 3705 (e.g., the first external electronic device 202 and/or the second external electronic device 204) operating as a sink to receive the BIS data packets. The source electronic device 3700 may transmit one BIS data packet at a time point at which each BIS subevent of the BIS event starts, and may transmit, e.g., at least one BIS packet within six consecutive BIS events.

For each BIS event, the source electronic device 3700 may provide a data burst including BN payloads. Each payload may include a single fragment or one or more SDU segments. One data burst is related to a designated BIS event, but may be transmitted in earlier events.

The sink electronic device 3705 may not perform a reception operation for receiving BIS audio in an interval other than the time interval (e.g., the time interval 4104) determined by the source electronic device 3700 to transmit BIS audio. Accordingly, BIS audio communication may not be possible in a period other than a time period (e.g., the time period 4104) in which the source electronic device 3700 agreed to transmit BIS audio. When the source electronic device 3700 transmits BIS audio using only a limited resource (e.g., the time interval 4104) from the limited resource, the BIS audio data reception rate of the sink electronic device 3705 may be reduced. The source electronic device 3700 may repeatedly transmit the BIS audio data so that the sink electronic device 3705 may successfully receive the BIS audio.

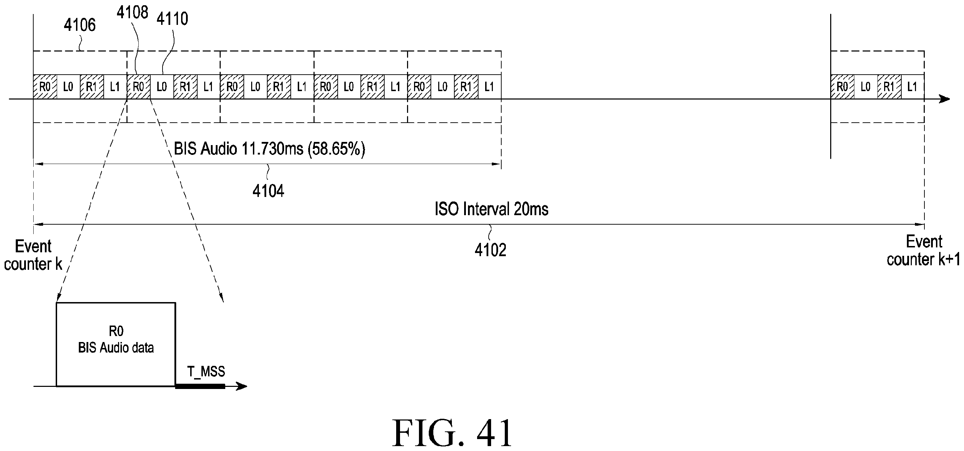

FIG. 41 is a view illustrating resource allocation for BIS communication according to an embodiment.

Referring to FIG. 41, Num_BIS = 2, ISO Interval = 20 ms, BN = 2, NSE = 10, Sub_Interval = 1.188 ms, BIS_Spacing = 0.594 ms, PTO = 0, IRC = 5, and Max PDU Size = 100 bytes are set for BIS transmission. The time interval 4104 corresponding to one BIS event in the ISO interval 4102 may include, e.g., five (= NSE/BN = 10/2) subevent groups (e.g., the subevent group 4106). Each subevent group (e.g., the subevent group 4106) may include two subevents, and one subevent may be used to carry a BIS data packet (e.g., R0 4108) of a light channel and a BIS data packet (e.g., L0 4110) of a left channel. As illustrated, one subevent in the BIS link may include unidirectional transmission data (e.g., R0 and/or L0) and at least T_MSS (e.g., 150 μs). The same BIS audio data (e.g., R0 4108 and L0 4110) may be repeatedly transmitted a designated number of times (e.g., 10 times) within the ISO interval 4102.

In an embodiment, the electronic device 101 may determine parameters of the BIS service, such as the timing and transmission order of BIS audio transmission, and may transmit the parameters to one or more nearby sink electronic devices (e.g., the first external electronic device 202 and/or the second external electronic device 204) through BIS parameters (e.g., the BIG information 3800) included in periodic advertising. The electronic device 101 may determine (e.g., schedule) to perform another communication task while performing BIS audio transmission. In an embodiment, the communication task may include at least one of a Bluetooth concurrency operation such as a page scan, a channel scan, or a BLE scan, or a Wi-Fi CoEX. The communication task may be scheduled to operate together with the BIS audio transmission in the same time interval.

In an embodiment, the electronic device 101 may limit resources available for BIS audio transmission in order to ensure a communication task (e.g., Wi-Fi CoEX and/or Bluetooth concurrency operation) other than BIS audio transmission during BIS audio transmission. In an embodiment, when the electronic device 101 is configured to support both Bluetooth communication and Wi-Fi communication, such as a mobile phone, the electronic device 101 may configure a first resource available for BIS audio transmission as a time interval (e.g., the time interval 4104) corresponding to about 50% (e.g., 58.65%) of the ISO interval (e.g., the ISO interval 4102).

In an embodiment, the electronic device 101 may configure BIG parameters of BIG information (e.g., the BIG information 3800) to transmit BIS audio using a designated resource (e.g., the time interval 4104) of a limited time interval (e.g., the ISO interval 4102). For example, the parameters may be configured such that BIS audio transmission occupies the maximum RF resource (e.g., the time interval 4104). The electronic device 101 may transmit BIS audio based on the BIG parameters. In an embodiment, the electronic device 101 may divide a time interval (e.g., the time interval 4104) for BIS audio transmission into at least two or more time intervals (e.g., the time interval 4204 and the time interval 4206) for different priorities, in order to ensure the quality of BIS audio while enabling performing a task (e.g., a Wi-Fi CoEX and/or Bluetooth concurrency operation) other than BIS audio transmission. The electronic device 101 may compare a priority of each time interval with priorities of scheduled tasks, and may first process a task having a higher priority.

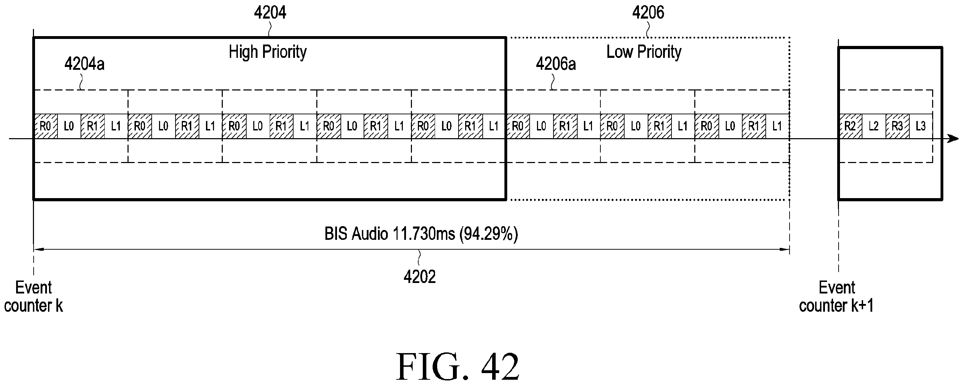

FIG. 42 is a view illustrating resource division for BIS communication according to an embodiment.

Referring to FIG. 42, BIG parameters such as Num_BIS = 2, ISO Interval = 20 ms, BN = 2, NSE = 16, BIS_Spacing = 0.594 ms, Sub_Interval = 1.188 ms, = PTO 0, and IRC = 8 may be set for BIS transmission. By the BIG parameters, the first time interval 4202 for BIS audio transmission may include a total of eight subevent groups and may be configured to occupy 92.29% of the ISO interval. The electronic device 101 may divide the first time interval 4202 including a total of eight subevent groups into a second time interval 4204 including five subevent groups (e.g., the subevent group 4204a) and a third time interval 4206 including three subevent groups (e.g., the subevent group 4206a).

In an embodiment, the second time interval 4204 may correspond to a first priority having a relatively high value, and the third time interval 4206 may correspond to a second priority having a relatively low value. Although not illustrated, in an embodiment, the third time interval 4206 may include at least one subevent group that carries data related to future BIS events designated by the PTO. The first priority assigned to the second time interval 4204 may be higher than, e.g., the priority of the Wi-Fi CoEX and/or Bluetooth concurrency operation. The second priority assigned to the third time interval 4206 may be lower than, e.g., the priority of the Wi-Fi CoEX and/or Bluetooth concurrency operation.

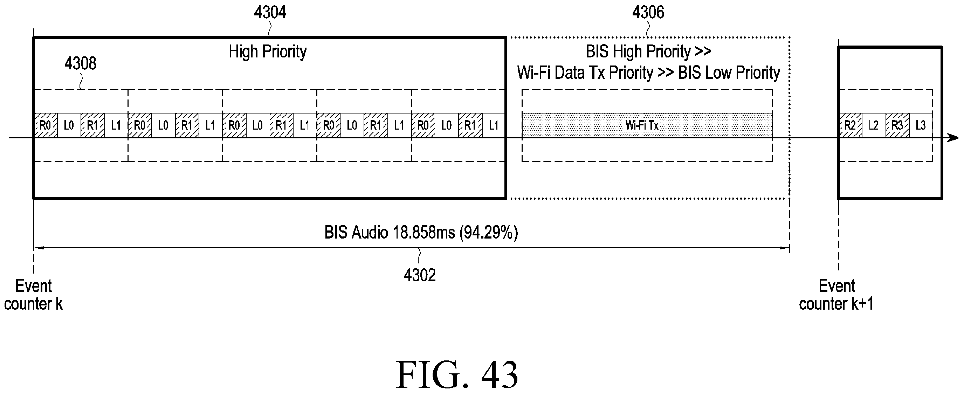

FIG. 43 is a view illustrating an operation of performing a communication task having a higher priority, according to an embodiment of the disclosure.

Referring to FIG. 43, a first time interval 4302 for BIS audio transmission according to BIG parameters designated for BIS transmission may include a total of eight subevent groups and may occupy 92.29% of the ISO interval. The electronic device 101 may divide the first time interval 4302 including a total of eight subevent groups into a second time interval 4304 corresponding to five subevent groups (e.g., the subevent group 4304a) and a third time interval 4306 corresponding to three sub event groups.

Upon identifying that a task (e.g., Wi-Fi CoEX or Bluetooth concurrency operation) other than BIS audio transmission (e.g., BIS task) is scheduled at the same time as BIS audio transmission, the electronic device 101 may first perform a task having a higher priority (e.g., BIS task or the other task). For example, when Wi-Fi CoEX (e.g., the Wi-Fi data transmission 4308) having a higher priority than the second priority is scheduled in the third time interval 4306 designated to transmit BIS audio with a lower priority (e.g., the second priority), the electronic device 101 may compare the priority of the Wi-Fi data transmission 4308 with the second priority and may perform the Wi-Fi data transmission 4308 having a higher priority in the third time interval 4306. The BIS task (e.g., retransmission of R0 and L1, or transmission of future BIS audio (e.g., R2, L2, R3, and L3) scheduled to be performed in the third time interval 4306) may be omitted or delayed to the next BIS event (e.g., BIS event k+1). In an embodiment, the electronic device 101 may determine that the Wi-Fi CoEX is scheduled by identifying that the Wi-Fi data for the Wi-Fi CoEX is stored in the task queue before the third time interval 4306.

According to the embodiments of the disclosure, the electronic device and operation method thereof may optimize use of resources by the source electronic device and ensure the reception occasions for the sink electronic devices considering the Bluetooth concurrency operation or Wi-Fi coexistence operation and other operations in providing an audio service using Bluetooth low energy (BLE), thereby performing other communication tasks while maintaining the success rate of reception of audio data.

According to an embodiment, an electronic device 101 may comprise a communication circuit 192 and at least one processor 120. The at least one processor may be configured to determine a first resource 1708, 1804, 1812, 4202, or 4302 available for an audio service in at least one audio communication link 506 and 508. The at least one processor may be configured to determine a second resource 1710, 1806, 1814, 4204, or 4304 of a first priority and a third resource 1712, 1808, 1816, 4206, or 4306 of a second priority lower than the first priority in the first resource. The at least one processor may be configured to provide an audio service through the communication circuit to at least one external electronic device 202 or 204 through the at least one audio communication link using at least one of the second resource or the third resource.

In an embodiment, the at least one processor may be configured to allocate the second resource to a first communication task having the first priority and allocate the third resource to a second communication task having the second priority.

In an embodiment, the at least one processor may be configured to detect that a first communication task 4308 using a frequency band corresponding to a frequency band of the at least one audio communication link is scheduled while providing the audio service, identify that a third priority designated for the first communication task is higher than the second priority, and perform the first communication task using the third resource, through the communication circuit, based on identifying that the third priority designated for the first communication task is higher than the second priority.

In an embodiment, the first communication task may include at least one of a Bluetooth concurrency operation or a Wi-Fi coexistence operation.

In an embodiment, the Bluetooth concurrency operation may include at least one of a Bluetooth inquiry, a Bluetooth inquiry scan, Bluetooth paging, a Bluetooth page scan, a BLE scan, BLE advertising, maintaining Bluetooth connection, maintaining BLE connection, or channel scan.

In an embodiment, the first resource may include a first time period corresponding to a plurality of subevents allocated for the audio service of a time period corresponding to one event on the at least one audio communication link. The second resource may include a second time period corresponding to at least one first subevent ensured to be used for the audio service in the first time period. The third resource may include a third time period corresponding to at least one other second subevent than at least one first subevent of the first time period.

In an embodiment, the at least one first subevent may include at least one subevent for use in initial transmission of an audio data packet. The at least one second subevent may include at least one subevent for use in retransmission of the audio data packet.

In an embodiment, the at least one first subevent may include at least one subevent 4108 and 4110 for use in initial transmission of an audio data packet. The at least one second subevent may include at least one of at least one subevent for use in retransmission of the audio data packet or at least one subevent for use in transmission of a future audio data packet.

In an embodiment, the at least one processor may be configured to determine a number of subevents corresponding to the first resource of one event used for the at least one audio communication link and determine a number of first subevents corresponding to the second resource and a number of second subevents corresponding to the third resource.

In an embodiment, the at least one processor may be configured to determine the first subevents corresponding to the second resource according to a designated time ratio or a designated number of subevents.

In an embodiment, the at least one processor may be configured to omit or delay an audio communication task having the second priority scheduled in the third resource, based on the third priority being higher than the second priority.

In an embodiment, the at least one processor may be configured to perform an audio communication task having the first priority scheduled in the second resource through the second resource.

In an embodiment, the at least one processor may be configured to perform the first communication task using a fourth resource except for the second resource and the third resource, based on a third priority being lower than the second priority.

In an embodiment, the at least one audio communication link may include a first CIS link using a first CIS event and a second CIS link using a second CIS event, at least some subevents of the first CIS event may overlap at least some subevents of the second CIS event. The second resource may include a time period corresponding to the at least some subevents of the second CIS event overlapping the at least some subevents of the first CIS event. The third resource may include a third time period corresponding to at least one of remaining events of the second CIS event overlapping the at least some subevents of the first CIS event or at least some subevents of the second CIS event not overlapping the first CIS event.

According to an embodiment, an electronic device 101 may comprise a communication circuit 190 and at least one processor 120. The at least one processor may be configured to perform a scan operation to search for a nearby Bluetooth device based on BLE. The at least one processor may be configured to receive an advertising packet from a first external electronic device through the BLE scan and create (or establish) a first LE communication link with the first external electronic device. The at least one processor may be configured to receive an advertising packet from a second external electronic device through the BLE scan and create (or establish) a second LE communication link with the second external electronic device. The at least one processor may be configured to output a user interface related to the first external electronic device and/or the second external electronic device through a display based on information included in the received advertising packet(s).

The at least one processor may be configured to determine to start an audio service through a CIS communication with the first external electronic device and the second external electronic device according to a user's intent or a designated policy and calculate a first resource available to a first CIS link with the first external electronic device and a second CIS link with the second external electronic device. The at least one processor may be configured to divide the first resource into at least a second resource and a third resource, set a first priority to the second resource and set a second priority having a lower priority value, to the third resource.

The at least one processor may be configured to create (or establish) a first CIS link with the first external electronic device and create (or establish) a second CIS link with the second external electronic device. The at least one processor may be configured to provide the audio service to the first external electronic device and the second external electronic device through the first CIS link and the second CIS link respectively. The at least one processor may be configured to identify that another task which should be performed in the same frequency band as CIS communication has occurred while providing the audio service.

The at least one processor may be configured to compare the priority of a third task with the priorities of the CIS tasks to be performed through the CIS links. The at leastone processor may be configured to perform tasks having higher priority. The at least one processor may be configured to determine whether it is required to change the priority of the CIS task performed through the first CIS link and the second CIS link according to a designated rule or designated policy while providing the audio service. The at least one processor may be configured to change the value of the first priority and/or the second priority to a higher or lower value, when it is determined that changing priority is required.

According to an embodiment, a method for operating an electronic device 101 may comprise determining (1605 or 1620) a first resource 1708, 1804, 1812, 4202, or 4302 available for an audio service in at least one audio communication link. The method may comprise determining (1610 or 1625) a second resource 1710, 1806, 1814, 4204, or 4304 of a first priority and a third resource 1712, 1808, 1816, 4206, or 4306 of a second priority lower than the first priority in the first resource. The method may comprise providing (1615 or 1630) the audio service to at least one external electronic device through the at least one audio communication link using at least one of the second resource or the third resource.

In an embodiment, the method may further comprise allocating the second resource to a first communication task having the first priority and allocating the third resource to a second communication task having the second priority.

In an embodiment, the method may further comprise detecting (1635) that a first communication task using the same frequency band as the at least one audio communication link is scheduled while providing the audio service, identifying (1640) that a third priority designated for the first communication task is higher than the second priority, and performing (1645) the first communication task using the third resource, based on identifying (1640) that the third priority designated for the first communication task is higher than the second priority.

In an embodiment, the first communication task may include at least one of a Bluetooth concurrency operation or a Wi-Fi coexistence operation.

In an embodiment, the Bluetooth concurrency operation may include at least one of a Bluetooth inquiry, a Bluetooth inquiry scan, Bluetooth paging, a Bluetooth page scan, a BLE scan, BLE advertising, maintaining Bluetooth connection, maintaining BLE connection, or channel scan.

In an embodiment, the first resource may include a first time period corresponding to a plurality of subevents allocated for the audio service of a time period corresponding to one event on the at least one audio communication link. The second resource may include a second time period corresponding to at least one first subevent ensured to be used for the audio service in the first time period. The third resource may include a third time period corresponding to at least one remaining second subevent except for the at least one first subevent of the first time period.

In an embodiment, the at least one first subevent may include at least one subevent for use in initial transmission of an audio data packet. At least one second subevent may include at least one subevent for use in retransmission of the audio data packet.

In an embodiment, the at least one first subevent may include at least one subevent 4108 and 4110 for use in initial transmission of an audio data packet. The at least one second subevent may include at least one of at least one subevent for use in retransmission of the audio data packet or at least one subevent for use in transmission of a future audio data packet.

In an embodiment, determining the first resource may include determining a number of subevents corresponding to the first resource of one event used for the at least one audio communication link. Determining the second resource and the third resource includes determining a number of first subevents corresponding to the second resource and a number of second subevents corresponding to the third resource according to a designated time ratio or a designated number of subevents.

In an embodiment, determining the second resource may include determining the first subevents corresponding to the second resource according to a designated time ratio or a designated number of subevents.

In an embodiment, the method may further comprise omitting or delaying an audio communication task having the second priority scheduled in the third resource, based on the third priority being higher than the second priority.

In an embodiment, providing the audio service may include performing an audio communication task having the first priority scheduled in the second resource through the second resource.

In an embodiment, the method may further comprise performing the first communication task using a fourth resource except for the second resource and the third resource, based on a third priority being lower than the second priority.

In an embodiment, the at least one audio communication link may include a first CIS link using a first CIS event and a second CIS link using a second CIS event, at least some subevents of the first CIS event may overlap at least some subevents of the second CIS event. The second resource may include a time period corresponding to the at least some subevents of the second CIS event overlapping the at least some subevents of the first CIS event. The third resource may include a time period corresponding to at least one of remaining events of the second CIS event overlapping the at least some subevents of the first CIS event or at least some subevents of the second CIS event not overlapping the first CIS event.

According to an embodiment, a method for operating an electronic device 101 may comprise performing a scan operation to search for a nearby Bluetooth device based on BLE. The method may comprise receiving an advertising packet from the first external electronic device through the BLE scan and creating (or establishing) a first LE communication link with a first external electronic device. The method may comprise receiving an advertising packet from the second external electronic device through the BLE scan and creating (or establishing) a second LE communication link with a second external electronic device. The method may comprise outputting a user interface related to the first external electronic device and/or the second external electronic device through a display based on information included in the received advertising packet(s).

The method may comprise determining to start an audio service through a CIS communication with the first external electronic device and the second external electronic device according to a user's intent or a designated policy and calculate a first resource available to a first CIS link with the first external electronic device and a second CIS link with the second external electronic device. The method may comprise dividing the first resource into at least a second resource and a third resource, set a first priority to the second resource and set a second priority having a lower priority value, to the third resource.

The method may comprise creating (or establishing) a first CIS link with the first external electronic device and creating (or establishing) a second CIS link with the second external electronic device. The method may comprise providing the audio service to the first external electronic device and the second external electronic device through the first CIS link and the second CIS link respectively. The method may comprise identifying that another task which should be performed in the same frequency band as CIS communication has occurred while providing the audio service.

The method may comprise comparing the priority of a third task with the priorities of the CIS tasks to be performed through the CIS links. The method may comprise performing tasks having higher priority. The method may comprise determining whether it is required to change the priority of the CIS task performed through the first CIS link and the second CIS link according to a designated rule or designated policy while providing the audio service. The method may comprise changing the value of the first priority and/or the second priority to a higher or lower value, when it is determined that changing priority is required.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play StoreTM), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

Since many features (except those of the independent claims) are optional only, the features of the preferred embodiments have been described in connection with "may". Nevertheless, said preferred embodiments have to understood to be disclosed as specific preferred combinations as shown in the drawings and therefore features shown in the drawings are to be understood as a real preferred combination for the present invention which however does not restrict the scope of the invention.

## Claims

1. An electronic device (101) comprising:

   a communication circuit (192); and
   at least one processor (120) operatively coupled with the communication circuit,
   wherein the at least one processor is configured to,
   determine (1605, 1620) a first resource (1708, 1804, 1812, 4202, 4302) available for an audio service in at least one audio communication link (506, 508),
   determine (1610, 1625) a second resource (1710, 1806, 1814, 4204, 4304) of a first priority and a third resource (1712, 1808, 1816, 4206, 4306) of a second priority lower than the first priority in the first resource, and
   provide (1615, 1630a) the audio service through the communication circuit to at least one external electronic device (202, 204) through the at least one audio communication link using at least one of the second resource or the third resource.

2. The electronic device of claim 1, wherein the at least one processor is configured to,

   detect (1635) that a first communication task using a frequency band corresponding to a frequency band of the at least one audio communication link is scheduled while providing the audio service,
   identify (1640) that a third priority designated for the first communication task is higher than the second priority, and
   perform (1645) the first communication task using the third resource, through the communication circuit, based on identifying (1640) that the third priority designated for the first communication task is higher than the second priority.

3. The electronic device of claim 2, wherein the first communication task includes at least one of a Bluetooth concurrency operation or a Wi-Fi coexistence operation, wherein the Bluetooth concurrency operation includes at least one of a Bluetooth inquiry, a Bluetooth inquiry scan, Bluetooth paging, a Bluetooth page scan, a BLE scan, BLE advertising, maintaining Bluetooth connection, maintaining BLE connection, or channel scan.

4. The electronic device of any one of claims 1 to 3, wherein the first resource includes a first time period corresponding to a plurality of subevents allocated for the audio service of a time period corresponding to one event on the at least one audio communication link,

   wherein the second resource includes a second time period corresponding to at least one first subevent ensured to be used for the audio service in the first time period (1708, 1804, 1812), and

wherein the third resource includes a third time period corresponding to at least one remaining second subevent except for the at least one first subevent of the first time period.

5. The electronic device of claim 4, wherein the at least one first subevent includes at least one subevent for use in initial transmission of an audio data packet, and the at least one second subevent includes at least one subevent for use in retransmission of the audio data packet.

6. The electronic device of claim 4, wherein the at least one first subevent includes at least one subevent (4108, 4110) for use in initial transmission of an audio data packet, and the at least one second subevent includes at least one of at least one subevent for use in retransmission of the audio data packet or at least one subevent for use in transmission of a future audio data packet.

7. The electronic device of any one of claims 1 to 6, wherein the at least one processor is configured to,

determine a number of subevents corresponding to the first resource of one event used for the at least one audio communication link, and

determine a number of first subevents corresponding to the second resource and a number of second subevents corresponding to the third resource according to a designated time ratio or a designated number of subevents.

8. The electronic device of claim 2, wherein the at least one processor is configured to omit or delay an audio communication task having the second priority scheduled in the third resource, based on the third priority being higher than the second priority.

9. The electronic device of claim 2, wherein the at least one processor is configured to perform the first communication task using a fourth resource except for the second resource and the third resource, based on a third priority being lower than the second priority.

10. The electronic device of any one of claims 1 to 4,

wherein the at least one audio communication link includes a first CIS link using a first CIS event and a second CIS link using a second CIS event, at least some subevents of the first CIS event overlapping at least some subevents of the second CIS event,

wherein the second resource includes a time period corresponding to the at least some subevents of the second CIS event overlapping the at least some subevents of the first CIS event, and

wherein the third resource includes a time period corresponding to at least one of remaining events of the second CIS event overlapping the at least some subevents of the first CIS event or at least some subevents of the second CIS event not overlapping the first CIS event.

11. A method for operating an electronic device (101), the method comprising:

determining (1605, 1620) a first resource (1708, 1804, 1812, 4202, 4302) available in at least one audio communication link,

determining (1610, 1625) a second resource (1710, 1806, 1814, 4204, 4304) of a first priority and a third resource (1712, 1808, 1816, 4206, 4306) of a second priority lower than the first priority in the first resource, and

providing (1615, 1630) the audio service to at least one external electronic device (202, 204) through the at least one audio communication link using at least one of the first resource or the second resource.

12. The method of claim 11, further comprising:

detecting (1635) that a first communication task using the same frequency band as the at least one audio communication link is scheduled while providing the audio service,

identifying (1640) that a third priority designated for the first communication task is higher than the second priority, and

performing (1645) the first communication task through the third resource, based on identifying (1640) that the third priority designated for the first communication task is higher than the second priority.

13. The method of claim 12, wherein the first communication task includes at least one of a Bluetooth concurrency operation or a Wi-Fi coexistence operation, and
wherein the Bluetooth concurrency operation includes at least one of a Bluetooth inquiry, a Bluetooth inquiry scan, Bluetooth paging, a Bluetooth page scan, a BLE scan, BLE advertising, maintaining Bluetooth connection, maintaining BLE connection, or channel scan.

14. The method of any one of claims 11 to 13, wherein the first resource includes a first time period corresponding to a plurality of subevents allocated for the audio service of a time period corresponding to one event on the at least one audio communication link,

wherein the second resource includes a second time period corresponding to at least one first subevent ensured to be used for the audio service in the first time period,
wherein the third resource includes a third time period corresponding to at least one remaining second subevent except for the at least one first subevent of the first time period,
wherein the at least one first subevent includes at least one subevent for use in initial transmission of an audio data packet, and the at least one second subevent includes at least one subevent for use in retransmission of the audio data packet, or
wherein the at least one first subevent includes at least one subevent (4108, 4110) for use in initial transmission of an audio data packet, and the at least one second subevent includes at least one of at least one subevent for use in retransmission of the audio data packet or at least one subevent for use in transmission of a future audio data packet.

15. The method of any one of claims 11 to 14, wherein determining the first resource includes determining a number of subevents corresponding to the first resource of one event used for the at least one audio communication link, and wherein determining the second resource and the third resource includes determining a number of first subevents corresponding to the second resource and a number of second subevents corresponding to the third resource according to a designated time ratio or a designated number of subevents.

FIG. 1

FIG. 2

FIG. 3

FIG. 4

FIG. 5

EP 4 287 649 A1

608

transmitWindowSize

| | 602 | | 604 | | 606 | Transmit Window | |
|---|---|---|---|---|---|---|---|

transmitWindowOffset

610

| Advertising packet | | CONNECT_ IND | | | | | C→P | | P→C | | C→P |
|---|---|---|---|---|---|---|---|---|---|---|---|

T_IFS

transmitWindowOffset ≤ t ≤

transmitWindowDelay

transmitWindowOffset + transmitWindowSize

T_IFS

612

Primary Adv. Channel

connInterval

600

Adv. event closed

Next data channel as per the channel selection algorithm with previous_event_channel = 0

FIG. 6

101
Electronic
device

202
External
electronic device

BLE connection — 700

LL_CIS_REQ — 710

LL_CIS_RSP — 712

LL_CIS_IND — 714

CIS NUll PDU — 716

CIS NUll PDU — 718

CIS NUll PDU — 720

CIS Data PDU — 722

# FIG. 7

EP 4 287 649 A1

800

| CtrData | | | |
|---|---|---|---|
| LSB | | | |
| CIG_ID (1 octet) | CIS_ID (1 octet) | PHY_M_To_S (1 octet) | PHY_S_To_M (1 octet) |

802　　　　804

| Max_SDU_M_To_S (12 bits) | RFU (3 bits) | Framed (1 bit) | Max_SDU_S_To_M (12 bits) | RFU (4 bits) |
|---|---|---|---|---|

| | | | |
|---|---|---|---|

| SDU_Interval_M_To_S (20 bits) | RFU (4 bits) | SDU_Interval_S_To_M (20 bits) | RFU (4 bits) |
|---|---|---|---|

806　　　　　808

| Max_PDU_M_To_S (2 octets) | Max_PDU_S_To_M (2 octets) | NSE (1 octet) | Sub_Interval (3 octets) |
|---|---|---|---|

810

| BN_M_To_S (4 bits) | BN_M_To_S (4 bits) | FT_M_To_S (1 octet) | FT_S_To_M (1 octet) | ISO_Interval (2 octets) |
|---|---|---|---|---|

| MSB | | |
|---|---|---|
| CIS_Offset_Min (3 octets) | CIS_Offset_Max (3 octets) | connEventCount (2 octets) |

# FIG. 8

48

FIG. 9

FIG. 10

FIG. 11

# FIG. 12

BN=1, FT=2, NSE=4

101 Electronic device

202 External electronic device

1202 ISO_Interval

1204

P0 flush point — P1 flush point — P1

P2 flush point — P3 flush point — P3

P4 flush point — P5 flush point — P5

P0, P1, P1, P1
P2, P2, P3, P3
P4, P5, P5, P5

ACK — Missing ACKS — ACK

NACK NACK NACK NACK

ACK — Missing ACKS — NACK

FIG. 13

FIG. 14

Interleaved

CIG event x 1404

CIS1 event x 1406

SE_Length of CIS1

CIS2 event x 1408

CIS1 Sub_Interval

SE_Length of CIS2

CIS2 Sub_Interval

ISO_Interval

CIS2 Anchor point

ISO_Interval 1402

CIS1 Anchor point
CIG Anchor point

1400

CIG event x+1

CIS1 event x+1

CIS2 event x+1

CIS1 Sub_Interval

CIS2 Sub_Interval

CIS2 Anchor point

CIS1 Anchor point
CIG Anchor point

CIG
reference
point

CIG
synchronization
point

CIG_Sync_Delay

CIS_Sync_Delay for earliest CIS

CIS_Sync_Delay for middle CIS

CIS_Sync_Delay for latest CIS

| CIS event for earliest CIS | CIS event for middle CIS | CIS event for latest CIS |
| --- | --- | --- |

1504

1506

1508

CIG event

1502

FIG. 15

```
              ┌─────────┐
              │  Start  │
              └────┬────┘
                   │
                   ▼
  ┌───────────────────────────────┐
  │     Calculate first resource  │ ─── 1605
  │      available for CIS link   │
  └───────────────┬───────────────┘
                  │
                  ▼
  ┌───────────────────────────────┐
  │  Determine second resource of first │ ─── 1610
  │   priority and third resource of    │
  │   second priority in first resource │
  └───────────────┬───────────────┘
                  │
                  ▼
  ┌───────────────────────────────┐
  │  Allocate second resource to first CIS task │ ─── 1615
  │  having first priority and third resource to │
  │  second CIS task having second priority      │
  └───────────────┬───────────────┘
                  │
                  ▼
  ┌───────────────────────────────┐
  │   Provide audio service using second │ ─── 1620
  │     resource and/or third resource   │
  └───────────────┬───────────────┘
                  │
                  ▼
              ┌─────────┐
              │   End   │
              └─────────┘
```

# FIG. 16A

Start

Calculate first resource
available for CIS link — 1605a

Determine second resource of first
priority and third resource of
second priority in first resource — 1610a

Allocate second resource to first CIS task
having first priority and third resource to
second CIS task having second priority — 1615a

Provide audio service using second
resource and/or third resource — 1620a

1625
Third task of same
frequency band required? — No

Yes

1630
Higher priority than second priority? — No

Yes 1635
Omit or delay second CIS task and perform
communication of third task using third resource

1640
Perform communication of third
task through fourth resource

FIG. 16B

FIG. 17

FIG. 18

Start

Create first LE link with first external electronic device — 1905

Create second LE link with second external electronic device — 1910

Calculate first resource available in each CIS link — 1915

Divide into second resource of first priority and third resource of second priority — 1920

Create first CIS link and second CIS link — 1925

Provide audio service — 1930

Other task performed? — 1935

No

Yes

Compare priority of other task with CIS links — 1940

Perform task with higher priority — 1945

Changing priority of CIS link required? — 1950

No

Yes

Change priority of CIS link — 1955

FIG. 19

101

< Bluetooth

⎯2000

My Galaxy Buds

## FIG. 20A

101

< Bluetooth

⎯2005

My Galaxy Buds

Dismiss          Connect

## FIG. 20B

101

Media (Galaxy Buds (5656))

My Galaxy Buds

Left
51%

Right
51%

# FIG. 20C

2010

FIG. 21

**204**

Second external electronic device

**202**

First external electronic device

**101**

Electronic device

2206

2208

Connection Interval

2202

Connection Interval

2204

FIG. 22

FIG. 23

EP 4 287 649 A1

LE audio essential transmission duration

Tx Rx Tx Rx Tx Rx Tx Rx Tx Rx Tx Rx

220 µs | 220 µs | RT | RT | RT | RT | 220 µs | 220 µs | RT | RT | RT | RT

WiFi COEX & BT Concurrency

740µs | 740µs

2410 | 2412 | 2414 | 2416 | 2418

CH1 2.22ms = 22.2% | CH2 2.22ms = 22.2%

2406 | 2408

44.4%

2404

10ms

2402

FIG. 24

FIG. 25

FIG. 26

FIG. 27

FIG. 28

FIG. 29

EP 4 287 649 A1

FIG. 30

FIG. 31

EP 4 287 649 A1

FIG. 32

FIG. 33

FIG. 34

FIG. 35

BLE CI Back off Priority 16 Sche'd

Tx    Tx                                    Tx    Rx

220 μs    RT              RT         220 μs   220 μs

High              High

3604a    3608a    3604b    3608b

3606

ISO_Interval (10ms)

3602

FIG. 36

3700

Source
electronic device

3705

Sink electronic
device

Create BIG  ~3712

Scan  ~3714

AUX_SYNC_IND (BIGInfo)  ~3716

Start BIS  ~3718

Synchronize with BIG  ~3720

BIS DATA  ~3722

# FIG. 37

3800

| BIG Info | | | | |
|---|---|---|---|---|
| BIG_Offset (14 bits) | BIG_Offset_Units (1 bit) | ISO_Interval (12 bits) | Num_BIS (5 bits) | NSE (5 bits) |

| BIG Info (continued) | | | | |
|---|---|---|---|---|
| BN (3 bits) | Sub_Interval (20 bits) | PTO (4 bits) | BIS_Spacing (20 bits) | IRC (4 bits) |

| BIG Info (continued) | | | | |
|---|---|---|---|---|
| Max_PDU (8 bits) | RFU (8 bits) | Seed Access Address (32 bits) | SDU_Interval (20 bits) | Max_SDU (12 bits) |

| BIG Info (continued) | | | | |
|---|---|---|---|---|
| BaseCRCInit (16 bits) | ChM (37 bits) | PHY (3 bits) | bisPayloadCount (39 bits) | Framing (1 bit) |

| BIG Info (continued) MSB | |
|---|---|
| GIV (8 octets) | GSKD (16 octets) |

FIG. 38

3910

AUX_SYNC_IND with BIGInfo

Time indicated by
BIG_Offset

3905

BIG event x

BIG_Offset

3920

BIG event x+1

| BIS1 | BIS2 |

| BIS1 | BIS2 |

BIS_Spacing

Offset Unit
30 μs or 300 μs

BIG Anchor Point

3915

# FIG. 39

4005

BIG event x

BIS event x

Control
Subevent

Sub_Interval | Sub_Interval | Sub_Interval

| TX | TX | TX | TX |

T_MSS

ISO_Interval

4010

BIG Anchor Point

# FIG. 40

FIG. 41

High Priority
4204
4204a

Low Priority
4206
4206a

Event counter k

Event counter k+1

BIS Audio 11.730ms (94.29%)
4202

FIG. 42

FIG. 43

## INTERNATIONAL SEARCH REPORT

| International application No. |
| --- |
| **PCT/KR2023/005246** |

**A. CLASSIFICATION OF SUBJECT MATTER**

**H04R 3/04**(2006.01)i; **H04R 5/04**(2006.01)i; **H04R 1/10**(2006.01)i; **H04W 4/80**(2018.01)i

According to International Patent Classification (IPC) or to both national classification and IPC

**B. FIELDS SEARCHED**

Minimum documentation searched (classification system followed by classification symbols)

H04R 3/04(2006.01); G06F 12/08(2006.01); G08C 17/02(2006.01); H04N 21/434(2011.01); H04N 21/8549(2011.01); H04R 1/02(2006.01); H04R 25/00(2006.01); H04W 28/02(2009.01); H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 자원(resource), 우선순위(priority), 음향(audio), 통신(communication), 전자장치 (electronic device)

**C. DOCUMENTS CONSIDERED TO BE RELEVANT**

| Category* | Citation of document, with indication, where appropriate, of the relevant passages | Relevant to claim No. |
| --- | --- | --- |
| X | KR 10-2016-0030710 A (SAMSUNG ELECTRONICS CO., LTD.) 21 March 2016 (2016-03-21) See paragraphs [0045]-[0049], claims 17-22 and figures 1-2. | 1,7,11,15 |
| A | | 2-6,8-10,12-14 |
| A | KR 10-2273109 B1 (SAMSUNG ELECTRONICS CO., LTD.) 06 July 2021 (2021-07-06) See entire document. | 1-15 |
| A | KR 10-2019-0118906 A (SAMSUNG ELECTRONICS CO., LTD.) 21 October 2019 (2019-10-21) See entire document. | 1-15 |
| A | US 2013-0259237 A1 (OESCH, Yves et al.) 03 October 2013 (2013-10-03) See entire document. | 1-15 |
| A | US 2014-0285313 A1 (LUNA, Michael Edward Smith et al.) 25 September 2014 (2014-09-25) See entire document. | 1-15 |

☐ Further documents are listed in the continuation of Box C.    ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **20 July 2023** | **24 July 2023** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT
Information on patent family members

International application No.

**PCT/KR2023/005246**

| Patent document cited in search report | | | Publication date (day/month/year) | Patent family member(s) | | | Publication date (day/month/year) |
|---|---|---|---|---|---|---|---|
| KR | 10-2016-0030710 | A | 21 March 2016 | CN | 107079331 | A | 18 August 2017 |
| | | | | CN | 107079331 | B | 09 March 2021 |
| | | | | EP | 3193527 | A1 | 19 July 2017 |
| | | | | EP | 3193527 | A4 | 18 April 2018 |
| | | | | EP | 3193527 | B1 | 31 March 2021 |
| | | | | KR | 10-2284050 | B1 | 30 July 2021 |
| | | | | US | 10785675 | B2 | 22 September 2020 |
| | | | | US | 2018-0220325 | A1 | 02 August 2018 |
| | | | | WO | 2016-039577 | A1 | 17 March 2016 |
| KR | 10-2273109 | B1 | 06 July 2021 | KR | 10-2015-0010563 | A | 28 January 2015 |
| | | | | US | 2015-0026415 | A1 | 22 January 2015 |
| | | | | US | 9588897 | B2 | 07 March 2017 |
| KR | 10-2019-0118906 | A | 21 October 2019 | US | 2021-0044875 | A1 | 11 February 2021 |
| | | | | WO | 2019-198913 | A1 | 17 October 2019 |
| US | 2013-0259237 | A1 | 03 October 2013 | CN | 103229518 | A | 31 July 2013 |
| | | | | CN | 103229518 | B | 06 January 2016 |
| | | | | DK | 2643983 | T3 | 26 January 2015 |
| | | | | EP | 2643983 | A2 | 02 October 2013 |
| | | | | EP | 2643983 | B1 | 07 January 2015 |
| | | | | US | 9215535 | B2 | 15 December 2015 |
| | | | | WO | 2011-015675 | A2 | 10 February 2011 |
| | | | | WO | 2011-015675 | A3 | 13 October 2011 |
| US | 2014-0285313 | A1 | 25 September 2014 | AU | 2014-232320 | A1 | 12 November 2015 |
| | | | | AU | 2014-232324 | A1 | 05 November 2015 |
| | | | | CA | 2906939 | A1 | 18 September 2014 |
| | | | | CA | 2907370 | A1 | 18 September 2014 |
| | | | | EP | 2974163 | A2 | 20 January 2016 |
| | | | | EP | 2974505 | A2 | 20 January 2016 |
| | | | | RU | 2015-144122 | A | 24 April 2017 |
| | | | | RU | 2015-144127 | A | 24 April 2017 |
| | | | | US | 2014-0270306 | A1 | 18 September 2014 |
| | | | | US | 2014-0286496 | A1 | 25 September 2014 |
| | | | | US | 9349282 | B2 | 24 May 2016 |
| | | | | WO | 2014-145998 | A2 | 18 September 2014 |
| | | | | WO | 2014-145998 | A3 | 24 December 2014 |
| | | | | WO | 2014-146002 | A2 | 18 September 2014 |
| | | | | WO | 2014-146002 | A3 | 06 November 2014 |

Form PCT/ISA/210 (patent family annex) (July 2022)